# EUROPEAN PATENT APPLICATION

(11) **EP 4 530 864 A1**
(43) Date of publication of application: **02.04.2025**
(21) Application number: 24192890.2
(22) Date of filing: 05.08.2024
(51) Int. Cl.: G06F 12/1027, G06F 12/126

(54) **MICROARCHITECTURE AND INSTRUCTION SET ARCHITECTURE EXTENSIONS FOR EFFICIENT ISO-AREA VICTIM BUFFERING THROUGH TRANSLATION LOOKASIDE BUFFER PARTITIONING**

(30) Priority: 26.09.2023 US 202318475104
(71) Applicant: INTEL Corporation, Santa Clara, CA 95054 (US)
(72) Inventor: Prabhu, Ramya, 560085 Bengaluru, Karnataka (IN); Rakshit, Joydeep, 560066 Bengaluru, Karnataka, (IN); Nori, Anant Vithal, I 560103. Bengaluru, Karnataka (IN); Shwartsman, Stanislav, 35849 Haifa (IL)
(74) Representative: Samson & Partner Patentanwälte mbB

(57) **Abstract**

Techniques for victim buffering through translation lookaside buffer (TLB) partitioning are described. In certain examples, a system includes a memory; an execution circuitry to generate a memory access request for a virtual memory address of the memory; a first level translation lookaside buffer to store virtual address to physical address mappings; a victim translation lookaside buffer to store a virtual address to physical address mapping evicted from the first level translation lookaside buffer; a second level translation lookaside buffer; and a cache coherency circuitry to search the first level translation lookaside buffer and the victim translation lookaside buffer for a corresponding physical address mapped to the virtual memory address for the memory access request, and for a miss in the first level translation lookaside buffer and the victim translation lookaside buffer, search the second level translation lookaside buffer for the corresponding physical address mapped to the virtual memory address for the memory access request, and for a hit in the victim translation lookaside buffer, provide the corresponding physical address mapped to the virtual memory address for the memory access request.

## Description

### BACKGROUND

A processor, or set of processors, executes instructions from an instruction set, e.g., the instruction set architecture (ISA). The instruction set is the part of the computer architecture related to programming, and generally includes the native data types, instructions, register architecture, addressing modes, memory architecture, interrupt and exception handling, and external input and output (I/O). It should be noted that the term instruction herein may refer to a macro-instruction, e.g., an instruction that is provided to the processor for execution, or to a microinstruction, e.g., an instruction that results from a processor's decoder decoding macroinstructions.

### BRIEF DESCRIPTION OF DRAWINGS

Various examples in accordance with the present disclosure will be described with reference to the drawings, in which:
FIG. 1 illustrates a block diagram of a computer system including a processor, with a set of caches and translation lookaside buffers (TLBs) including victim TLBs, coupled to a memory according to examples of the disclosure.
FIG. 2 illustrates a TLB having entries that includes a virtual address to physical address mapping and metadata including a victim TLB hint bit and one or more permission bits according to examples of the disclosure.
FIG. 3 illustrates an example a second level (L2) TLB (STLB), first level instruction TLB (L1I-TLB), and first level data TLB (L1D-TLB) including an L1D victim TLB according to examples of the disclosure.
FIG. 4 illustrates an example of operations for a method of performing a look-up in a data TLB (DTLB) according to examples of the disclosure.
FIG. 5 illustrates an example of operations for a method of performing a fill in a victim TLB according to examples of the disclosure.
FIG. 6 illustrates another example of operations for a method of performing a fill in a victim TLB utilizing a "hot" set indication (e.g., victim TLB hint bit) according to examples of the disclosure.
FIG. 7 illustrates an example of operations for a method of performing a look-up in a first level TLB and a victim TLB according to examples of the disclosure.
FIG. 8 illustrates examples of computing hardware to process a victim TLB hint instruction.
FIG. 9 illustrates an example method performed by a processor to process a victim TLB hint instruction.
FIG. 10 illustrates an example method to process a victim TLB hint instruction using emulation or binary translation.
FIG. 11 illustrates an example computing system.
FIG. 12 illustrates a block diagram of an example processor and/or System on a Chip (SoC) that may have one or more cores and an integrated memory controller.
FIG. 13 is a block diagram illustrating a computing system 1300 configured to implement one or more aspects of the examples described herein.
FIG. 14A illustrates examples of a parallel processor.
FIG. 14B illustrates examples of a block diagram of a partition unit.
FIG. 14C illustrates examples of a block diagram of a processing cluster within a parallel processing unit.
FIG. 14D illustrates examples of a graphics multiprocessor in which the graphics multiprocessor couples with the pipeline manager of the processing cluster.
FIGS. 15A-15C illustrate additional graphics multiprocessors, according to examples.
FIG. 16 shows a parallel compute system 1600, according to some examples.
FIGS. 17A-17B illustrate a hybrid logical/physical view of a disaggregated parallel processor, according to examples described herein.
FIG. 18A is a block diagram illustrating both an example in-order pipeline and an example register renaming, out-of-order issue/execution pipeline according to examples.
FIG. 18B is a block diagram illustrating both an example in-order architecture core and an example register renaming, out-of-order issue/execution architecture core to be included in a processor according to examples.
FIG. 19 illustrates examples of execution unit(s) circuitry, such as execution unit(s) circuitry.
FIG. 20 is a block diagram of a register architecture according to some examples.
FIG. 21 illustrates examples of an instruction format.
FIG. 22 illustrates examples of an addressing information field.
FIG. 23 illustrates examples of a first prefix.
FIGS. 24A-24D illustrate examples of how the R, X, and B fields of the first prefix are used.
FIGS. 25A-25B illustrate examples of a second prefix.
FIG. 26 illustrates examples of a third prefix.
FIGS. 27A-27B illustrate thread execution logic including an array of processing elements employed in a graphics processor core according to examples described herein.
FIG. 28 illustrates an additional execution unit, according to an example.
FIG. 29 is a block diagram illustrating a graphics processor instruction formats 2900 according to some examples.
FIG. 30 is a block diagram of another example of a graphics processor.
FIG. 31A is a block diagram illustrating a graphics processor command format according to some examples.
FIG. 31B is a block diagram illustrating a graphics processor command sequence according to an example.
FIG. 32 is a block diagram illustrating the use of a software instruction converter to convert binary instructions in a source ISA to binary instructions in a target ISA according to examples.
FIG. 33 is a block diagram illustrating an IP core development system 3300 that may be used to manufacture an integrated circuit to perform operations according to some examples.

### DETAILED DESCRIPTION

The present disclosure relates to methods, apparatus, systems, and non-transitory computer-readable storage media for victim buffering through translation lookaside buffer (TLB) partitioning. Certain examples herein are directed to a victim TLB to store a virtual address to physical address mapping evicted from a (e.g., first level) translation lookaside buffer.

A processor may operate on data stored in the memory of a computing system, e.g., in performing arithmetic or logic functions. An instruction may include a request to read data (e.g., load) and/or a request to write data (e.g., a store). In certain examples, the data is one or more cache lines of data. In one example, a cache line may generally refer to a section (e.g., a sector) of memory (e.g., a cache) that is managed as a single unit for coherence purposes. Data may be stored in a processor's cache (e.g., of any level, such as, but not limited to, L3, L2, L1, etc.), system memory (e.g., separate from a processor), or combinations thereof. In certain examples, memory is shared by multiple cores of a processor or local (e.g., not shared) to each core of a processor. A cache (e.g., cache memory) may generally refer to a memory buffer inserted between one or more processor cores and a bus/interconnect therebetween, for example, the cache to store (e.g., hold) currently active copies of data (e.g., cache lines of data from system (e.g., main) memory). Cache may be local to each processor. Additionally or alternatively, a (e.g., next level of) cache may be shared by multiple processors, e.g., separate from each processor. Memory may be separate from any cache memory, e.g., system memory that is off-die relative to a processor core. In certain examples, a cache line is a 64 byte sized section of memory, e.g., 64 byte granularity. In certain examples, a single cache line (e.g., 64 Bytes) is used to store multiple data elements, e.g., 64 bit granularity (e.g., such that each cache line includes eight data elements).

Cache (e.g., line) coherency may generally refer to each cache (e.g., cache memory) and/or other (e.g., system) memory in the coherence domain observing all modifications of that same cache data (e.g., a cache line, and more particularly, each instance of that cache line that is to contain the same data). For example, a modification may be said to be observed by a cache when any subsequent read would return the newly (e.g., current) written value. In certain examples, a cache controller (e.g., cache coherency controller) is included in a computing system to maintain cache coherency. In one example, the cache controller is a cache controller circuit. Cache coherency may be maintained according to a cache coherence protocol, e.g., the four state modified (M), exclusive (E), shared (S), and invalid (I) (MESI) protocol or the five state modified (M), exclusive (E), shared (S), invalid (I), and forward (F) (MESIF) protocol. Cache controller(s) (e.g., a cache coherency circuit) may provide, for multiple copies of a data item (e.g., stored in any memory), an update to other copies of the data item when one copy of that data item is changed, e.g., to ensure the data values of shared items (e.g., operands) are propagated throughout the computing system in a timely fashion.

In certain examples, caches are a vital component of computing architectures as they bridge the performance gap between the processor (e.g., central processing unit (CPU)) and memory.

In certain examples, a translation lookaside buffer (TLB) is a hardware cache that stores the most recent virtual addresses used by programs and their corresponding physical memory addresses. In certain examples, a processor includes multiple levels of TLBs, e.g., with a TLB for each corresponding level of multiple levels of caches. In certain examples, a processor includes a first level of cache and a second level of cache, and a corresponding first level of TLB (e.g., separated into a data TLB (DTLB) for data and an instruction TLB (ITLB) for instructions) and a corresponding second level (e.g., referred to as shared-TLB (STLB) where it stores translations for both data and instructions.

In certain examples, a cache and/or TLB is set-associative, e.g., with N number of entries therein equal to the number of sets ("s") multiplied by the number of ways ("w") 206 (e.g., the number of cache lines in each set), for example, where if s=8 and w=6, then N=48.

In certain examples, the DTLB is a set associative cache, e.g., where for an addresstranslation, the corresponding DTLB set is determined using a set indexer. In certain examples, the set indexer uses a hash function to calculate the set for a given virtual address, e.g., for a virtual page number (VPN). For example, where a hash performed on a virtual address generates a resulting hashed value, and the index value is based on that hashed value (e.g., on the last one or more bits of that hashed value).

In certain examples, a performant indexer requires a hash function that has a simple compute and that maps all inputs as evenly as possible across the sets. A technical problem is that when a hash function is unable to distribute its inputs evenly, it results in some sets being overused and some being used sparsely. This is referred to as the hot set problem. In certain examples, translations hashed to the overused hot sets end up being replaced very frequently, thus increasing costly TLB misses on the critical path and degrading performance.

The victim TLB disclosed herein is a technical solution to alleviate the hot set problem in a TLB (e.g., DTLB). In certain examples, the victim TLB reduces the number of ways allocated to each DTLB set and repurposes those to architect a victim TLB for storing the translations that get evicted from DTLB. In certain examples, during a DTLB access, both the victim TLB (e.g., victim array) and the DTLB (e.g., main array) are checked simultaneously. In certain examples, if a virtual address hits in either, the translation (e.g., the physical address corresponding to that virtual address) is returned, and it is considered a DTLB hit, and else the execution proceeds to check another level of TLB (e.g., STLB). In certain examples, utilizing a victim TLB increases performance in a wide array of sensitive client and server workloads, e.g., with iso-area DTLB and minimal circuit area increase. In certain examples, the victim TLB achieves a performance improvement by retaining translations which see reuse but get evicted from the hot sets in the DTLB. In certain examples, the victim TLB decreases the number of TLB misses that are to be serviced by a STLB (or other higher level TLB). In certain examples, the victim TLB safeguard translation(s) that are evicted because too many translations map to the same set.

In certain examples, a processor (e.g., central processing unit (CPU)) includes one or more performance counters to indicate TLB performance, e.g., DTLB_LOAD_MISSES.STLB_HIT that tracks the number of misses in a DTLB that hit in the STLB and/or MEM UOPS RETIRED STLB MISS LOADS PS that tracks the number of STLB misses. In certain examples, use of a victim TLB lowers these values, e.g., because the victim TLB decreases the number of DTLB misses.

In certain examples, the size of the DTLB cache size is increased (e.g., by increasing the number of ways in each set) in an attempt to alleviate the hot set problem, however, this may be undesirable where increasing the size of the DTLB requires additional area on the die and/or looking up sets with larger number of ways has higher latency, thereby increasing lookup latency. A victim TLB and DTLB that is iso-area to a DTLB without a victim TLB (e.g., iso-area to a DTLB with 128 entries, divided over 8 ways and 16 sets) allows for the alleviation of the hot set problem without requiring additional area on the die and/or looking up sets with a larger number of ways.

In certain examples, the hash function is changed to one that distributes the virtual addresses (e.g., VPNs) more evenly in an attempt to alleviate the hot set problem, however, finding a computationally simple hash function is a challenging task and/or there is no guarantee that the proposed hash function would remain effective when the input (e.g., VPNs) changes in the future. A victim TLB and DTLB that alleviates the hot set problem in a TLB (e.g., DTLB) also alleviates (e.g., repeatedly) changing a hash function.

In certain examples, a victim TLB is implemented at the DTLB level, e.g., by reducing a number of ways (for example, 1-2 ways) from the DTLB and creating a set-associative (for example, 4-8 ways) victim TLB from the chip area previously used for those ways, e.g., making the combined setup iso-area with that of a single DTLB. In certain examples, a victim TLB has a lower number of sets than the DTLB, so entries in consecutive sets in the DTLB map to the same set in the victim TLB. However, certain hot sets in a DTLB are generally not consecutive, and therefore, hot set evictions from the DTLB are unlikely to create hot sets in the victim TLB and hence preserves the evicted entries for a longer duration.

In certain examples, a hardware (H/W) approach to construct an iso-area victim TLB can have possible negative outlier workloads due to reduced DTLB size and associativity. To address such workloads, certain examples herein include software (S/W) support through instruction set architecture (ISA) extensions to identify potential pages for the victim TLB. In certain examples, the operating system (e.g., kernel) is adapted to predict if a set is experiencing the hot set problem. In certain examples, the kernel, aware of the set indexer, tracks the frequency of all set number's occurrences. In certain examples, from this metadata, the kernel predicts which sets are experiencing the hot set problem, e.g., and a bit (e.g., victim TLB hint bit) is added to each translation in the DTLB indicating whether it should (or should not) be placed in the victim TLB on eviction from the DTLB. In certain examples, the ISA extensions use an additional bit for a (e.g., each) DTLB translation, e.g., where the bit indicates if the set is a hot set. In certain examples, one or more instructions herein support the victim TLB (e.g., allow for the setting and/or clearing of a victim TLB hint bit) from the OS kernel abstraction level. In certain examples, the victim TLB adds software support (e.g., ISA extensions) to identify pages thrashing the DTLB, which are prime candidates for use of the victim TLB. While this S/W proposal is to address potential negative outlier candidates for the victim TLB, it can be used for identifying thrashing candidates for other caches too. In certain examples, for victim TLB, the OS/kernel send hints during runtime with special instructions, e.g., having a mnemonic of VICTIMTAG and including an operand of the virtual address (e.g., VPN) that, when executed, marks the DTLB set with the virtual address (e.g., VPN) as a potential candidate for insertion in the victim buffer for the DTLB. In certain examples, the tagging is based on the virtual address (e.g., VPN), so the tagging is to wait for the address-generation. In certain examples, the victim TLB caches only those TLB entries which are "hinted" to belong to a hot set by the OS. In certain examples, a processor enables an OS kernel to track the set numbers and then uses it to set an extra bit in the DTLB to indicate a hot set.

In certain examples, the victim TLB's performance benefit is obtained with minimal additional area costs, e.g., the area that is freed by reducing the DTLB ways contribute towards the area used to construct the victim TLB.

In certain examples, a victim TLB is implemented as a separate structure from the main DTLB.

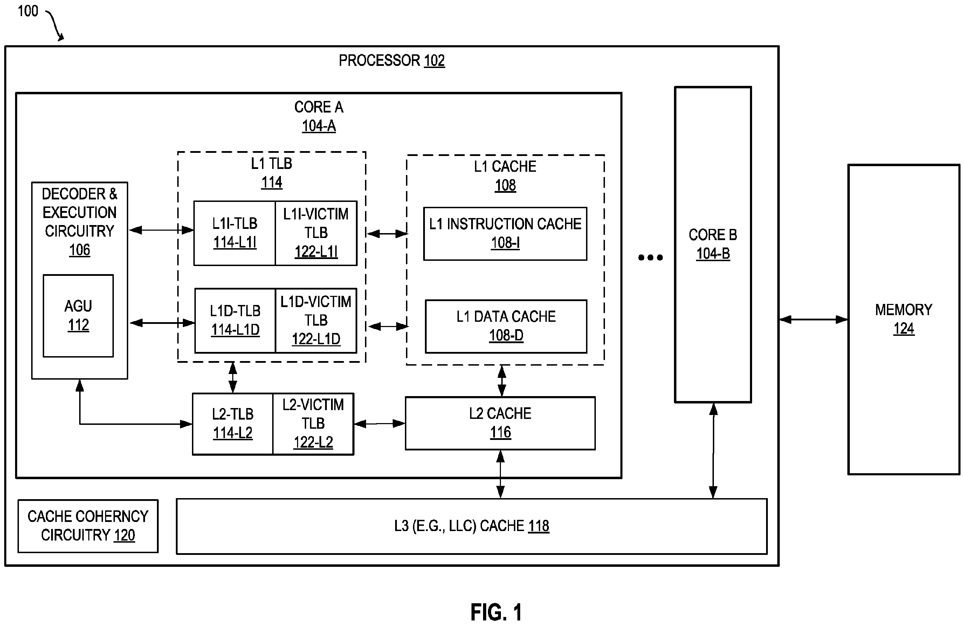

FIG. 1 illustrates a block diagram of a computer system 100 including a processor 102, with a set of caches (level one (L1) cache 108, level two (L2) cache 116, and level three (L3) cache 118) and translation lookaside buffers (TLBs) including victim TLBs, coupled to a memory according to examples of the disclosure. In certain examples, system 100 (e.g., processor 102) includes a cache coherency circuitry 120 to maintain cache coherency in L1 108, L2 (e.g., MI,C) 116, and/or L3 118 (e.g., last level cache (LLC), e.g., the last cache searched before a data item is fetched from memory 124) caches, e.g., according to a cache coherence protocol (such as, but not limited to, the MESIprotocol or the MESIF protocol discussed herein). In certain examples, cache coherency circuit 120 (or other memory circuitry) is further to cause TLB accesses, fills, and/or evictions.

FIG. 1 illustrates an embodiment of multiple processor cores (core A 104-A and core B 104-B) and multiple levels of caches (L1, L2, and L3), e.g., in a cache coherency hierarchy. Although two cores are depicted, a single or more than two cores may be utilized. Although multiple levels of cache are depicted, a single, or any number of caches may be utilized. Cache(s) may be organized in any fashion, for example, as a physically or logically centralized or distributed cache. Core B 104-B may include an instance of one or more of the components shown for core A 104-A in FIG. 1, for example, core B 104-B may include its own victim TLB(s).

In certain examples, each core (e.g., core A 104-A and core B 104-B) includes components to execute instructions. In certain examples, core A 104-A includes decoder circuitry and execution circuitry 106, e.g., to decode an instruction and execute the decoded instruction, respectively. In certain examples, core A 104-A includes an address generation unit (AGU) 112 (e.g., as part of execution circuitry), for example, to generate a virtual address for a memory access request, e.g., to allow core A 104-A to access the system memory. In certain examples, the AGU takes data values (e.g. register value and/or addresses mentioned in an instruction) as an input and outputs the (e.g., virtual) addresses for that. In certain examples, execution circuitry (e.g., execution unit) performs arithmetic operations, such as addition, subtraction, modulo operations, or bit shifts, for example, utilizing an adder, multiplier, shifter, rotator, etc. thereof.

In certain examples, processor 102 stores data and instructions in (e.g., system) memory 124. In certain examples, access to those data and/or instructions in memory 124 is at a slower access and/or cycle time than the core accessing cache (e.g. cache on the processor 102).

In certain examples, core A 104-A includes one or more caches (e.g., level one (L1) cache 108, level two (L2) cache 116, and level three (L3) cache 118) to store data and/or instructions (e.g., to store the information (e.g., cache line) itself instead of retrieving the information from the memory 124). In certain examples, level 1 instruction cache (L1I) 108-I is included to store instructions (e.g., a corresponding instruction mapped to a virtual address) and/or a level 1 data cache (L1D) 108-D is included to store data (e.g., corresponding data mapped to a virtual address). In certain examples, a second level (L2) cache 116 includes data and/or instructions, e.g., that are evicted from the L1 cache(s) from core A 104-A. In certain examples, a third level (L3) cache 118 includes data and/or instructions, e.g., that are evicted from the L2 cache of core A 104-A and/or the L2 cache of core B 104-B. In certain examples, if data or instruction is not found (e.g., is not a "hit") in a cache, then the cache coherency circuit 120 (or other memory circuitry) is to retrieve that data or instruction from memory 124 (e.g., and then store (e.g., "cache") that data or instruction into one or more levels of the cache).

In certain examples, cache coherency circuit 120 is included to maintain cache coherency in L1 108, L2 116, and/or L3 118 caches, e.g., according to a cache coherence protocol (such as, but not limited to, the MESI protocol or the MESIF protocol discussed herein).

In certain examples, a system 100 includes one or more corresponding translation lookaside buffers (TLBs) for the cache(s), e.g., where the translation lookaside buffer (TLB) converts a virtual address to a physical address (e.g., of the system memory 124). In certain examples, a physical address is used to access a cache. In certain examples, a TLB is to store a data structure that includes (e.g., recently used) virtual-to-physical memory address translations, e.g., such that the translation does not have to be performed on each virtual address present to obtain the physical memory address. In certain examples, if the virtual address entry is not in the TLB, a processor (e.g., cache coherence circuitry 120) is to perform a page walk to determine the virtual-to-physical memory address translation (e.g., and then store that translation into one or more levels of the TLB).

In certain examples, a first level TLB 114 is included. In certain examples, a first level (L1) instruction TLB 114-L1I is included to store a virtual address to physical address translation for an instruction, e.g., for data that may be stored in L1I cache 108-I. In certain examples, a first level (L1) data TLB 114-L1D is included to store a virtual address to physical address translation for data, e.g., for data that may be stored in L1D cache 108-D. In certain examples, a second level (L2) data and instruction TLB (e.g., shared TLB (STLB)) 114-L2 is included to store a virtual address to physical address translation for data and/or instructions, e.g., for data and/or instructions that may be stored in L2 cache 116.

In certain examples, a victim TLB is included to store a TLB entry that has been evicted from another TLB (e.g., a TLB at the same level). In certain examples, L1I-victim TLB 122-L1I is included to store a TLB entry that has been evicted from L1I-TLB 114-L1I, e.g., but not causing that TLB entry to be evicted into a next (e.g., second) level of TLB. In certain examples, L1D-victim TLB 122-L1D is included to store a TLB entry that has been evicted from L1D-TLB 114-L1D, e.g., but not causing that TLB entry to be evicted into a next (e.g., second) level of TLB. In certain examples, L2-victim TLB 122-L2 is included to store a TLB entry that has been evicted from L2-TLB 114-L2, e.g., but not causing that TLB entry to be evicted into any next (e.g., third) level of TLB.

In certain examples, the victim TLB for a "main" (e.g., non-victim) TLB reduces the number of ways allocated to each TLB set and repurposes those to architect the victim TLB for storing the translations that get evicted from the main TLB. In certain examples, during a TLB access, both the victim TLB (e.g., victim array) and the main TLB (e.g., main array) are checked simultaneously. In certain examples, if a virtual address hits in either, the translation (e.g., the physical address corresponding to that virtual address) is returned, and it is considered a TLB hit, and else the execution proceeds to (i) check another level of TLB and/or (ii) perform a page walk.

In certain examples, not every evicted TLB entry is to be stored into a victim TLB. In certain examples, the system 100 (e.g., cache coherency circuity 120) is to determine which victim (e.g., evicted) TLB entry/entries are to be stored in a victim TLB. In certain examples, the TLB entry itself is marked with a bit (e.g., victim TLB hint bit) indicating whether it should (or should not) be placed in the victim TLB on eviction from the main TLB. In certain examples, the system 100 (or an operating system (OS) executing on the system) provides the victim TLB hint bit, e.g., the system (or OS) causes the setting of the victim TLB hint bit in response to determining that TLB entry (e.g., translation) is part of an (e.g., overused) hot set, for example, part of a set (e.g., a TLB entry in that set) that end up being replaced more frequently than desired.

In certain examples, a victim TLB reduces the number of main TLB ways allocated to each set and realigns those ways to architect a victim TLB to store the translations that get evicted. Although certain examples herein discuss specific sizes, etc., it should be understood that a victim TLB can be designed according to the use-case.

### Eviction

In certain examples, on an eviction of a TLB entry (e.g., translation), the TLB entry (e.g., translation) is filled into the victim TLB. In certain examples, the set for the evicted line is determined using a separate set indexer (e.g., hashing function) belonging to the victim TLB (e.g., instead of the different set indexer (e.g., hashing function) for the main TLB). In certain examples, a subset of (e.g., the last four) bits of the virtual page number from the translation (e.g., where the virtual page number is the (e.g., 64-bit) virtual address after masking out a proper subset of a subset of (e.g., the last 12) bits) indicates the particular set of a plurality of sets in the TLB that an address belongs to. In certain examples, the main TLB (e.g., its set indexer) utilizes more bits of the virtual address (e.g., virtual page number) to generate the index into a set of the plurality of sets of than for a victim TLB. In certain examples, the main TLB (e.g., its set indexer) utilizes the last four bits of the virtual page number (e.g., where the virtual page number is the virtual address after masking out a proper subset of a subset of (e.g., the last 12) bits) and the victim TLB (e.g., its set indexer) utilizes the last two bits of the virtual page number.

In certain examples, to address possible performance outliers from a reduction on main TLB size, the victim TLB is updated by an ISA extension (e.g., VICTIMTAG (VPN) instruction) and/or kernel modification (e.g., aware of the set indexer at the TLB) to predict if the set associated with the address generated is a hot-set and mark those translations in the TLB. In certain examples, on an eviction, instead of filling the victim TLB with all evictions, only a TLB entry predicted as a victim of thrashing (e.g., any entry in a set predicted to be suffering from hot-set problem is considered a victim of thrashing) is filled into the victim TLB.

In certain examples, a new TLB entry for a new virtual address to physical address mapping is to be included in a TLB (e.g., L1D-TLB 114-L1D) and that mapping (e.g., based on the virtual address) indicates a set in the TLB where each TLB entry slot of a plurality of TLB entry slots in that single set is full and it is desired to remove (e.g., victimize) an existing TLB entry in that single set. In certain examples, the system 100 (e.g., cache coherency circuitry 120) checks if the victim TLB entry is to be stored into the victim TLB (e.g., LID-victim TLB 122-L1D), and (i) if so, moves the victim TLB entry into the victim TLB and then uses its former slot in the TLB to store the new virtual address to physical address mapping, and/or (ii) if not, it does not move the victim TLB entry into the victim TLB (e.g., but uses its slot in the TLB to store the new virtual address to physical address mapping).

### TLB Lookup

In certain examples, on a TLB lookup (e.g., L1D-TLB 114-L1D), both the main TLB (e.g., L1D-TLB 114-L1D) and the victim TLB (e.g., L1D-victim TLB 122-L1D) are looked up in parallel for the translation. In certain examples (e.g., on a tag comparison with the ways in the set), if the access is a hit, the translation is returned (e.g., and the physical address used to access the corresponding cache(s)) and the load can continue execution, and if the access is a miss, execution proceeds to access a different level of TLB (e.g., L2-TLB 114-L2) for the translation and/or perform a page walk to determine the translation.

### Maintenance of entries in the victim TLB

In certain examples, an a DTLB eviction, the translation is filled into the victim TLB. In certain examples, the victim TLB has a capacity of 32 entries divided over 4 sets and 8 ways. In certain examples, a set indexer is used to determine the set for the victim entry. In certain examples, the victim TLB has a replacement policy (e.g., LRU).

### Usage of the Victim TLB

In certain examples, both the victim TLB and the main DTLB are looked up simultaneously, for example, if there is a hit in either, the translation is returned to the load, and else, the execution proceeds to lookup the STLB and/or perform a page walk.

In certain examples, the cache coherency (e.g., policy) is modified to account for the victim TLB, e.g., such that a miss in the DTLB does not automatically cause a page walk and/or search of a next level TLB because there still might be a hit in the victim TLB.

### Not filling back the Victim TLB

In certain examples, a translation that hits in the victim TLB is not filled into the DTLB. In certain examples, filling back into the DTLB consumes DTLB bandwidth, reduces performance gain, and/or the fill back may result in the replacement of another entry which needs to be filled into the victim TLB which also consumes time. In certain examples, a translation that hits in the victim TLB is filled into the DTLB.

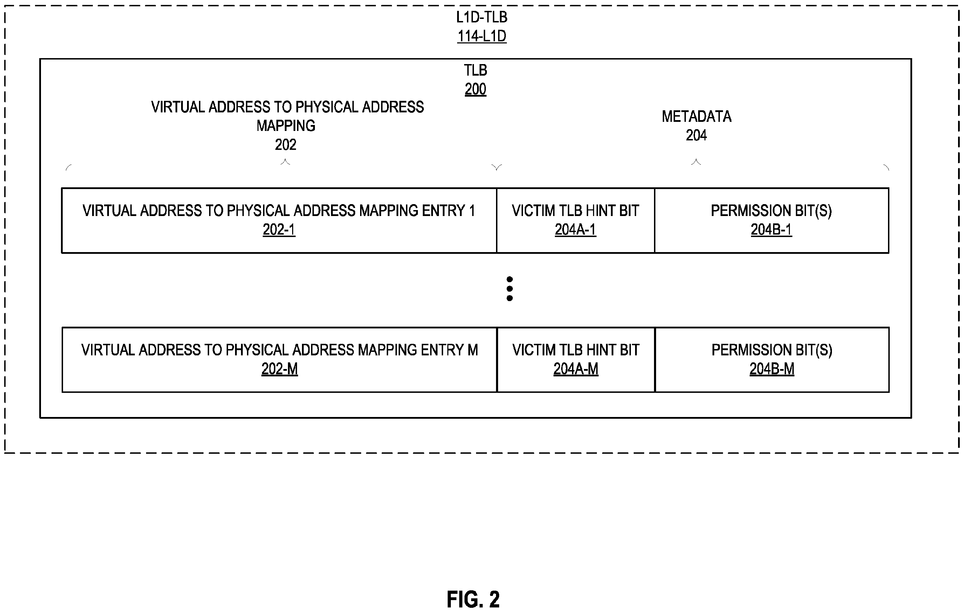

FIG. 2 illustrates a TLB 200 having entries (e.g., 1 to M, where M is any positive integer greater than 1) that includes a virtual address to physical address mapping 202 and metadata 204 including a victim TLB hint bit 204A and one or more permission bits 204B according to examples of the disclosure. In certain examples, TLB 200 is an instance of a TLB in this disclosure, for example, an instance of L1D-TLB 114-L1D. In certain examples, the victim TLB hint bit 204A is set if a corresponding entry is for a hot set, e.g., as discussed herein. In certain examples, the permission bit(s) 204B include one or any combination of: readable flag (R), that when set, indicates load instructions are allowed to read a page, writable flag (W), that when set, indicates store instructions are allowed to write a page, and/or executable flag (X), that when set, indicates instruction fetches are allowed from a page.

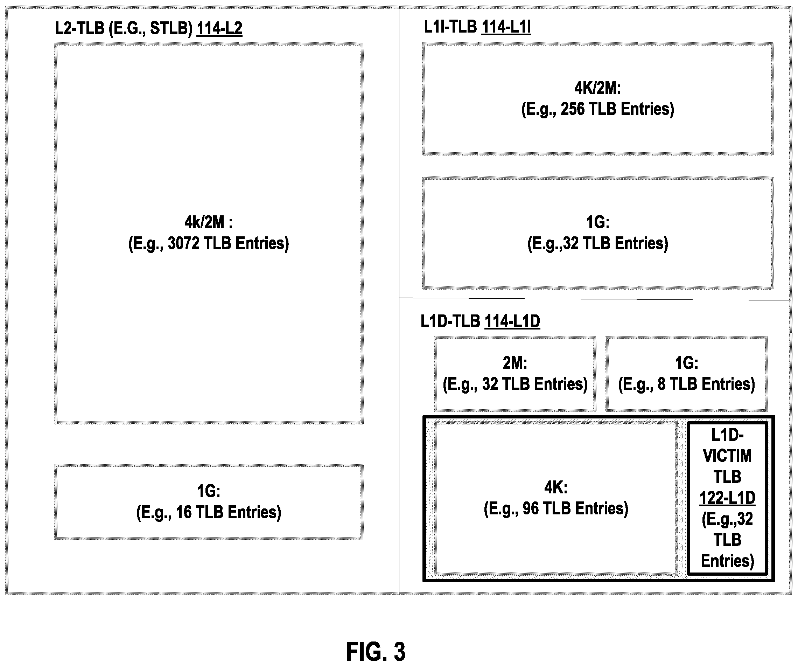

FIG. 3 illustrates an example a second level (L2) TLB (STLB) 114-L2, first level instruction TLB (L1I-TLB) 114-L1I, and first level data TLB (L1D-TLB) 114-L1D including an L1D victim TLB 122-L1D according to examples of the disclosure.

In certain examples, instead of utilizing a first level data TLB (L1D-TLB) 114-L1D with 128 TLB entries divided between 16 sets and 8 ways each, the number of ways allocated to each set in the first level data TLB (L1D-TLB) 114-L1D is reduced to 6 to store 96 TLB entries and the 32 TLB entry area thus acquired is used for L1D victim TLB 122-L1D. In certain examples, the L1D victim TLB 122-L1D is a 4 sets x 8 ways structure to store 32 TLB entries, e.g., sitting parallel to the first level data TLB (L1D-TLB) 114-L1D storing 4k entries. Note that these numbers are for illustration purposes only, and a victim TLB is applicable at different TLB configurations. In certain examples, a page size is selectable, e.g., 4000 (4KB), 2MB, 1GB, etc.

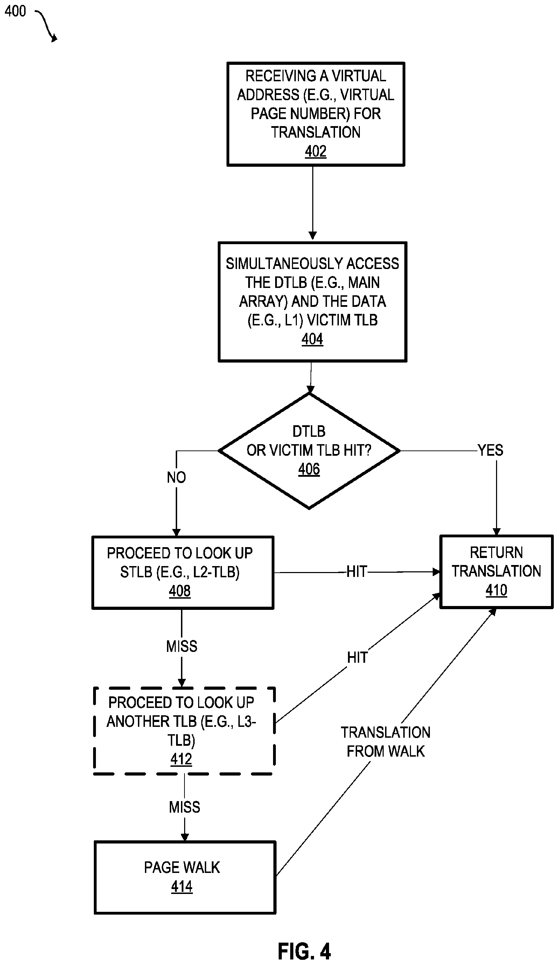

FIG. 4 illustrates an example of operations 400 for a method of performing a look-up in a data TLB (DTLB) according to examples of the disclosure. Some or all of the operations 400 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 400 are performed by a component(s) of the other figures (e.g., cache coherency circuit 120).

The operations 400 include, at block 402, receiving a virtual address (e.g., virtual page number) for translation (e.g., a look-up). The operations 400 further include, at block 404, Simultaneously accessing the DTLB (e.g., first level data TLB (L1D-TLB) 114-L1D in FIG. 1) and the data (e.g., L1) victim TLB (e.g., L1D victim TLB 122-L1D in FIG. 1) to search for a corresponding entry for that virtual address (e.g., virtual page number). The operations 400 further include, at block 406, checking if there is a hit in the DTLB or victim TLB (e.g., the corresponding TLB entry is within the DTLB or victim TLB), and if yes, returning the translation (e.g., corresponding physical address) at block 410, and if not, proceeding to block 408. The operations 400 further include, at block 408, proceeding to look up that virtual address (e.g., virtual page number) in a next level TLB (e.g., L2-TLB 114-L2 in FIG. 1), and if found (e.g., a hit) proceeding to block 410, and if not found (e.g., a miss), proceeding to block 414 (or optionally, to block 412). The operations 400 further (optionally) include, at block 412, proceeding to look up that virtual address (e.g., virtual page number) in a next level TLB (e.g., L3-TLB), and if found (e.g., a hit) proceeding to block 410, and if not found (e.g., a miss), proceeding to block 414. The operations 400 further include, at block 404, performing a page walk (e.g., through a paged hierarchy for address translations) to determine the corresponding physical address for the virtual address (e.g., virtual page number), and then sending that translation to block 410 (to be returned).

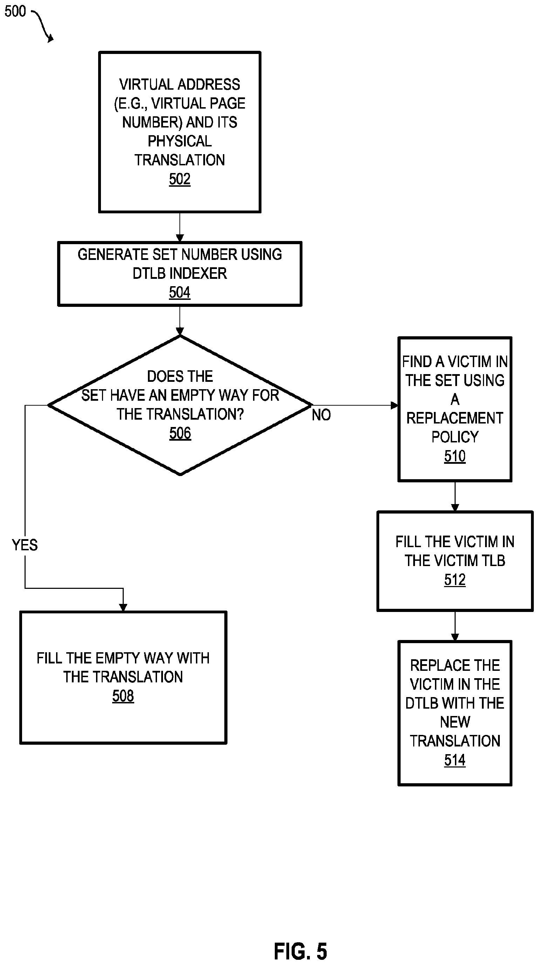

FIG. 5 illustrates an example of operations 500 for a method of performing a fill in a victim TLB utilizing a "hot" set indication (e.g., victim TLB hint bit) according to examples of the disclosure. Some or all of the operations 500 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 500 are performed by a component(s) of the other figures (e.g., cache coherency circuit 120).

The operations 500 include, at block 502, receiving a virtual address (e.g., virtual page number) and its physical translation for filling (e.g., a fill). The operations 500 further include, at block 504, generating a set number using DTLB (e.g., first level data TLB (L1D-TLB) 114-L1D in FIG. 1) set indexer. The operations 500 further include, at block 506, checking if the set has an empty way (e.g., slot) for the translation (e.g., the virtual address and its physical translation), and if yes, proceeding to block 508, and if no, proceeding to block 510. The operations 500 further include, at block 508, filling the empty way (e.g., slot) with the translation (e.g., the virtual address and its physical translation). The operations 500 further include, at block 510, finding a victim in the set using a replacement policy (e.g., least recently used (LRU), etc.). The operations 500 further include, at block 512, filling the victim TLB entry into the victim TLB (e.g., L1D victim TLB 122-L1D in FIG. 1). The operations 500 further include, at block 514, using the victimized TLB entry's slot in the DTLB (e.g., replacing the victimized TLB entry) with the new translation.

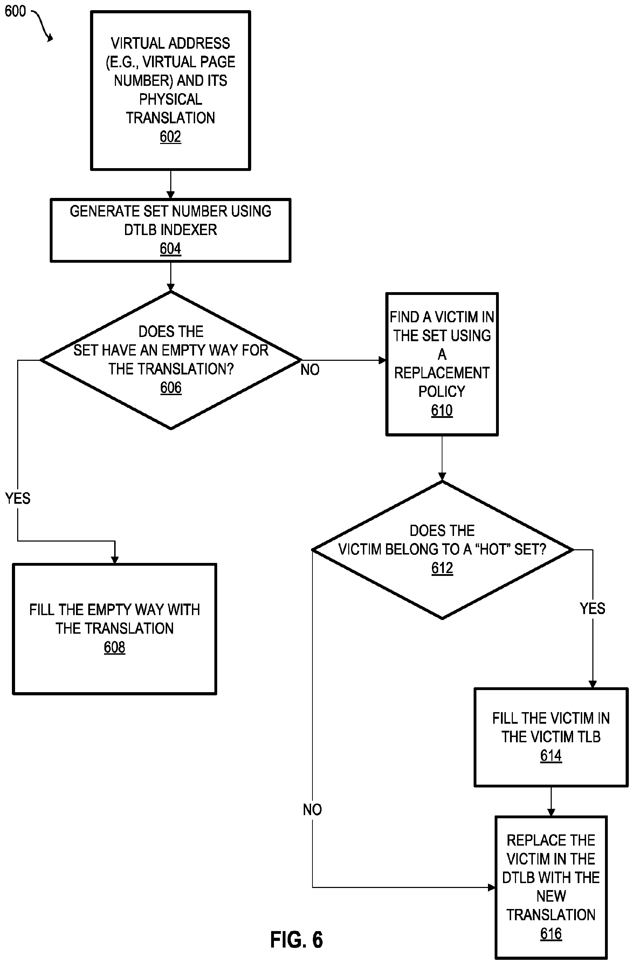

FIG. 6 illustrates another example of operations 600 for a method of performing a fill in a victim TLB utilizing a "hot" set indication (e.g., victim TLB hint bit) according to examples of the disclosure. Some or all of the operations 600 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 600 are performed by a component(s) of the other figures (e.g., cache coherency circuit 120).

The operations 600 include, at block 602, receiving a virtual address (e.g., virtual page number) and its physical translation for filling (e.g., a fill). The operations 600 further include, at block 604, generating a set number using DTLB (e.g., first level data TLB (L1D-TLB) 114-L1D in FIG. 1) set indexer. The operations 600 further include, at block 606, checking if the set has an empty way (e.g., slot) for the translation (e.g., the virtual address and its physical translation), and if yes, proceeding to block 608, and if no, proceeding to block 610. The operations 600 further include, at block 608, filling the empty way (e.g., slot) with the translation (e.g., the virtual address and its physical translation). The operations 600 further include, at block 610, finding a victim in the set using a replacement policy (e.g., least recently used (LRU), etc.). The operations 600 further include, at block 612, determining if the victim belongs to a "hot" set (e.g., does the victim TLB include a set (e.g., to 1 instead of 0) victim TLB hint bit), if no, proceeding to block 616, and if yes, proceeding to block 614. The operations 600 further include, at block 614, filling the victim TLB entry into the victim TLB (e.g., L1D victim TLB 122-L1D in FIG. 1). The operations 600 further include, at block 616, using the victimized TLB entry's slot in the DTLB (e.g., replacing the victimized TLB entry) with the new translation.

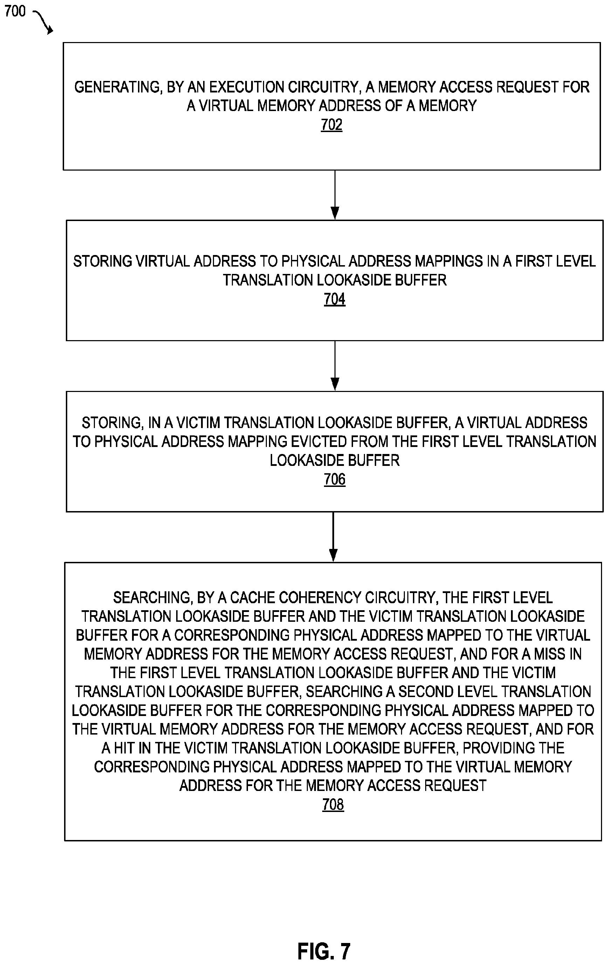

FIG. 7 illustrates an example of operations 700 for a method of performing a look-up in a first level TLB and a victim TLB according to examples of the disclosure. Some or all of the operations 700 (or other processes described herein, or variations, and/or combinations thereof) are performed under the control of one or more computer systems configured with executable instructions and are implemented as code (e.g., executable instructions, one or more computer programs, or one or more applications) executing collectively on one or more processors, by hardware or combinations thereof. The code is stored on a computer-readable storage medium, for example, in the form of a computer program comprising instructions executable by one or more processors. The computer-readable storage medium is non-transitory. In some examples, one or more (or all) of the operations 700 are performed by a component(s) of the other figures (e.g., cache coherency circuit 120).

The operations 700 include, at block 702, generating, by an execution circuitry, a memory access request for a virtual memory address of a memory. The operations 700 further include, at block 704, storing virtual address to physical address mappings in a first level translation lookaside buffer. The operations 700 further include, at block 706, storing, in a victim translation lookaside buffer, a virtual address to physical address mapping evicted from the first level translation lookaside buffer. The operations 700 further include, at block 708, searching, by a cache coherency circuitry, the first level translation lookaside buffer and the victim translation lookaside buffer for a corresponding physical address mapped to the virtual memory address for the memory access request, and for a miss in the first level translation lookaside buffer and the victim translation lookaside buffer, searching a second level translation lookaside buffer for the corresponding physical address mapped to the virtual memory address for the memory access request, and for a hit in the victim translation lookaside buffer, providing the corresponding physical address mapped to the virtual memory address for the memory access request

At least some examples of the disclosed technologies can be described in view of the following examples.

In a first set of examples, an apparatus (e.g., a hardware processor) includes an execution circuitry to generate a memory access request for a virtual memory address; a first level translation lookaside buffer to store virtual address to physical address mappings; a victim translation lookaside buffer to store a virtual address to physical address mapping evicted from the first level translation lookaside buffer; a second level translation lookaside buffer; and a cache coherency circuitry to search the first level translation lookaside buffer and the victim translation lookaside buffer for a corresponding physical address mapped to the virtual memory address for the memory access request, and for a miss in the first level translation lookaside buffer and the victim translation lookaside buffer, search the second level translation lookaside buffer for the corresponding physical address mapped to the virtual memory address for the memory access request, and for a hit in the victim translation lookaside buffer, provide the corresponding physical address mapped to the virtual memory address for the memory access request. In certain examples, the cache coherency circuitry is to simultaneously search the first level translation lookaside buffer and the victim translation lookaside buffer for the corresponding physical address mapped to the virtual memory address for the memory access request. In certain examples, the cache coherency circuitry is to, for the miss in the first level translation lookaside buffer and the victim translation lookaside buffer: cause a page walk to determine the corresponding physical address mapped to the virtual memory address for the memory access request; determine a victim entry in the first level translation lookaside buffer; fill the victim entry into the victim translation lookaside buffer; and replace the victim entry in the first level translation lookaside buffer with an entry from the page walk for the corresponding physical address mapped to the virtual memory address for the memory access request. In certain examples, the victim entry in the first level translation lookaside buffer comprises a victim translation lookaside buffer hint bit, and the cache coherency circuitry is to, in response to the victim translation lookaside buffer hint bit being set, fill the victim entry into the victim translation lookaside buffer, and in response to the victim translation lookaside buffer hint bit not being set, not fill the victim entry into the victim translation lookaside buffer. In certain examples, the apparatus includes decoder circuitry to decode an instruction into a decoded instruction, wherein the execution circuitry is to execute the decoded instruction to set the victim translation lookaside buffer hint bit in an entry in the first level translation lookaside buffer before a determination that the entry is the victim entry in the first level translation lookaside buffer. In certain examples, a set indexer for the first level translation lookaside buffer is different than a set indexer for the victim translation lookaside buffer. In certain examples, the first level translation lookaside buffer has more entries than the victim translation lookaside buffer.

In another set of examples, a method includes generating, by an execution circuitry, a memory access request for a virtual memory address of a memory; storing virtual address to physical address mappings in a first level translation lookaside buffer; storing, in a victim translation lookaside buffer, a virtual address to physical address mapping evicted from the first level translation lookaside buffer; and searching, by a cache coherency circuitry, the first level translation lookaside buffer and the victim translation lookaside buffer for a corresponding physical address mapped to the virtual memory address for the memory access request, and for a miss in the first level translation lookaside buffer and the victim translation lookaside buffer, searching a second level translation lookaside buffer for the corresponding physical address mapped to the virtual memory address for the memory access request, and for a hit in the victim translation lookaside buffer, providing the corresponding physical address mapped to the virtual memory address for the memory access request. In certain examples, the searching is simultaneously searching the first level translation lookaside buffer and the victim translation lookaside buffer for the corresponding physical address mapped to the virtual memory address for the memory access request. In certain examples, the method further includes, in response to the miss in the first level translation lookaside buffer and the victim translation lookaside buffer: performing a page walk to determine the corresponding physical address mapped to the virtual memory address for the memory access request; determining a victim entry in the first level translation lookaside buffer; filling the victim entry into the victim translation lookaside buffer; and replacing the victim entry in the first level translation lookaside buffer with an entry from the page walk for the corresponding physical address mapped to the virtual memory address for the memory access request. In certain examples, the victim entry in the first level translation lookaside buffer comprises a victim translation lookaside buffer hint bit, and the method includes: in response to the victim translation lookaside buffer hint bit being set, filling the victim entry into the victim translation lookaside buffer, and in response to the victim translation lookaside buffer hint bit not being set, not filling the victim entry into the victim translation lookaside buffer. In certain examples, the method includes decoding, by decoder circuitry, an instruction into a decoded instruction; and executing, by the execution circuitry, the decoded instruction to set the victim translation lookaside buffer hint bit in an entry in the first level translation lookaside buffer before a determination that the entry is the victim entry in the first level translation lookaside buffer. In certain examples, a set indexer for the first level translation lookaside buffer is different than a set indexer for the victim translation lookaside buffer. In certain examples, the first level translation lookaside buffer has more entries than the victim translation lookaside buffer.

In yet another set of examples, a system includes a memory; an execution circuitry to generate a memory access request for a virtual memory address of the memory; a first level translation lookaside buffer to store virtual address to physical address mappings; a victim translation lookaside buffer to store a virtual address to physical address mapping evicted from the first level translation lookaside buffer; a second level translation lookaside buffer; and a cache coherency circuitry to search the first level translation lookaside buffer and the victim translation lookaside buffer for a corresponding physical address mapped to the virtual memory address for the memory access request, and for a miss in the first level translation lookaside buffer and the victim translation lookaside buffer, search the second level translation lookaside buffer for the corresponding physical address mapped to the virtual memory address for the memory access request, and for a hit in the victim translation lookaside buffer, provide the corresponding physical address mapped to the virtual memory address for the memory access request. In certain examples, the cache coherency circuitry is to simultaneously search the first level translation lookaside buffer and the victim translation lookaside buffer for the corresponding physical address mapped to the virtual memory address for the memory access request. In certain examples, the cache coherency circuitry is to, for the miss in the first level translation lookaside buffer and the victim translation lookaside buffer: cause a page walk of the memory to determine the corresponding physical address mapped to the virtual memory address for the memory access request; determine a victim entry in the first level translation lookaside buffer; fill the victim entry into the victim translation lookaside buffer; and replace the victim entry in the first level translation lookaside buffer with an entry from the page walk for the corresponding physical address mapped to the virtual memory address for the memory access request. In certain examples, the victim entry in the first level translation lookaside buffer comprises a victim translation lookaside buffer hint bit, and the cache coherency circuitry is to, in response to the victim translation lookaside buffer hint bit being set, fill the victim entry into the victim translation lookaside buffer, and in response to the victim translation lookaside buffer hint bit not being set, not fill the victim entry into the victim translation lookaside buffer. In certain examples, the system includes a decoder circuitry to decode an instruction into a decoded instruction, wherein the execution circuitry is to execute the decoded instruction to set the victim translation lookaside buffer hint bit in an entry in the first level translation lookaside buffer before a determination that the entry is the victim entry in the first level translation lookaside buffer. In certain examples, a set indexer for the first level translation lookaside buffer is different than a set indexer for the victim translation lookaside buffer. In certain examples, the first level translation lookaside buffer has more entries than the victim translation lookaside buffer.

Exemplary architectures, systems, etc. that the above may be used in are detailed below.

### ISA extension and kernel support for Victim TLB

In certain examples, the usage of a main TLB and victim TLB (e.g., redesign of the main DTLB into a DTLB and a separate victim TLB) can have a negative performance impact on some workloads which are very sensitive to primary DTLB size. While having a larger victim TLB might be beneficial at the cost of main DTLB ways, the sensitive workloads will have performance degradation in certain examples. To mitigate such scenarios, certain examples herein utilize an ISA extension and/or kernel modification to keep a smaller victim TLB which caches a targeted proper subset of the DTLB evictions.

Maintenance and usage of kernel history buffer: in certain examples, for every generated virtual address (e.g., virtual page number), the kernel is modified to generate the set number (e.g., the OS is provided the set indexer (e.g., and hash) so the OS can determine the corresponding set number for a virtual address) and use it to update the history buffer, e.g., which keeps track of the frequency of each set used so far. In certain examples, a threshold number (e.g., 4-8) of the most frequently occurring sets are predicted to be the hot sets. In certain examples, throughout the runtime, the kernel will communicate its prediction by using the VICTIMTAG instruction. In certain examples, this will occur after the virtual address is generated if its set is predicted to be "hot". In certain examples, the processor (e.g., CPU), in turn, will set the extra hot set context bit (e.g., hint bit) for those translations in the DTLB. In certain examples, this "hot-set" bit in the DTLB with each set is an additional hardware change utilized for this extension.

Filling on victim TLB: in certain examples, an entry is only filled in the victim TLB if the hot-set context bit for the to-be-invalidated entry is turned on in the DTLB.

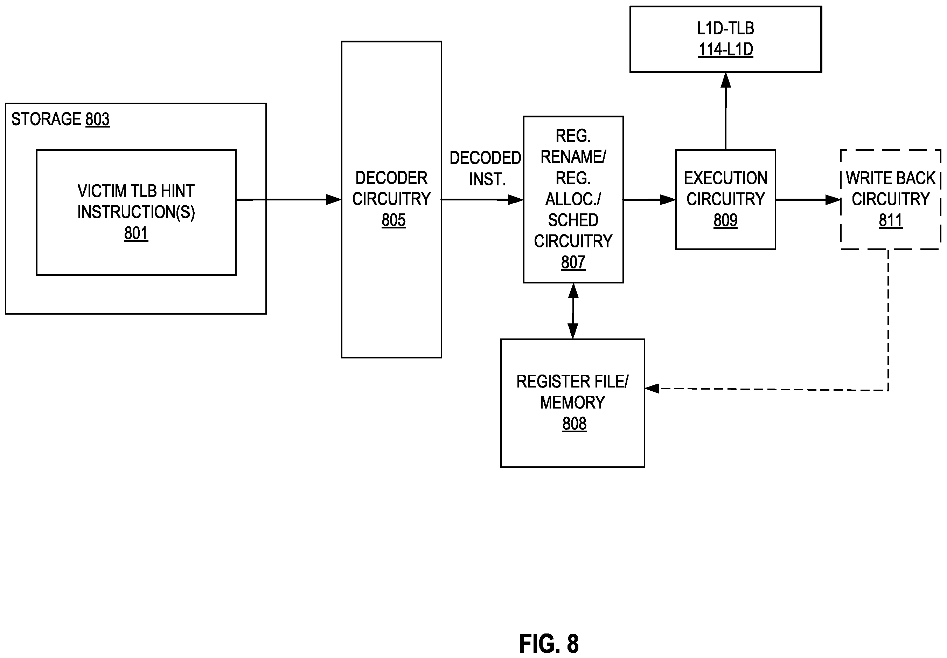

FIG. 8 illustrates examples of computing hardware to process a victim TLB hint (VICTIMTAG) instruction. As illustrated, storage 803 stores a victim TLB hint instruction 801 to be executed.

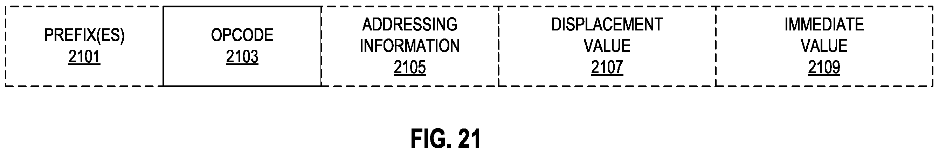

The instruction 801 is received by decoder circuitry 805. For example, the decoder circuitry 805 receives this instruction from fetch circuitry (not shown). The instruction may be in any suitable format, such as that described with reference to FIG. 21 below. In an example, the instruction includes fields for an opcode and a virtual address (e.g., virtual page number). In some examples, the sources (e.g., virtual address) and destination are registers, and in other examples one or more are memory locations (e.g., an entry within a TLB). In some examples, one or more of the sources may be an immediate operand. In some examples, the opcode details an operation (e.g., a victim TLB hint operation) to be performed.

More detailed examples of at least one instruction format for the instruction will be detailed later. The decoder circuitry 805 decodes the instruction into one or more operations. In some examples, this decoding includes generating a plurality of micro-operations to be performed by execution circuitry (such as execution circuitry 809). The decoder circuitry 805 also decodes instruction prefixes.

In some examples, register renaming, register allocation, and/or scheduling circuitry 807 provides functionality for one or more of: 1) renaming logical operand values to physical operand values (e.g., a register alias table in some examples), 2) allocating status bits and flags to the decoded instruction, and 3) scheduling the decoded instruction for execution by execution circuitry out of an instruction pool (e.g., using a reservation station in some examples).

Registers (register file) and/or memory 808 store data as operands of the instruction to be operated by execution circuitry 809. Example register types include packed data registers, general purpose registers (GPRs), floating-point registers.

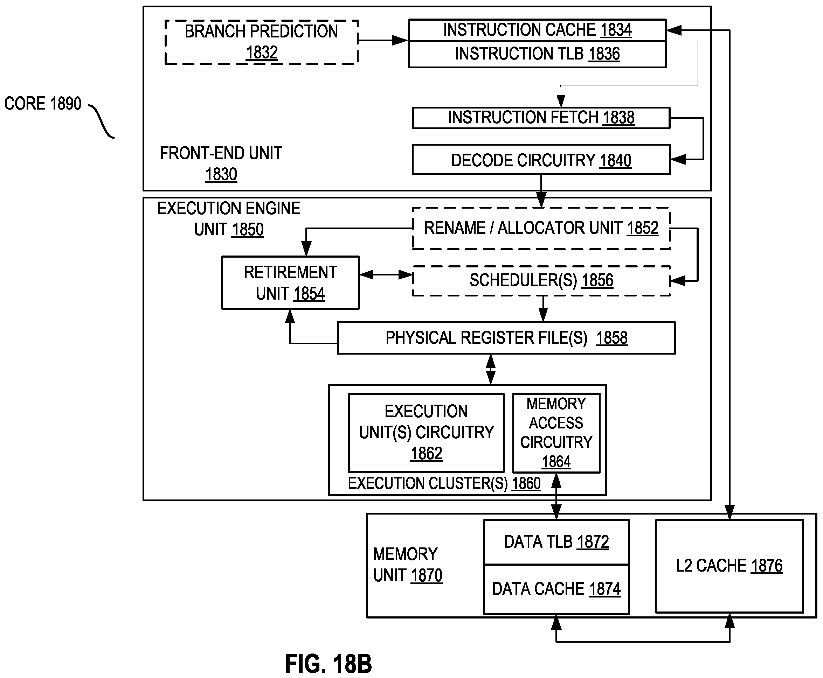

Execution circuitry 809 executes the decoded instruction. Example detailed execution circuitry includes execution circuitry 106 shown in FIG. 1, and execution cluster(s) 1860 shown in FIG. 18B, etc. The execution of the decoded instruction causes the execution circuitry to perform an operation (e.g., a victim TLB hint operation).

In some examples, retirement/write back circuitry 811 architecturally commits the destination register into the registers or memory 808 and retires the instruction.

An example of a format for a victim TLB hint instruction is VICTIMTAG SRC1 (virtual address or other indicator of a particular TLB entry). In some examples, VICTIMTAG is the opcode mnemonic of the instruction. SRC is a field for a location of a source operand (e.g., virtual address), such as general-purpose registers, packed data registers, and/or memory. In some examples, the opcode is provided by field 2103, BPG12, or 3104. In some examples, source and/or destination locations are provided by one or more of bits from a prefix 2101 (e.g., R-bit, VVVV, etc.), addressing information 2105 (e.g., reg 2244, R/M 2146, SIB byte 2204, etc.), 1718, 1720, 1722, 1724, 1726, etc.

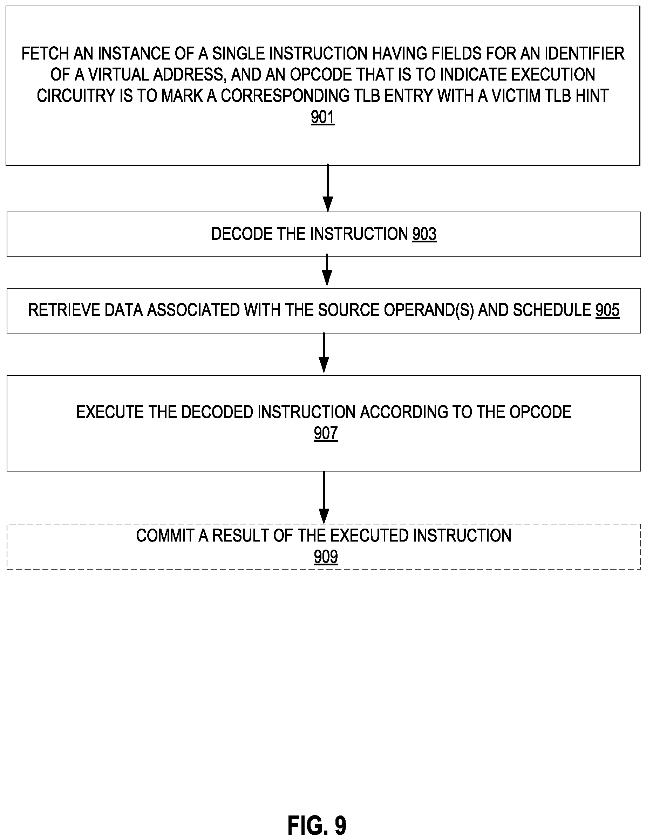

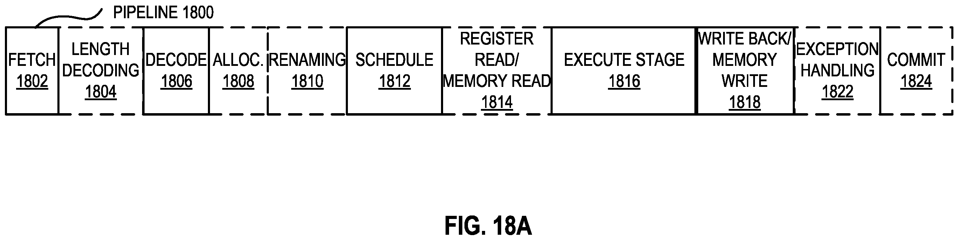

FIG. 9 illustrates an example method performed by a processor to process a victim TLB hint instruction. For example, a processor core as shown in FIG. 18B, a pipeline as detailed below, etc., performs this method.

At 901, an instance of single instruction is fetched. For example, a victim TLB hint instruction is fetched. The instruction includes fields for an identifier of a virtual address (e.g., virtual page number), and an opcode that is to indicate execution circuitry is to mark a corresponding TLB entry with a victim TLB hint. In some examples, the instruction further includes a field for a writemask. In some examples, the instruction is fetched from an instruction cache. The opcode indicates victim TLB hint operations to perform.

The fetched instruction is decoded at 903. For example, the fetched victim TLB hint instruction is decoded by decoder circuitry such as decoder circuitry 805 or decode circuitry 1840 detailed herein.

Data values associated with the source operands of the decoded instruction are retrieved when the decoded instruction is scheduled at 905. For example, when one or more of the source operands are memory operands, the data from the indicated memory location is retrieved.

At 907, the decoded instruction is executed by execution circuitry (hardware) such as execution circuitry 106 shown in FIG. 1, execution circuitry 809 shown in FIG. 8, or execution cluster(s) 1860 shown in FIG. 18B. For the victim TLB hint instruction, in certain examples the execution will cause execution circuitry to perform the operations described in connection with FIGS. 1-7. In various examples, the execution of the single instruction includes marking a corresponding TLB entry with a victim TLB hint.

In some examples, the instruction is committed or retired at 909.

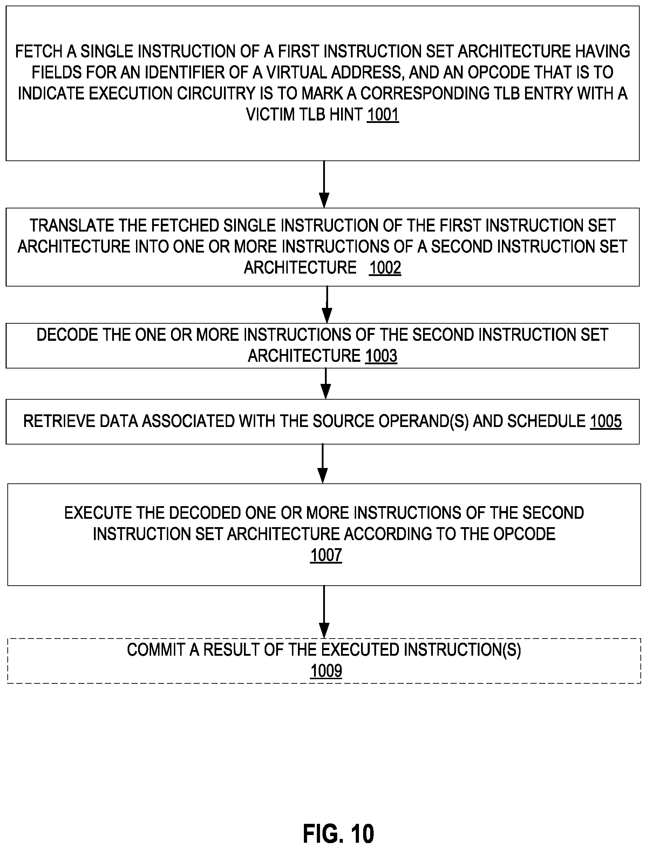

FIG. 10 illustrates an example method to process a victim TLB hint instruction using emulation or binary translation. For example, a processor core as shown in FIG. 18B, a pipeline and/or emulation/translation layer perform aspects of this method.

An instance of a single instruction of a first instruction set architecture is fetched at 1001. The instance of the single instruction of the first instruction set architecture includes fields for an identifier of a virtual address (e.g., virtual page number), and an opcode that is to indicate execution circuitry is to mark a corresponding TLB entry with a victim TLB hint. In some examples, the instruction further includes a field for a writemask. In some examples, the instruction is fetched from an instruction cache. The opcode indicates victim TLB hint operations to perform.

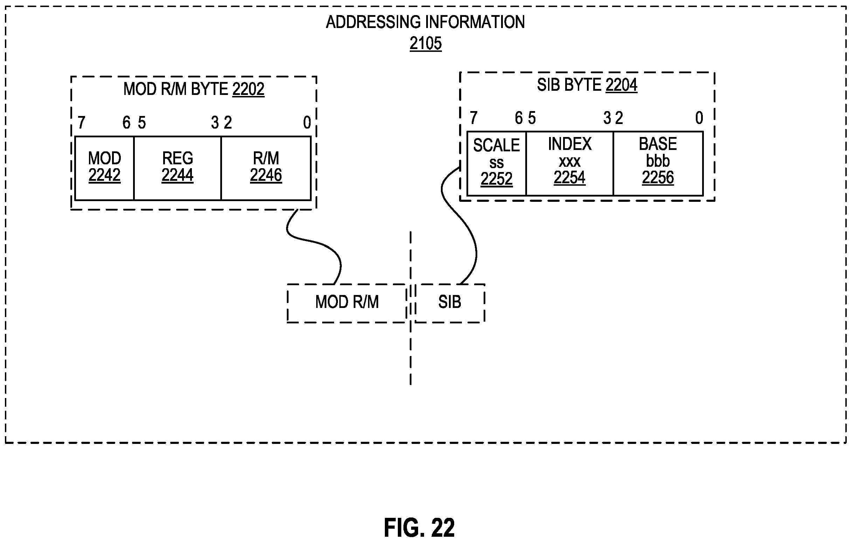

The fetched single instruction of the first instruction set architecture is translated into one or more instructions of a second instruction set architecture at 1002. This translation is performed by a translation and/or emulation layer of software in some examples. In some examples, this translation is performed by an instruction converter 2212 as shown in FIG. 22. In some examples, the translation is performed by hardware translation circuitry.

The one or more translated instructions of the second instruction set architecture are decoded at 1003. For example, the translated instructions are decoded by decoder circuitry such as decoder circuitry 805 or decode circuitry 1840 detailed herein. In some examples, the operations of translation and decoding at 1002 and 1003 are merged.

Data values associated with the source operand(s) of the decoded one or more instructions of the second instruction set architecture are retrieved and the one or more instructions are scheduled at 1005. For example, when one or more of the source operands are memory operands, the data from the indicated memory location is retrieved.

At 1007, the decoded instruction(s) of the second instruction set architecture is/are executed by execution circuitry (hardware) such as execution circuitry 106 shown in FIG. 1, execution circuitry 809 shown in FIG. 8, or execution cluster(s) 1860 shown in FIG. 18B, to perform the operation(s) indicated by the opcode of the single instruction of the first instruction set architecture. For the victim TLB hint instruction, in certain examples the execution will cause execution circuitry to perform the operations described in connection with FIGS. 1-7. In various examples, the execution of the one or more instructions of the second instruction set architecture includes marking a corresponding TLB entry with a victim TLB hint.

In some examples, the instruction is committed or retired at 1009.

Some examples utilize instruction formats described herein. Some examples are implemented in one or more computer architectures, cores, accelerators, etc. Some examples are generated or are IP cores. Some examples utilize emulation and/or translation.

### Example Architectures

Detailed below are descriptions of example computer architectures. Other system designs and configurations known in the arts for laptop, desktop, and handheld personal computers (PC)s, personal digital assistants, engineering workstations, servers, disaggregated servers, network devices, network hubs, switches, routers, embedded processors, digital signal processors (DSPs), graphics devices, video game devices, set-top boxes, micro controllers, cell phones, portable media players, hand-held devices, and various other electronic devices, are also suitable. In general, a variety of systems or electronic devices capable of incorporating a processor and/or other execution logic as disclosed herein are generally suitable.

### Example Systems

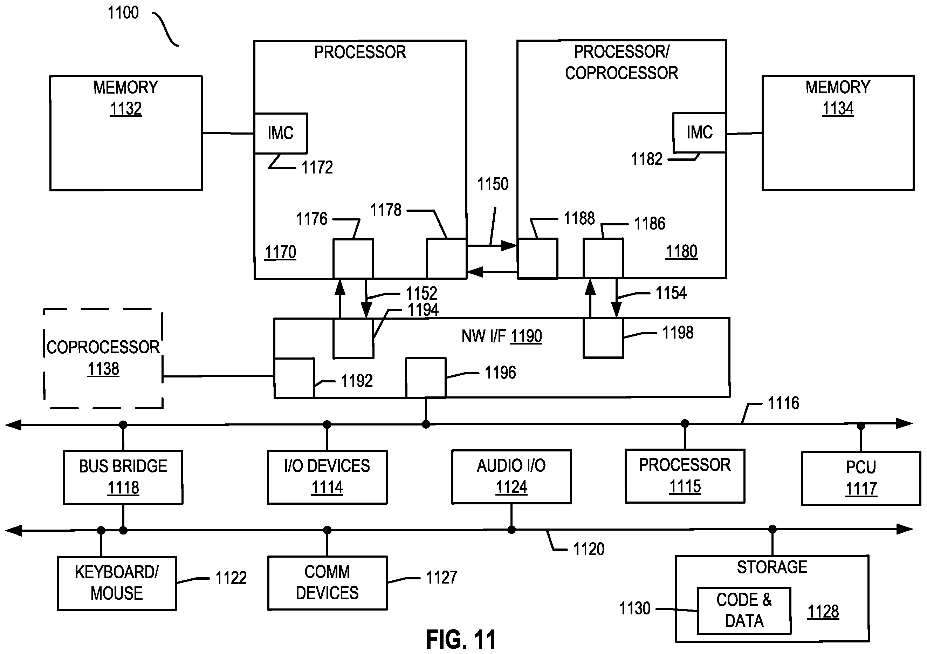

FIG. 11 illustrates an example computing system. Multiprocessor system 1100 is an interfaced system and includes a plurality of processors or cores including a first processor 1170 and a second processor 1180 coupled via an interface 1150 such as a point-to-point (P-P) interconnect, a fabric, and/or bus. In some examples, the first processor 1170 and the second processor 1180 are homogeneous. In some examples, first processor 1170 and the second processor 1180 are heterogenous. Though the example system 1100 is shown to have two processors, the system may have three or more processors, or may be a single processor system. In some examples, the computing system is a system on a chip (SoC).

Processors 1170 and 1180 are shown including integrated memory controller (IMC) circuitry 1172 and 1182, respectively. Processor 1170 also includes interface circuits 1176 and 1178; similarly, second processor 1180 includes interface circuits 1186 and 1188. Processors 1170, 1180 may exchange information via the interface 1150 using interface circuits 1178, 1188. IMCs 1172 and 1182 couple the processors 1170, 1180 to respective memories, namely a memory 1132 and a memory 1134, which may be portions of main memory locally attached to the respective processors.

Processors 1170, 1180 may each exchange information with a network interface (NW I/F) 1190 via individual interfaces 1152, 1154 using interface circuits 1176, 1194, 1186, 1198. The network interface 1190 (e.g., one or more of an interconnect, bus, and/or fabric, and in some examples is a chipset) may optionally exchange information with a coprocessor 1138 via an interface circuit 1192. In some examples, the coprocessor 1138 is a special-purpose processor, such as, for example, a high-throughput processor, a network or communication processor, compression engine, graphics processor, general purpose graphics processing unit (GPGPU), neural-network processing unit (NPU), embedded processor, or the like.

A shared cache (not shown) may be included in either processor 1170, 1180 or outside of both processors, yet connected with the processors via an interface such as P-P interconnect, such that either or both processors' local cache information may be stored in the shared cache if a processor is placed into a low power mode.

Network interface 1190 may be coupled to a first interface 1116 via interface circuit 1196. In some examples, first interface 1116 may be an interface such as a Peripheral Component Interconnect (PCI) interconnect, a PCI Express interconnect or another I/O interconnect. In some examples, first interface 1116 is coupled to a power control unit (PCU) 1117, which may include circuitry, software, and/or firmware to perform power management operations with regard to the processors 1170, 1180 and/or co-processor 1138. PCU 1117 provides control information to a voltage regulator (not shown) to cause the voltage regulator to generate the appropriate regulated voltage. PCU 1117 also provides control information to control the operating voltage generated. In various examples, PCU 1117 may include a variety of power management logic units (circuitry) to perform hardware-based power management. Such power management may be wholly processor controlled (e.g., by various processor hardware, and which may be triggered by workload and/or power, thermal or other processor constraints) and/or the power management may be performed responsive to external sources (such as a platform or power management source or system software).

PCU 1117 is illustrated as being present as logic separate from the processor 1170 and/or processor 1180. In other cases, PCU 1117 may execute on a given one or more of cores (not shown) of processor 1170 or 1180. In some cases, PCU 1117 may be implemented as a microcontroller (dedicated or general-purpose) or other control logic configured to execute its own dedicated power management code, sometimes referred to as P-code. In yet other examples, power management operations to be performed by PCU 1117 may be implemented externally to a processor, such as by way of a separate power management integrated circuit (PMIC) or another component external to the processor. In yet other examples, power management operations to be performed by PCU 1117 may be implemented within BIOS or other system software.

Various I/O devices 1114 may be coupled to first interface 1116, along with a bus bridge 1118 which couples first interface 1116 to a second interface 1120. In some examples, one or more additional processor(s) 1115, such as coprocessors, high throughput many integrated core (MIC) processors, GPGPUs, accelerators (such as graphics accelerators or digital signal processing (DSP) units), field programmable gate arrays (FPGAs), or any other processor, are coupled to first interface 1116. In some examples, second interface 1120 may be a low pin count (LPC) interface. Various devices may be coupled to second interface 1120 including, for example, a keyboard and/or mouse 1122, communication devices 1127 and storage circuitry 1128. Storage circuitry 1128 may be one or more non-transitory machine-readable storage media as described below, such as a disk drive or other mass storage device which may include instructions/code and data 1130 and may implement storage in some examples. Further, an audio I/O 1124 may be coupled to second interface 1120. Note that other architectures than the point-to-point architecture described above are possible. For example, instead of the point-to-point architecture, a system such as multiprocessor system 1100 may implement a multi-drop interface or other such architecture.

Example Core Architectures, Processors, and Computer Architectures.

Processor cores may be implemented in different ways, for different purposes, and in different processors. For instance, implementations of such cores may include: 1) a general purpose in-order core intended for general-purpose computing; 2) a high-performance general purpose out-of-order core intended for general-purpose computing; 3) a special purpose core intended primarily for graphics and/or scientific (throughput) computing. Implementations of different processors may include: 1) a CPU including one or more general purpose in-order cores intended for general-purpose computing and/or one or more general purpose out-of-order cores intended for general-purpose computing; and 2) a coprocessor including one or more special purpose cores intended primarily for graphics and/or scientific (throughput) computing. Such different processors lead to different computer system architectures, which may include: 1) the coprocessor on a separate chip from the CPU; 2) the coprocessor on a separate die in the same package as a CPU; 3) the coprocessor on the same die as a CPU (in which case, such a coprocessor is sometimes referred to as special purpose logic, such as integrated graphics and/or scientific (throughput) logic, or as special purpose cores); and 4) a system on a chip (SoC) that may be included on the same die as the described CPU (sometimes referred to as the application core(s) or application processor(s)), the above described coprocessor, and additional functionality. Example core architectures are described next, followed by descriptions of example processors and computer architectures.

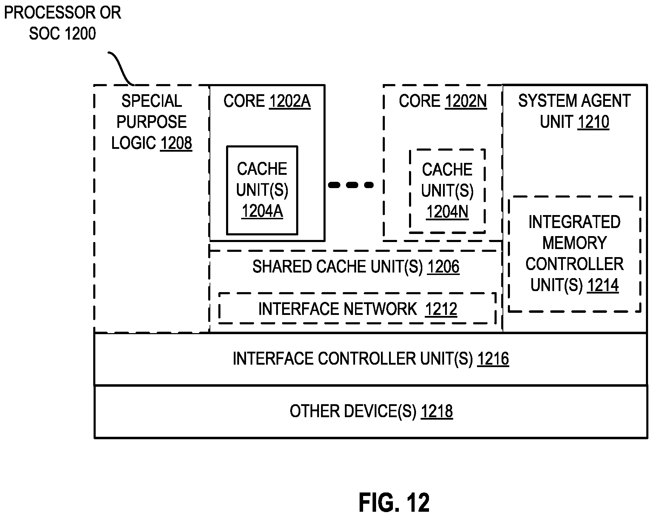

FIG. 12 illustrates a block diagram of an example processor and/or SoC 1200 that may have one or more cores and an integrated memory controller. The solid lined boxes illustrate a processor 1200 with a single core 1202A, system agent unit circuitry 1210, and a set of one or more interface controller unit(s) circuitry 1216, while the optional addition of the dashed lined boxes illustrates an alternative processor 1200 with multiple cores 1202A-1202N, a set of one or more integrated memory controller unit(s) circuitry 1214 in the system agent unit circuitry 1210, and special purpose logic 1208, as well as a set of one or more interface controller units circuitry 1216. Note that the processor 1200 may be one of the processors 1170 or 1180, or co-processor 1138 or 1115 of FIG. 11.

Thus, different implementations of the processor 1200 may include: 1) a CPU with the special purpose logic 1208 being integrated graphics and/or scientific (throughput) logic (which may include one or more cores, not shown), and the cores 1202A-1202N being one or more general purpose cores (e.g., general purpose in-order cores, general purpose out-of-order cores, or a combination of the two); 2) a coprocessor with the cores 1202A-1202N being a large number of special purpose cores intended primarily for graphics and/or scientific (throughput); and 3) a coprocessor with the cores 1202A-1202N being a large number of general purpose in-order cores. Thus, the processor 1200 may be a general-purpose processor, coprocessor or special-purpose processor, such as, for example, a network or communication processor, compression engine, graphics processor, GPGPU (general purpose graphics processing unit), a high throughput many integrated core (MIC) coprocessor (including 30 or more cores), embedded processor, or the like. The processor may be implemented on one or more chips. The processor 1200 may be a part of and/or may be implemented on one or more substrates using any of a number of process technologies, such as, for example, complementary metal oxide semiconductor (CMOS), bipolar CMOS (BiCMOS), P-type metal oxide semiconductor (PMOS), or N-type metal oxide semiconductor (NMOS).

A memory hierarchy includes one or more levels of cache unit(s) circuitry 1204A-1204N within the cores 1202A-1202N, a set of one or more shared cache unit(s) circuitry 1206, and external memory (not shown) coupled to the set of integrated memory controller unit(s) circuitry 1214. The set of one or more shared cache unit(s) circuitry 1206 may include one or more mid-level caches, such as level 2 (L2), level 3 (L3), level 4 (L4), or other levels of cache, such as a last level cache (LLC), and/or combinations thereof. While in some examples interface network circuitry 1212 (e.g., a ring interconnect) interfaces the special purpose logic 1208 (e.g., integrated graphics logic), the set of shared cache unit(s) circuitry 1206, and the system agent unit circuitry 1210, alternative examples use any number of well-known techniques for interfacing such units. In some examples, coherency is maintained between one or more of the shared cache unit(s) circuitry 1206 and cores 1202A-1202N. In some examples, interface controller units circuitry 1216 couple the cores 1202 to one or more other devices 1218 such as one or more I/O devices, storage, one or more communication devices (e.g., wireless networking, wired networking, etc.), etc.

In some examples, one or more of the cores 1202A-1202N are capable of multithreading. The system agent unit circuitry 1210 includes those components coordinating and operating cores 1202A-1202N. The system agent unit circuitry 1210 may include, for example, power control unit (PCU) circuitry and/or display unit circuitry (not shown). The PCU may be or may include logic and components needed for regulating the power state of the cores 1202A-1202N and/or the special purpose logic 1208 (e.g., integrated graphics logic). The display unit circuitry is for driving one or more externally connected displays.

The cores 1202A-1202N may be homogenous in terms of instruction set architecture (ISA). Alternatively, the cores 1202A-1202N may be heterogeneous in terms of ISA; that is, a subset of the cores 1202A-1202N may be capable of executing an ISA, while other cores may be capable of executing only a subset of that ISA or another ISA.

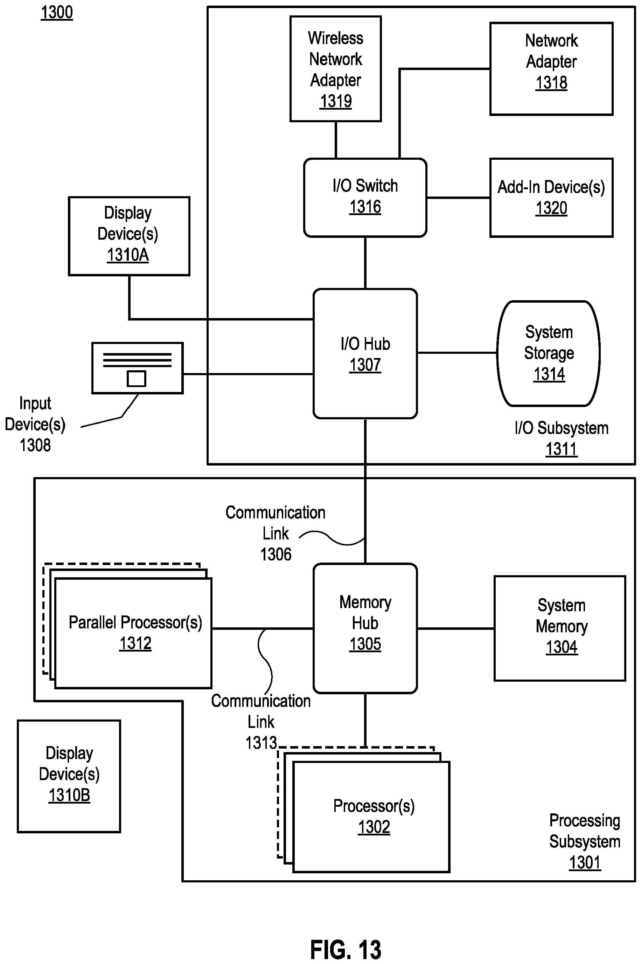

FIG. 13 is a block diagram illustrating a computing system 1300 configured to implement one or more aspects of the examples described herein. The computing system 1300 includes a processing subsystem 1301 having one or more processor(s) 1302 and a system memory 1304 communicating via an interconnection path that may include a memory hub 1305. The memory hub 1305 may be a separate component within a chipset component or may be integrated within the one or more processor(s) 1302. The memory hub 1305 couples with an I/O subsystem 1311 via a communication link 1306. The I/O subsystem 1311 includes an I/O hub 1307 that can enable the computing system 1300 to receive input from one or more input device(s) 1308. Additionally, the I/O hub 1307 can enable a display controller, which may be included in the one or more processor(s) 1302, to provide outputs to one or more display device(s) 1310A. In some examples the one or more display device(s) 1310A coupled with the I/O hub 1307 can include a local, internal, or embedded display device.

The processing subsystem 1301, for example, includes one or more parallel processor(s) 1312 coupled to memory hub 1305 via a bus or other communication link 1313. The communication link 1313 may be one of any number of standards-based communication link technologies or protocols, such as, but not limited to PCI Express, or may be a vendor specific communications interface or communications fabric. The one or more parallel processor(s) 1312 may form a computationally focused parallel or vector processing system that can include a large number of processing cores and/or processing clusters, such as a many integrated core (MIC) processor. For example, the one or more parallel processor(s) 1312 form a graphics processing subsystem that can output pixels to one of the one or more display device(s) 1310A coupled via the I/O hub 1307. The one or more parallel processor(s) 1312 can also include a display controller and display interface (not shown) to enable a direct connection to one or more display device(s) 1310B.

Within the I/O subsystem 1311, a system storage unit 1314 can connect to the I/O hub 1307 to provide a storage mechanism for the computing system 1300. An I/O switch 1316 can be used to provide an interface mechanism to enable connections between the I/O hub 1307 and other components, such as a network adapter 1318 and/or wireless network adapter 1319 that may be integrated into the platform, and various other devices that can be added via one or more add-in device(s) 1320. The add-in device(s) 1320 may also include, for example, one or more external graphics processor devices, graphics cards, and/or compute accelerators. The network adapter 1318 can be an Ethernet adapter or another wired network adapter. The wireless network adapter 1319 can include one or more of a Wi-Fi, Bluetooth, near field communication (NFC), or other network device that includes one or more wireless radios.

The computing system 1300 can include other components not explicitly shown, including USB or other port connections, optical storage drives, video capture devices, and the like, which may also be connected to the I/O hub 1307. Communication paths interconnecting the various components in FIG. 13 may be implemented using any suitable protocols, such as PCI (Peripheral Component Interconnect) based protocols (e.g., PCI-Express), or any other bus or point-to-point communication interfaces and/or protocol(s), such as the NVLink high-speed interconnect, Compute Express Link^{™} (CXL^{™}) (e.g., CXL.mem), Infinity Fabric (IF), Ethernet (IEEE 802.3), remote direct memory access (RDMA), InfiniBand, Internet Wide Area RDMA Protocol (iWARP), Transmission Control Protocol (TCP), User Datagram Protocol (UDP), quick UDP Internet Connections (QUIC), RDMA over Converged Ethernet (RoCE), Intel QuickPath Interconnect (QPI), Intel Ultra Path Interconnect (UPI), Intel On-Chip System Fabric (IOSF), Omnipath, HyperTransport, Advanced Microcontroller Bus Architecture (AMBA) interconnect, OpenCAPI, Gen-Z, Cache Coherent Interconnect for Accelerators (CCIX), 3GPP Long Term Evolution (LTE) (4G), 3GPP 5G, and variations thereof, or wired or wireless interconnect protocols known in the art. In some examples, data can be copied or stored to virtualized storage nodes using a protocol such as non-volatile memory express (NVMe) over Fabrics (NVMe-oF) or NVMe.

The one or more parallel processor(s) 1312 may incorporate circuitry optimized for graphics and video processing, including, for example, video output circuitry, and constitutes a graphics processing unit (GPU). Alternatively or additionally, the one or more parallel processor(s) 1312 can incorporate circuitry optimized for general purpose processing, while preserving the underlying computational architecture, described in greater detail herein. Components of the computing system 1300 may be integrated with one or more other system elements on a single integrated circuit. For example, the one or more parallel processor(s) 1312, memory hub 1305, processor(s) 1302, and I/O hub 1307 can be integrated into a system on chip (SoC) integrated circuit. Alternatively, the components of the computing system 1300 can be integrated into a single package to form a system in package (SIP) configuration. In some examples at least a portion of the components of the computing system 1300 can be integrated into a multi-chip module (MCM), which can be interconnected with other multi-chip modules into a modular computing system.

It will be appreciated that the computing system 1300 shown herein is illustrative and that variations and modifications are possible. The connection topology, including the number and arrangement of bridges, the number of processor(s) 1302, and the number of parallel processor(s) 1312, may be modified as desired. For instance, system memory 1304 can be connected to the processor(s) 1302 directly rather than through a bridge, while other devices communicate with system memory 1304 via the memory hub 1305 and the processor(s) 1302. In other alternative topologies, the parallel processor(s) 1312 are connected to the I/O hub 1307 or directly to one of the one or more processor(s) 1302, rather than to the memory hub 1305. In other examples, the I/O hub 1307 and memory hub 1305 may be integrated into a single chip. It is also possible that two or more sets of processor(s) 1302 are attached via multiple sockets, which can couple with two or more instances of the parallel processor(s) 1312.

Some of the particular components shown herein are optional and may not be included in all implementations of the computing system 1300. For example, any number of add-in cards or peripherals may be supported, or some components may be eliminated. Furthermore, some architectures may use different terminology for components similar to those illustrated in FIG. 13. For example, the memory hub 1305 may be referred to as a Northbridge in some architectures, while the I/O hub 1307 may be referred to as a Southbridge.

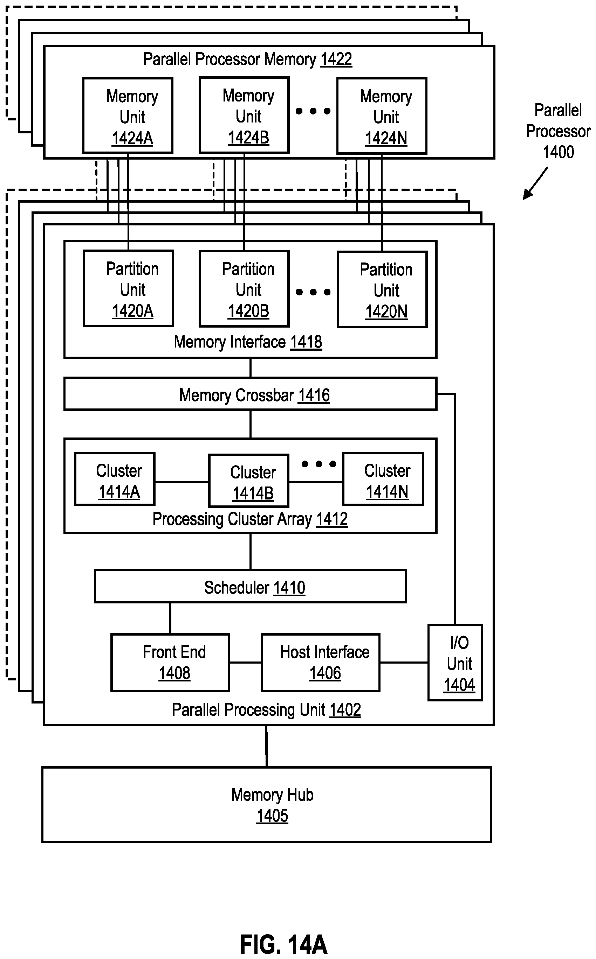

FIG. 14A illustrates examples of a parallel processor 1400. The parallel processor 1400 may be a GPU, GPGPU or the like as described herein. The various components of the parallel processor 1400 may be implemented using one or more integrated circuit devices, such as programmable processors, application specific integrated circuits (ASICs), or field programmable gate arrays (FPGA). The illustrated parallel processor 1400 may be one or more of the parallel processor(s) 1312 shown in FIG. 13.

The parallel processor 1400 includes a parallel processing unit 1402. The parallel processing unit includes an I/O unit 1404 that enables communication with other devices, including other instances of the parallel processing unit 1402. The I/O unit 1404 may be directly connected to other devices. For instance, the I/O unit 1404 connects with other devices via the use of a hub or switch interface, such as memory hub 1305. The connections between the memory hub 1305 and the I/O unit 1404 form a communication link 1313. Within the parallel processing unit 1402, the I/O unit 1404 connects with a host interface 1406 and a memory crossbar 1416, where the host interface 1406 receives commands directed to performing processing operations and the memory crossbar 1416 receives commands directed to performing memory operations.

When the host interface 1406 receives a command buffer via the I/O unit 1404, the host interface 1406 can direct work operations to perform those commands to a front end 1408. In some examples the front end 1408 couples with a scheduler 1410, which is configured to distribute commands or other work items to a processing cluster array 1412. The scheduler 1410 ensures that the processing cluster array 1412 is properly configured and in a valid state before tasks are distributed to the processing clusters of the processing cluster array 1412. The scheduler 1410 may be implemented via firmware logic executing on a microcontroller. The microcontroller implemented scheduler 1410 is configurable to perform complex scheduling and work distribution operations at coarse and fine granularity, enabling rapid preemption and context switching of threads executing on the processing cluster array 1412. Preferably, the host software can prove workloads for scheduling on the processing cluster array 1412 via one of multiple graphics processing doorbells. In other examples, polling for new workloads or interrupts can be used to identify or indicate availability of work to perform. The workloads can then be automatically distributed across the processing cluster array 1412 by the scheduler 1410 logic within the scheduler microcontroller.

The processing cluster array 1412 can include up to "N" processing clusters (e.g., cluster 1414A, cluster 1414B, through cluster 1414N). Each cluster 1414A-1414N of the processing cluster array 1412 can execute a large number of concurrent threads. The scheduler 1410 can allocate work to the clusters 1414A-1414N of the processing cluster array 1412 using various scheduling and/or work distribution algorithms, which may vary depending on the workload arising for each type of program or computation. The scheduling can be handled dynamically by the scheduler 1410 or can be assisted in part by compiler logic during compilation of program logic configured for execution by the processing cluster array 1412. Optionally, different clusters 1414A-1414N of the processing cluster array 1412 can be allocated for processing different types of programs or for performing different types of computations.

The processing cluster array 1412 can be configured to perform various types of parallel processing operations. For example, the processing cluster array 1412 is configured to perform general-purpose parallel compute operations. For example, the processing cluster array 1412 can include logic to execute processing tasks including filtering of video and/or audio data, performing modeling operations, including physics operations, and performing data transformations.

The processing cluster array 1412 is configured to perform parallel graphics processing operations. In such examples in which the parallel processor 1400 is configured to perform graphics processing operations, the processing cluster array 1412 can include additional logic to support the execution of such graphics processing operations, including, but not limited to texture sampling logic to perform texture operations, as well as tessellation logic and other vertex processing logic. Additionally, the processing cluster array 1412 can be configured to execute graphics processing related shader programs such as, but not limited to vertex shaders, tessellation shaders, geometry shaders, and pixel shaders. The parallel processing unit 1402 can transfer data from system memory via the I/O unit 1404 for processing. The transferred data can be stored to on-chip memory (e.g., parallel processor memory 1422) during processing, then written back to system memory.

In examples in which the parallel processing unit 1402 is used to perform graphics processing, the scheduler 1410 may be configured to divide the processing workload into approximately equal sized tasks, to better enable distribution of the graphics processing operations to multiple clusters 1414A-1414N of the processing cluster array 1412. In some of these examples, portions of the processing cluster array 1412 can be configured to perform different types of processing. For example, a first portion may be configured to perform vertex shading and topology generation, a second portion may be configured to perform tessellation and geometry shading, and a third portion may be configured to perform pixel shading or other screen space operations, to produce a rendered image for display. Intermediate data produced by one or more of the clusters 1414A-1414N may be stored in buffers to allow the intermediate data to be transmitted between clusters 1414A-1414N for further processing.

During operation, the processing cluster array 1412 can receive processing tasks to be executed via the scheduler 1410, which receives commands defining processing tasks from front end 1408. For graphics processing operations, processing tasks can include indices of data to be processed, e.g., surface (patch) data, primitive data, vertex data, and/or pixel data, as well as state parameters and commands defining how the data is to be processed (e.g., what program is to be executed). The scheduler 1410 may be configured to fetch the indices corresponding to the tasks or may receive the indices from the front end 1408. The front end 1408 can be configured to ensure the processing cluster array 1412 is configured to a valid state before the workload specified by incoming command buffers (e.g., batch-buffers, push buffers, etc.) is initiated.

Each of the one or more instances of the parallel processing unit 1402 can couple with parallel processor memory 1422. The parallel processor memory 1422 can be accessed via the memory crossbar 1416, which can receive memory requests from the processing cluster array 1412 as well as the I/O unit 1404. The memory crossbar 1416 can access the parallel processor memory 1422 via a memory interface 1418. The memory interface 1418 can include multiple partition units (e.g., partition unit 1420A, partition unit 1420B, through partition unit 1420N) that can each couple to a portion (e.g., memory unit) of parallel processor memory 1422. The number of partition units 1420A-1420N may be configured to be equal to the number of memory units, such that a first partition unit 1420A has a corresponding first memory unit 1424A, a second partition unit 1420B has a corresponding second memory unit 1424B, and an Nth partition unit 1420N has a corresponding Nth memory unit 1424N. In other examples, the number of partition units 1420A-1420N may not be equal to the number of memory devices.

The memory units 1424A-1424N can include various types of memory devices, including dynamic random-access memory (DRAM) or graphics random access memory, such as synchronous graphics random access memory (SGRAM), including graphics double data rate (GDDR) memory. Optionally, the memory units 1424A-1424N may also include 3D stacked memory, including but not limited to high bandwidth memory (HBM). Persons skilled in the art will appreciate that the specific implementation of the memory units 1424A-1424N can vary and can be selected from one of various conventional designs. Render targets, such as frame buffers or texture maps may be stored across the memory units 1424A-1424N, allowing partition units 1420A-1420N to write portions of each render target in parallel to efficiently use the available bandwidth of parallel processor memory 1422. In some examples, a local instance of the parallel processor memory 1422 may be excluded in favor of a unified memory design that utilizes system memory in conjunction with local cache memory.

Optionally, any one of the clusters 1414A-1414N of the processing cluster array 1412 has the ability to process data that will be written to any of the memory units 1424A-1424N within parallel processor memory 1422. The memory crossbar 1416 can be configured to transfer the output of each cluster 1414A-1414N to any partition unit 1420A-1420N or to another cluster 1414A-1414N, which can perform additional processing operations on the output. Each cluster 1414A-1414N can communicate with the memory interface 1418 through the memory crossbar 1416 to read from or write to various external memory devices. In one of the examples with the memory crossbar 1416 the memory crossbar 1416 has a connection to the memory interface 1418 to communicate with the I/O unit 1404, as well as a connection to a local instance of the parallel processor memory 1422, enabling the processing units within the different processing clusters 1414A-1414N to communicate with system memory or other memory that is not local to the parallel processing unit 1402. Generally, the memory crossbar 1416 may, for example, be able to use virtual channels to separate traffic streams between the clusters 1414A-1414N and the partition units 1420A-1420N.

While a single instance of the parallel processing unit 1402 is illustrated within the parallel processor 1400, any number of instances of the parallel processing unit 1402 can be included. For example, multiple instances of the parallel processing unit 1402 can be provided on a single add-in card, or multiple add-in cards can be interconnected. For example, the parallel processor 1400 can be an add-in device, such as add-in device 1320 of FIG. 13, which may be a graphics card such as a discrete graphics card that includes one or more GPUs, one or more memory devices, and device-to-device or network or fabric interfaces. The different instances of the parallel processing unit 1402 can be configured to inter-operate even if the different instances have different numbers of processing cores, different amounts of local parallel processor memory, and/or other configuration differences. Optionally, some instances of the parallel processing unit 1402 can include higher precision floating point units relative to other instances. Systems incorporating one or more instances of the parallel processing unit 1402 or the parallel processor 1400 can be implemented in a variety of configurations and form factors, including but not limited to desktop, laptop, or handheld personal computers, servers, workstations, game consoles, and/or embedded systems. An orchestrator can form composite nodes for workload performance using one or more of: disaggregated processor resources, cache resources, memory resources, storage resources, and networking resources.

In some examples, the parallel processing unit 1402 can be partitioned into multiple instances. Those multiple instances can be configured to execute workloads associated with different clients in an isolated manner, enabling a pre-determined quality of service to be provided for each client. For example, each cluster 1414A-1414N can be compartmentalized and isolated from other clusters, allowing the processing cluster array 1412 to be divided into multiple compute partitions or instances. In such configuration, workloads that execute on an isolated partition are protected from faults or errors associated with a different workload that executes on a different partition. The partition units 1420A-1420N can be configured to enable a dedicated and/or isolated path to memory for the clusters 1414A-1414N associated with the respective compute partitions. This datapath isolation enables the compute resources within a partition can communicate with one or more assigned memory units 1424A-1424N without being subjected to inference by the activities of other partitions.

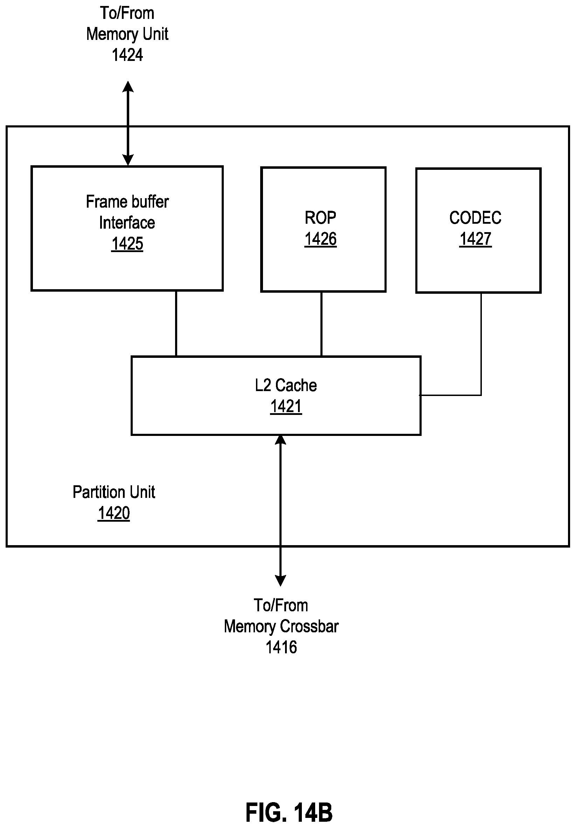

FIG. 14B is a block diagram of a partition unit 1420. The partition unit 1420 may be an instance of one of the partition units 1420A-1420N of FIG. 14A. As illustrated, the partition unit 1420 includes an L2 cache 1421, a frame buffer interface 1425, and a ROP 1426 (raster operations unit). The L2 cache 1421 is a read/write cache that is configured to perform load and store operations received from the memory crossbar 1416 and ROP 1426. Read misses and urgent write-back requests are output by L2 cache 1421 to frame buffer interface 1425 for processing. Updates can also be sent to the frame buffer via the frame buffer interface 1425 for processing. In some examples the frame buffer interface 1425 interfaces with one of the memory units in parallel processor memory, such as the memory units 1424A-1424N of FIG. 14A (e.g., within parallel processor memory 1422). The partition unit 1420 may additionally or alternatively also interface with one of the memory units in parallel processor memory via a memory controller (not shown).

In graphics applications, the ROP 1426 is a processing unit that performs raster operations such as stencil, z test, blending, and the like. The ROP 1426 then outputs processed graphics data that is stored in graphics memory. In some examples the ROP 1426 includes or couples with a CODEC 1427 that includes compression logic to compress depth or color data that is written to memory or the L2 cache 1421 and decompress depth or color data that is read from memory or the L2 cache 1421. The compression logic can be lossless compression logic that makes use of one or more of multiple compression algorithms. The type of compression that is performed by the CODEC 1427 can vary based on the statistical characteristics of the data to be compressed. For example, in some examples, delta color compression is performed on depth and color data on a per-tile basis. In some examples the CODEC 1427 includes compression and decompression logic that can compress and decompress compute data associated with machine learning operations. The CODEC 1427 can, for example, compress sparse matrix data for sparse machine learning operations. The CODEC 1427 can also compress sparse matrix data that is encoded in a sparse matrix format (e.g., coordinate list encoding (COO), compressed sparse row (CSR), compress sparse column (CSC), etc.) to generate compressed and encoded sparse matrix data. The compressed and encoded sparse matrix data can be decompressed and/or decoded before being processed by processing elements or the processing elements can be configured to consume compressed, encoded, or compressed and encoded data for processing.

The ROP 1426 may be included within each processing cluster (e.g., cluster 1414A-1414N of FIG. 14A) instead of within the partition unit 1420. In such example, read and write requests for pixel data are transmitted over the memory crossbar 1416 instead of pixel fragment data. The processed graphics data may be displayed on a display device, such as one of the one or more display device(s) 1310A-1310B of FIG. 13, routed for further processing by the processor(s) 1302, or routed for further processing by one of the processing entities within the parallel processor 1400 of FIG. 14A.

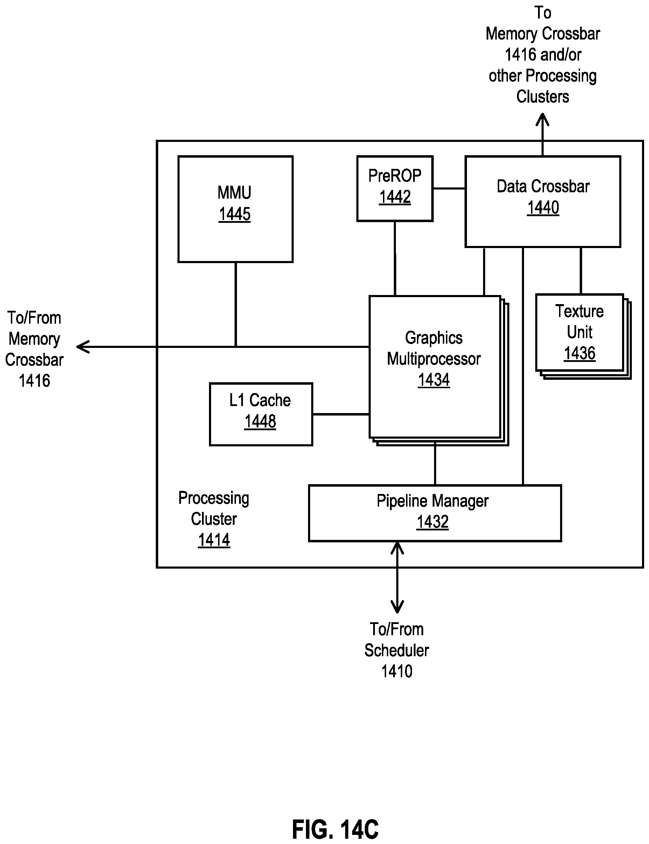

FIG. 14C is a block diagram of a processing cluster 1414 within a parallel processing unit. For example, the processing cluster is an instance of one of the processing clusters 1414A-1414N of FIG. 14A. The processing cluster 1414 can be configured to execute many threads in parallel, where the term "thread" refers to an instance of a particular program executing on a particular set of input data. Optionally, single-instruction, multiple-data (SIMD) instruction issue techniques may be used to support parallel execution of a large number of threads without providing multiple independent instruction units. Alternatively, single-instruction, multiplethread (SIMT) techniques may be used to support parallel execution of a large number of generally synchronized threads, using a common instruction unit configured to issue instructions to a set of processing engines within each one of the processing clusters. Unlike a SIMD execution regime, where all processing engines typically execute identical instructions, SIMT execution allows different threads to more readily follow divergent execution paths through a given thread program. Persons skilled in the art will understand that a SIMD processing regime represents a functional subset of a SIMT processing regime.

Operation of the processing cluster 1414 can be controlled via a pipeline manager 1432 that distributes processing tasks to SIMT parallel processors. The pipeline manager 1432 receives instructions from the scheduler 1410 of FIG. 14A and manages execution of those instructions via a graphics multiprocessor 1434 and/or a texture unit 1436. The illustrated graphics multiprocessor 1434 is an exemplary instance of a SIMT parallel processor. However, various types of SIMT parallel processors of differing architectures may be included within the processing cluster 1414. One or more instances of the graphics multiprocessor 1434 can be included within a processing cluster 1414. The graphics multiprocessor 1434 can process data and a data crossbar 1440 can be used to distribute the processed data to one of multiple possible destinations, including other shader units. The pipeline manager 1432 can facilitate the distribution of processed data by specifying destinations for processed data to be distributed via the data crossbar 1440.

Each graphics multiprocessor 1434 within the processing cluster 1414 can include an identical set of functional execution logic (e.g., arithmetic logic units, load-store units, etc.). The functional execution logic can be configured in a pipelined manner in which new instructions can be issued before previous instructions are complete. The functional execution logic supports a variety of operations including integer and floating-point arithmetic, comparison operations, Boolean operations, bit-shifting, and computation of various algebraic functions. The same functional-unit hardware could be leveraged to perform different operations and any combination of functional units may be present.

The instructions transmitted to the processing cluster 1414 constitute a thread. A set of threads executing across the set of parallel processing engines is a thread group. A thread group executes the same program on different input data. Each thread within a thread group can be assigned to a different processing engine within a graphics multiprocessor 1434. A thread group may include fewer threads than the number of processing engines within the graphics multiprocessor 1434. When a thread group includes fewer threads than the number of processing engines, one or more of the processing engines may be idle during cycles in which that thread group is being processed. A thread group may also include more threads than the number of processing engines within the graphics multiprocessor 1434. When the thread group includes more threads than the number of processing engines within the graphics multiprocessor 1434, processing can be performed over consecutive clock cycles. Optionally, multiple thread groups can be executed concurrently on the graphics multiprocessor 1434.

The graphics multiprocessor 1434 may include an internal cache memory to perform load and store operations. Optionally, the graphics multiprocessor 1434 can forego an internal cache and use a cache memory (e.g., level 1 (L1) cache 1448) within the processing cluster 1414. Each graphics multiprocessor 1434 also has access to level 2 (L2) caches within the partition units (e.g., partition units 1420A-1420N of FIG. 14A) that are shared among all processing clusters 1414 and may be used to transfer data between threads. The graphics multiprocessor 1434 may also access off-chip global memory, which can include one or more of local parallel processor memory and/or system memory. Any memory external to the parallel processing unit 1402 may be used as global memory. Examples in which the processing cluster 1414 includes multiple instances of the graphics multiprocessor 1434 can share common instructions and data, which may be stored in the L1 cache 1448.

Each processing cluster 1414 may include an MMU 1445 (memory management unit) that is configured to map virtual addresses into physical addresses. In other examples, one or more instances of the MMU 1445 may reside within the memory interface 1418 of FIG. 14A. The MMU 1445 includes a set of page table entries (PTEs) used to map a virtual address to a physical address of a tile and optionally a cache line index. The MMU 1445 may include address translation lookaside buffers (TLB) or caches that may reside within the graphics multiprocessor 1434 or the L1 cache 1448 of processing cluster 1414. The physical address is processed to distribute surface data access locality to allow efficient request interleaving among partition units. The cache line index may be used to determine whether a request for a cache line is a hit or miss.

In graphics and computing applications, a processing cluster 1414 may be configured such that each graphics multiprocessor 1434 is coupled to a texture unit 1436 for performing texture mapping operations, e.g., determining texture sample positions, reading texture data, and filtering the texture data. Texture data is read from an internal texture L1 cache (not shown) or in some examples from the L1 cache within graphics multiprocessor 1434 and is fetched from an L2 cache, local parallel processor memory, or system memory, as needed. Each graphics multiprocessor 1434 outputs processed tasks to the data crossbar 1440 to provide the processed task to another processing cluster 1414 for further processing or to store the processed task in an L2 cache, local parallel processor memory, or system memory via the memory crossbar 1416. A preROP 1442 (pre-raster operations unit) is configured to receive data from graphics multiprocessor 1434, direct data to ROP units, which may be located with partition units as described herein (e.g., partition units 1420A-1420N of FIG. 14A). The preROP 1442 unit can perform optimizations for color blending, organize pixel color data, and perform address translations.

It will be appreciated that the core architecture described herein is illustrative and that variations and modifications are possible. Any number of processing units, e.g., graphics multiprocessor 1434, texture units 1436, preROPs 1442, etc., may be included within a processing cluster 1414. Further, while only one processing cluster 1414 is shown, a parallel processing unit as described herein may include any number of instances of the processing cluster 1414. Optionally, each processing cluster 1414 can be configured to operate independently of other processing clusters 1414 using separate and distinct processing units, L1 caches, L2 caches, etc.

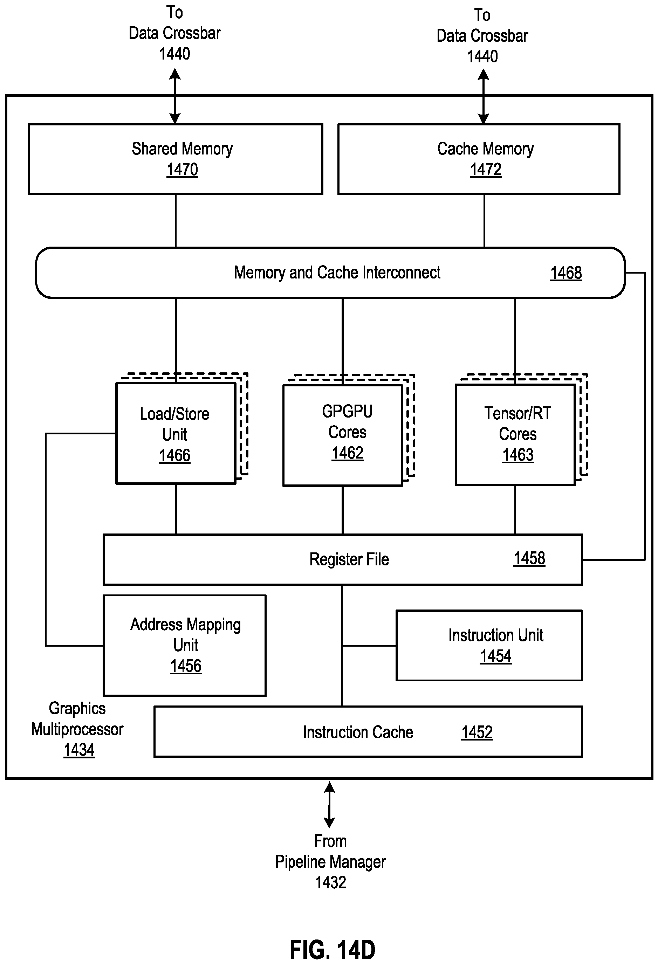

FIG. 14D shows an example of the graphics multiprocessor 1434 in which the graphics multiprocessor 1434 couples with the pipeline manager 1432 of the processing cluster 1414. The graphics multiprocessor 1434 has an execution pipeline including but not limited to an instruction cache 1452, an instruction unit 1454, an address mapping unit 1456, a register file 1458, one or more general purpose graphics processing unit (GPGPU) cores 1462, and one or more load/store units 1466. The GPGPU cores 1462 and load/store units 1466 are coupled with cache memory 1472 and shared memory 1470 via a memory and cache interconnect 1468. The graphics multiprocessor 1434 may additionally include tensor and/or ray-tracing cores 1463 that include hardware logic to accelerate matrix and/or ray-tracing operations.

The instruction cache 1452 may receive a stream of instructions to execute from the pipeline manager 1432. The instructions are cached in the instruction cache 1452 and dispatched for execution by the instruction unit 1454. The instruction unit 1454 can dispatch instructions as thread groups (e.g., warps), with each thread of the thread group assigned to a different execution unit within GPGPU core 1462. An instruction can access any of a local, shared, or global address space by specifying an address within a unified address space. The address mapping unit 1456 can be used to translate addresses in the unified address space into a distinct memory address that can be accessed by the load/store units 1466.

The register file 1458 provides a set of registers for the functional units of the graphics multiprocessor 1434. The register file 1458 provides temporary storage for operands connected to the data paths of the functional units (e.g., GPGPU cores 1462, load/store units 1466) of the graphics multiprocessor 1434. The register file 1458 may be divided between each of the functional units such that each functional unit is allocated a dedicated portion of the register file 1458. For example, the register file 1458 may be divided between the different warps being executed by the graphics multiprocessor 1434.

The GPGPU cores 1462 can each include floating point units (FPUs) and/or integer arithmetic logic units (ALUs) that are used to execute instructions of the graphics multiprocessor 1434. In some implementations, the GPGPU cores 1462 can include hardware logic that may otherwise reside within the tensor and/or ray-tracing cores 1463. The GPGPU cores 1462 can be similar in architecture or can differ in architecture. For example and in some examples, a first portion of the GPGPU cores 1462 include a single precision FPU and an integer ALU while a second portion of the GPGPU cores include a double precision FPU. Optionally, the FPUs can implement the IEEE 754-2008 standard for floating point arithmetic or enable variable precision floating point arithmetic. The graphics multiprocessor 1434 can additionally include one or more fixed function or special function units to perform specific functions such as copy rectangle or pixel blending operations. One or more of the GPGPU cores can also include fixed or special function logic.

The GPGPU cores 1462 may include SIMD logic capable of performing a single instruction on multiple sets of data. Optionally, GPGPU cores 1462 can physically execute SIMD4, SIMD8, and SIMD16 instructions and logically execute SIMD1, SIMD2, and SIMD32 instructions. The SIMD instructions for the GPGPU cores can be generated at compile time by a shader compiler or automatically generated when executing programs written and compiled for single program multiple data (SPMD) or SIMT architectures. Multiple threads of a program configured for the SIMT execution model can be executed via a single SIMD instruction. For example and in some examples, eight SIMT threads that perform the same or similar operations can be executed in parallel via a single SIMD8 logic unit.

The memory and cache interconnect 1468 is an interconnect network that connects each of the functional units of the graphics multiprocessor 1434 to the register file 1458 and to the shared memory 1470. For example, the memory and cache interconnect 1468 is a crossbar interconnect that allows the load/store unit 1466 to implement load and store operations between the shared memory 1470 and the register file 1458. The register file 1458 can operate at the same frequency as the GPGPU cores 1462, thus data transfer between the GPGPU cores 1462 and the register file 1458 is very low latency. The shared memory 1470 can be used to enable communication between threads that execute on the functional units within the graphics multiprocessor 1434. The cache memory 1472 can be used as a data cache for example, to cache texture data communicated between the functional units and the texture unit 1436. The shared memory 1470 can also be used as a program managed cached. The shared memory 1470 and the cache memory 1472 can couple with the data crossbar 1440 to enable communication with other components of the processing cluster. Threads executing on the GPGPU cores 1462 can programmatically store data within the shared memory in addition to the automatically cached data that is stored within the cache memory 1472.

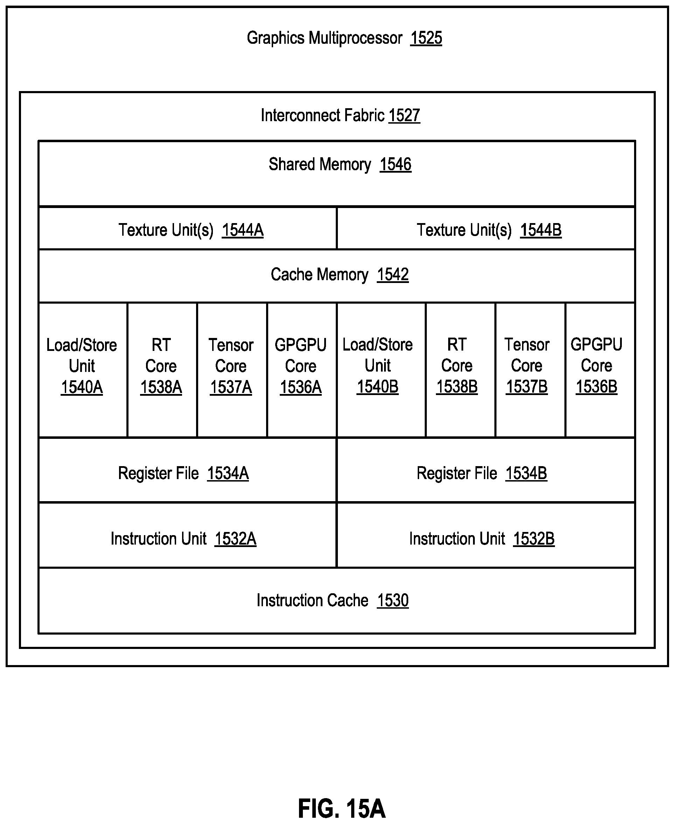

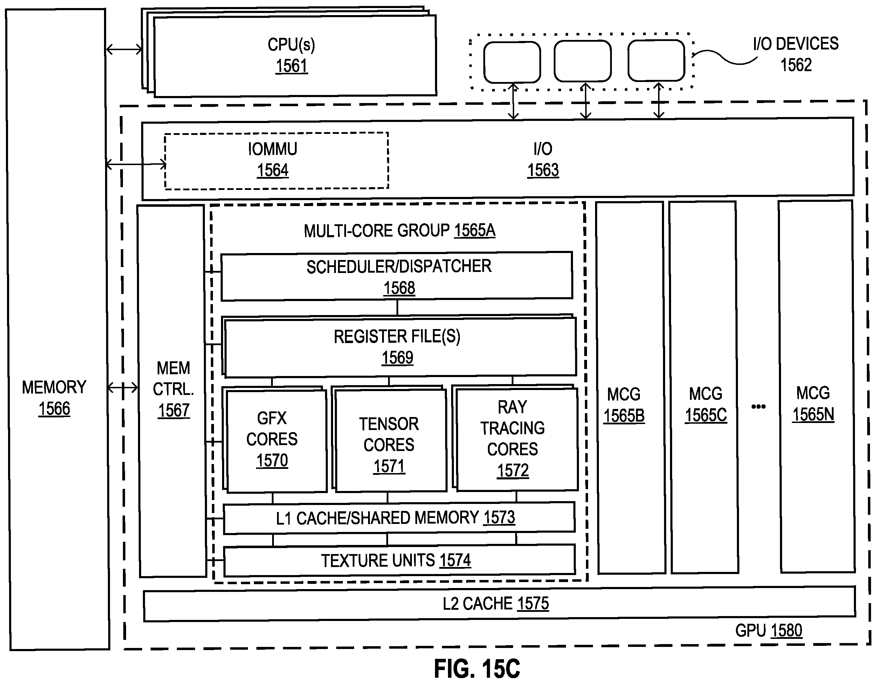

FIGS. 15A-15C illustrate additional graphics multiprocessors, according to examples. FIG. 15A-15B illustrate graphics multiprocessors 1525, 1550, which are related to the graphics multiprocessor 1434 of FIG. 14C and may be used in place of one of those. Therefore, the disclosure of any features in combination with the graphics multiprocessor 1434 herein also discloses a corresponding combination with the graphics multiprocessor(s) 1525, 1550, but is not limited to such. FIG. 15C illustrates a graphics processing unit (GPU) 1580 which includes dedicated sets of graphics processing resources arranged into multi-core groups 1565A-1565N, which correspond to the graphics multiprocessors 1525, 1550. The illustrated graphics multiprocessors 1525, 1550 and the multi-core groups 1565A-1565N can be streaming multiprocessors (SM) capable of simultaneous execution of a large number of execution threads.

The graphics multiprocessor 1525 of FIG. 15A includes multiple additional instances of execution resource units relative to the graphics multiprocessor 1434 of FIG. 14D. For example, the graphics multiprocessor 1525 can include multiple instances of the instruction unit 1532A-1532B, register file 1534A-1534B, and texture unit(s) 1544A-1544B. The graphics multiprocessor 1525 also includes multiple sets of graphics or compute execution units (e.g., GPGPU core 1536A-1536B, tensor core 1537A-1537B, ray-tracing core 1538A-1538B) and multiple sets of load/store units 1540A-1540B. The execution resource units have a common instruction cache 1530, texture and/or data cache memory 1542, and shared memory 1546.

The various components can communicate via an interconnect fabric 1527. The interconnect fabric 1527 may include one or more crossbar switches to enable communication between the various components of the graphics multiprocessor 1525. The interconnect fabric 1527 may be a separate, high-speed network fabric layer upon which each component of the graphics multiprocessor 1525 is stacked. The components of the graphics multiprocessor 1525 communicate with remote components via the interconnect fabric 1527. For example, the cores 1536A-1536B, 1537A-1537B, and 1538A-1538B can each communicate with shared memory 1546 via the interconnect fabric 1527. The interconnect fabric 1527 can arbitrate communication within the graphics multiprocessor 1525 to ensure a fair bandwidth allocation between components.

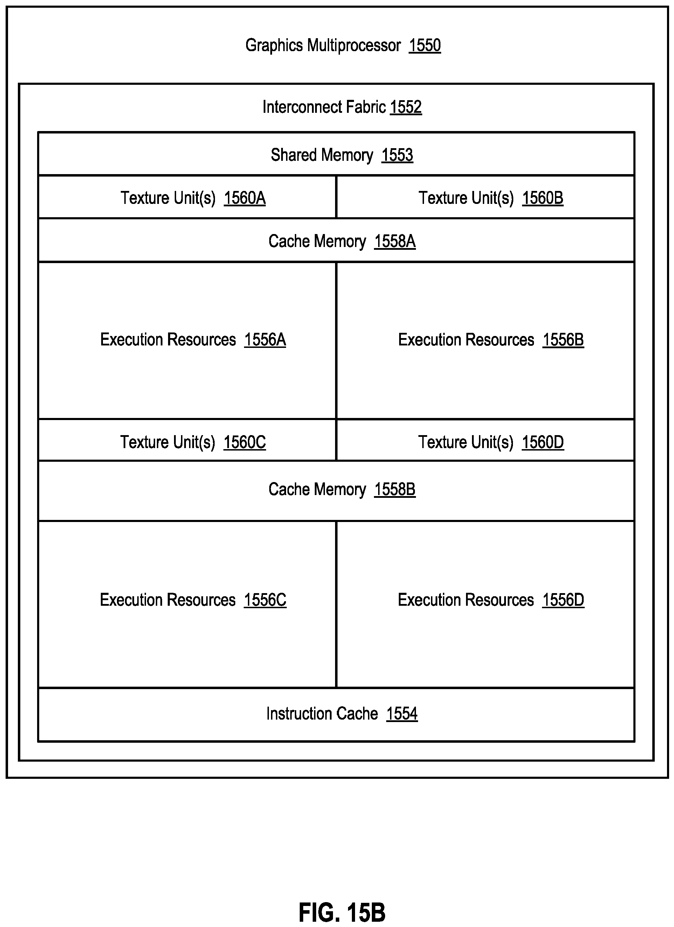

The graphics multiprocessor 1550 of FIG. 15B includes multiple sets of execution resources 1556A-1556D, where each set of execution resource includes multiple instruction units, register files, GPGPU cores, and load store units, as illustrated in FIG. 14D and FIG. 15A. The execution resources 1556A-1556D can work in concert with texture unit(s) 1560A-1560D for texture operations, while sharing an instruction cache 1554, and shared memory 1553. For example, the execution resources 1556A-1556D can share an instruction cache 1554 and shared memory 1553, as well as multiple instances of a texture and/or data cache memory 1558A-1558B. The various components can communicate via an interconnect fabric 1552 similar to the interconnect fabric 1527 of FIG. 15A.

Persons skilled in the art will understand that the architecture described in FIG. 1, 14A-14D, and 15A-15B are descriptive and not limiting as to the scope of the present examples. Thus, the techniques described herein may be implemented on any properly configured processing unit, including, without limitation, one or more mobile application processors, one or more desktop or server central processing units (CPUs) including multi-core CPUs, one or more parallel processing units, such as the parallel processing unit 1402 of FIG. 14A, as well as one or more graphics processors or special purpose processing units, without departure from the scope of the examples described herein.

The parallel processor or GPGPU as described herein may be communicatively coupled to host/processor cores to accelerate graphics operations, machine-learning operations, pattern analysis operations, and various general-purpose GPU (GPGPU) functions. The GPU may be communicatively coupled to the host processor/cores over a bus or other interconnect (e.g., a high-speed interconnect such as PCIe, NVLink, or other known protocols, standardized protocols, or proprietary protocols). In other examples, the GPU may be integrated on the same package or chip as the cores and communicatively coupled to the cores over an internal processor bus/interconnect (i.e., internal to the package or chip). Regardless of the manner in which the GPU is connected, the processor cores may allocate work to the GPU in the form of sequences of commands/instructions contained in a work descriptor. The GPU then uses dedicated circuitry/logic for efficiently processing these commands/instructions.

FIG. 15C illustrates a graphics processing unit (GPU) 1580 which includes dedicated sets of graphics processing resources arranged into multi-core groups 1565A-1565N. While the details of only a single multi-core group 1565A are provided, it will be appreciated that the other multi-core groups 1565B-1565N may be equipped with the same or similar sets of graphics processing resources. Details described with respect to the multi-core groups 1565A-1565N may also apply to any graphics multiprocessor 1434, 1525, 1550 described herein.

As illustrated, a multi-core group 1565A may include a set of graphics cores 1570, a set of tensor cores 1571, and a set of ray tracing cores 1572. A scheduler/dispatcher 1568 schedules and dispatches the graphics threads for execution on the various cores 1570, 1571, 1572. A set of register files 1569 store operand values used by the cores 1570, 1571, 1572 when executing the graphics threads. These may include, for example, integer registers for storing integer values, floating point registers for storing floating point values, vector registers for storing packed data elements (integer and/or floating-point data elements) and tile registers for storing tensor/matrix values. The tile registers may be implemented as combined sets of vector registers.

One or more combined level 1 (L1) caches and shared memory units 1573 store graphics data such as texture data, vertex data, pixel data, ray data, bounding volume data, etc., locally within each multi-core group 1565A. One or more texture units 1574 can also be used to perform texturing operations, such as texture mapping and sampling. A Level 2 (L2) cache 1575 shared by all or a subset of the multi-core groups 1565A-1565N stores graphics data and/or instructions for multiple concurrent graphics threads. As illustrated, the L2 cache 1575 may be shared across a plurality of multi-core groups 1565A-1565N. One or more memory controllers 1567 couple the GPU 1580 to a memory 1566 which may be a system memory (e.g., DRAM) and/or a dedicated graphics memory (e.g., GDDR6 memory).

Input/output (I/O) circuitry 1563 couples the GPU 1580 to one or more I/O devices 1562 such as digital signal processors (DSPs), network controllers, or user input devices. An on-chip interconnect may be used to couple the I/O devices 1562 to the GPU 1580 and memory 1566. One or more I/O memory management units (IOMMUs) 1564 of the I/O circuitry 1563 couple the I/O devices 1562 directly to the system memory 1566. Optionally, the IOMMU 1564 manages multiple sets of page tables to map virtual addresses to physical addresses in system memory 1566. The I/O devices 1562, CPU(s) 1561, and GPU(s) 1580 may then share the same virtual address space.

In one implementation of the IOMMU 1564, the IOMMU 1564 supports virtualization. In this case, it may manage a first set of page tables to map guest/graphics virtual addresses to guest/graphics physical addresses and a second set of page tables to map the guest/graphics physical addresses to system/host physical addresses (e.g., within system memory 1566). The base addresses of each of the first and second sets of page tables may be stored in control registers and swapped out on a context switch (e.g., so that the new context is provided with access to the relevant set of page tables). While not illustrated in FIG. 15C, each of the cores 1570, 1571, 1572 and/or multi-core groups 1565A-1565N may include translation lookaside buffers (TLBs) to cache guest virtual to guest physical translations, guest physical to host physical translations, and guest virtual to host physical translations.

The CPU(s) 1561, GPUs 1580, and I/O devices 1562 may be integrated on a single semiconductor chip and/or chip package. The illustrated memory 1566 may be integrated on the same chip or may be coupled to the memory controllers 1567 via an off-chip interface. In one implementation, the memory 1566 comprises GDDR6 memory which shares the same virtual address space as other physical system-level memories, although the underlying principles described herein are not limited to this specific implementation.

The tensor cores 1571 may include a plurality of execution units specifically designed to perform matrix operations, which are the fundamental compute operation used to perform deep learning operations. For example, simultaneous matrix multiplication operations may be used for neural network training and inferencing. The tensor cores 1571 may perform matrix processing using a variety of operand precisions including single precision floating-point (e.g., 32 bits), halfprecision floating point (e.g., 16 bits), integer words (16 bits), bytes (8 bits), and half-bytes (4 bits). For example, a neural network implementation extracts features of each rendered scene, potentially combining details from multiple frames, to construct a high-quality final image.

In deep learning implementations, parallel matrix multiplication work may be scheduled for execution on the tensor cores 1571. The training of neural networks, in particular, requires a significant number of matrix dot product operations. In order to process an innerproduct formulation of an N x N x N matrix multiply, the tensor cores 1571 may include at least N dot-product processing elements. Before the matrix multiply begins, one entire matrix is loaded into tile registers and at least one column of a second matrix is loaded each cycle for N cycles. Each cycle, there are N dot products that are processed.

Matrix elements may be stored at different precisions depending on the particular implementation, including 16-bit words, 8-bit bytes (e.g., INT8) and 4-bit half-bytes (e.g., INT4). Different precision modes may be specified for the tensor cores 1571 to ensure that the most efficient precision is used for different workloads (e.g., such as inferencing workloads which can tolerate quantization to bytes and half-bytes). Supported formats additionally include 64-bit floating point (FP64) and non-IEEE floating point formats such as the bfloat16 format (e.g., Brain floating point), a 16-bit floating point format with one sign bit, eight exponent bits, and eight significand bits, of which seven are explicitly stored. One example includes support for a reduced precision tensor-float (TF32) mode, which performs computations using the range of FP32 (8-bits) and the precision of FP16 (10-bits). Reduced precision TF32 operations can be performed on FP32 inputs and produce FP32 outputs at higher performance relative to FP32 and increased precision relative to FP16. In some examples, one or more 8-bit floating point formats (FP8) are supported.

In some examples the tensor cores 1571 support a sparse mode of operation for matrices in which the vast majority of values are zero. The tensor cores 1571 include support for sparse input matrices that are encoded in a sparse matrix representation (e.g., coordinate list encoding (COO), compressed sparse row (CSR), compress sparse column (CSC), etc.). The tensor cores 1571 also include support for compressed sparse matrix representations in the event that the sparse matrix representation may be further compressed. Compressed, encoded, and/or compressed and encoded matrix data, along with associated compression and/or encoding metadata, can be read by the tensor cores 1571 and the non-zero values can be extracted. For example, for a given input matrix A, a non-zero value can be loaded from the compressed and/or encoded representation of at least a portion of matrix A. Based on the location in matrix A for the non-zero value, which may be determined from index or coordinate metadata associated with the non-zero value, a corresponding value in input matrix B may be loaded. Depending on the operation to be performed (e.g., multiply), the load of the value from input matrix B may be bypassed if the corresponding value is a zero value. In some examples, the pairings of values for certain operations, such as multiply operations, may be pre-scanned by scheduler logic and only operations between non-zero inputs are scheduled. Depending on the dimensions of matrix A and matrix B and the operation to be performed, output matrix C may be dense or sparse. Where output matrix C is sparse and depending on the configuration of the tensor cores 1571, output matrix C may be output in a compressed format, a sparse encoding, or a compressed sparse encoding.

The ray tracing cores 1572 may accelerate ray tracing operations for both real-time ray tracing and non-real-time ray tracing implementations. In particular, the ray tracing cores 1572 may include ray traversal/intersection circuitry for performing ray traversal using bounding volume hierarchies (BVHs) and identifying intersections between rays and primitives enclosed within the BVH volumes. The ray tracing cores 1572 may also include circuitry for performing depth testing and culling (e.g., using a Z buffer or similar arrangement). In one implementation, the ray tracing cores 1572 perform traversal and intersection operations in concert with the image denoising techniques described herein, at least a portion of which may be executed on the tensor cores 1571. For example, the tensor cores 1571 may implement a deep learning neural network to perform denoising of frames generated by the ray tracing cores 1572. However, the CPU(s) 1561, graphics cores 1570, and/or ray tracing cores 1572 may also implement all or a portion of the denoising and/or deep learning algorithms.

In addition, as described above, a distributed approach to denoising may be employed in which the GPU 1580 is in a computing device coupled to other computing devices over a network or high-speed interconnect. In this distributed approach, the interconnected computing devices may share neural network learning/training data to improve the speed with which the overall system learns to perform denoising for different types of image frames and/or different graphics applications.

The ray tracing cores 1572 may process all BVH traversal and/or ray-primitive intersections, saving the graphics cores 1570 from being overloaded with thousands of instructions per ray. For example, each ray tracing core 1572 includes a first set of specialized circuitry for performing bounding box tests (e.g., for traversal operations) and/or a second set of specialized circuitry for performing the ray-triangle intersection tests (e.g., intersecting rays which have been traversed). Thus, for example, the multi-core group 1565A can simply launch a ray probe, and the ray tracing cores 1572 independently perform ray traversal and intersection and return hit data (e.g., a hit, no hit, multiple hits, etc.) to the thread context. The other cores 1570, 1571 are freed to perform other graphics or compute work while the ray tracing cores 1572 perform the traversal and intersection operations.

Optionally, each ray tracing core 1572 may include a traversal unit to perform BVH testing operations and/or an intersection unit which performs ray-primitive intersection tests. The intersection unit generates a "hit", "no hit", or "multiple hit" response, which it provides to the appropriate thread. During the traversal and intersection operations, the execution resources of the other cores (e.g., graphics cores 1570 and tensor cores 1571) are freed to perform other forms of graphics work.

In some examples described below, a hybrid rasterization/ray tracing approach is used in which work is distributed between the graphics cores 1570 and ray tracing cores 1572.

The ray tracing cores 1572 (and/or other cores 1570, 1571) may include hardware support for a ray tracing instruction set such as Microsoft's DirectX Ray Tracing (DXR) which includes a DispatchRays command, as well as ray-generation, closest-hit, any-hit, and miss shaders, which enable the assignment of unique sets of shaders and textures for each object. Another ray tracing platform which may be supported by the ray tracing cores 1572, graphics cores 1570 and tensor cores 1571 is Vulkan API (e.g., Vulkan version 1.1.85 and later). Note, however, that the underlying principles described herein are not limited to any particular ray tracing ISA.

In general, the various cores 1572, 1571, 1570 may support a ray tracing instruction set that includes instructions/functions for one or more of ray generation, closest hit, any hit, ray-primitive intersection, per-primitive and hierarchical bounding box construction, miss, visit, and exceptions. More specifically, some examples includes ray tracing instructions to perform one or more of the following functions:
- Ray Generation - Ray generation instructions may be executed for each pixel, sample, or other user-defined work assignment.
- Closest Hit - A closest hit instruction may be executed to locate the closest intersection point of a ray with primitives within a scene.
- Any Hit - An any hit instruction identifies multiple intersections between a ray and primitives within a scene, potentially to identify a new closest intersection point.
- Intersection - An intersection instruction performs a ray-primitive intersection test and outputs a result.
- Per-primitive Bounding box Construction - This instruction builds a bounding box around a given primitive or group of primitives (e.g., when building a new BVH or other acceleration data structure).
- Miss - Indicates that a ray misses all geometry within a scene, or specified region of a scene.
- Visit - Indicates the child volumes a ray will traverse.
- Exceptions - Includes various types of exception handlers (e.g., invoked for various error conditions).

In some examples the ray tracing cores 1572 may be adapted to accelerate general-purpose compute operations that can be accelerated using computational techniques that are analogous to ray intersection tests. A compute framework can be provided that enables shader programs to be compiled into low level instructions and/or primitives that perform general-purpose compute operations via the ray tracing cores. Exemplary computational problems that can benefit from compute operations performed on the ray tracing cores 1572 include computations involving beam, wave, ray, or particle propagation within a coordinate space. Interactions associated with that propagation can be computed relative to a geometry or mesh within the coordinate space. For example, computations associated with electromagnetic signal propagation through an environment can be accelerated via the use of instructions or primitives that are executed via the ray tracing cores. Diffraction and reflection of the signals by objects in the environment can be computed as direct ray-tracing analogies.

Ray tracing cores 1572 can also be used to perform computations that are not directly analogous to ray tracing. For example, mesh projection, mesh refinement, and volume sampling computations can be accelerated using the ray tracing cores 1572. Generic coordinate space calculations, such as nearest neighbor calculations can also be performed. For example, the set of points near a given point can be discovered by defining a bounding box in the coordinate space around the point. BVH and ray probe logic within the ray tracing cores 1572 can then be used to determine the set of point intersections within the bounding box. The intersections constitute the origin point and the nearest neighbors to that origin point. Computations that are performed using the ray tracing cores 1572 can be performed in parallel with computations performed on the graphics cores 1572 and tensor cores 1571. A shader compiler can be configured to compile a compute shader or other general-purpose graphics processing program into low level primitives that can be parallelized across the graphics cores 1570, tensor cores 1571, and ray tracing cores 1572.

Building larger and larger silicon dies is challenging for a variety of reasons. As silicon dies become larger, manufacturing yields become smaller and process technology requirements for different components may diverge. On the other hand, in order to have a high-performance system, key components should be interconnected by high speed, high bandwidth, low latency interfaces. These contradicting needs pose a challenge to high performance chip development.

Examples described herein provide techniques to disaggregate an architecture of a system on a chip integrated circuit into multiple distinct chiplets that can be packaged onto a common chassis. In some examples, a graphics processing unit or parallel processor is composed from diverse silicon chiplets that are separately manufactured. A chiplet is an at least partially packaged integrated circuit that includes distinct units of logic that can be assembled with other chiplets into a larger package. A diverse set of chiplets with different IP core logic can be assembled into a single device. Additionally the chiplets can be integrated into a base die or base chiplet using active interposer technology. The concepts described herein enable the interconnection and communication between the different forms of IP within the GPU. The development of IPs on different process may be mixed. This avoids the complexity of converging multiple IPs, especially on a large SoC with several flavors IPs, to the same process.

Enabling the use of multiple process technologies improves the time to market and provides a cost-effective way to create multiple product SKUs. For customers, this means getting products that are more tailored to their requirements in a cost effective and timely manner. Additionally, the disaggregated IPs are more amenable to being power gated independently, components that are not in use on a given workload can be powered off, reducing overall power consumption.

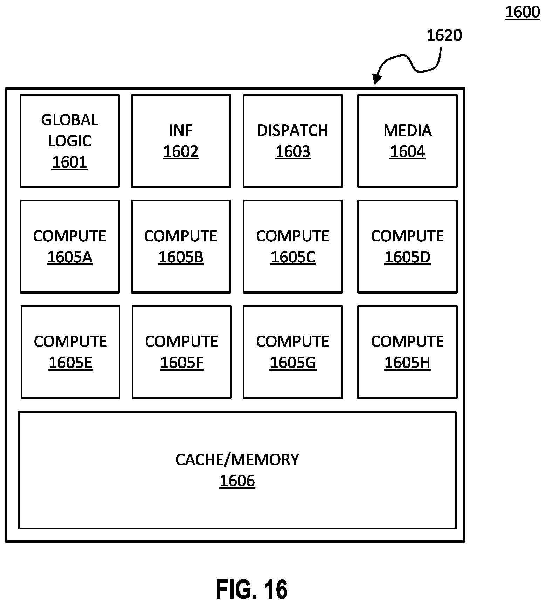

FIG. 16 shows a parallel compute system 1600, according to some examples. In some examples the parallel compute system 1600 includes a parallel processor 1620, which can be a graphics processor or compute accelerator as described herein. The parallel processor 1620 includes a global logic unit 1601, an interface 1602, a thread dispatcher 1603, a media unit 1604, a set of compute units 1605A-1605H, and a cache/memory units 1606. The global logic unit 1601, in some examples, includes global functionality for the parallel processor 1620, including device configuration registers, global schedulers, power management logic, and the like. The interface 1602 can include a front-end interface for the parallel processor 1620. The thread dispatcher 1603 can receive workloads from the interface 1602 and dispatch threads for the workload to the compute units 1605A-1605H. If the workload includes any media operations, at least a portion of those operations can be performed by the media unit 1604. The media unit can also offload some operations to the compute units 1605A-1605H. The cache/memory units 1606 can include cache memory (e.g., L3 cache) and local memory (e.g., HBM, GDDR) for the parallel processor 1620.

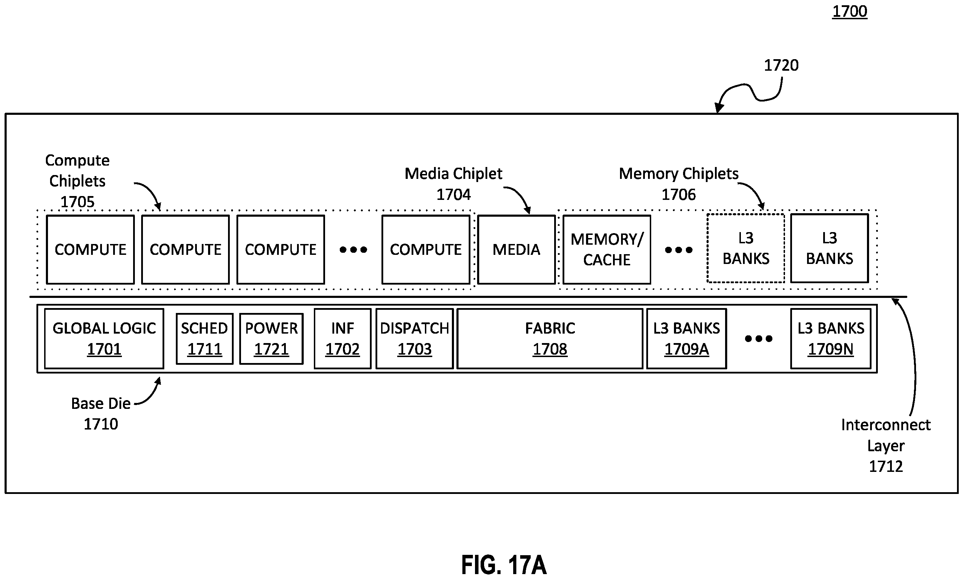

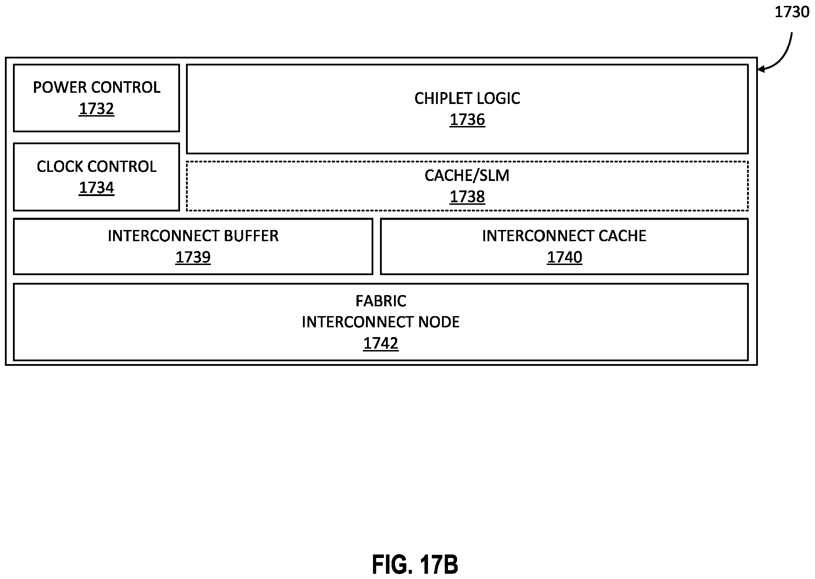

FIGS. 17A-17B illustrate a hybrid logical/physical view of a disaggregated parallel processor, according to examples described herein. FIG. 17A illustrates a disaggregated parallel compute system 1700. FIG. 17B illustrates a chiplet 1730 of the disaggregated parallel compute system 1700.

As shown in FIG. 17A, a disaggregated compute system 1700 can include a parallel processor 1720 in which the various components of the parallel processor SOC are distributed across multiple chiplets. Each chiplet can be a distinct IP core that is independently designed and configured to communicate with other chiplets via one or more common interfaces. The chiplets include but are not limited to compute chiplets 1705, a media chiplet 1704, and memory chiplets 1706. Each chiplet can be separately manufactured using different process technologies. For example, compute chiplets 1705 may be manufactured using the smallest or most advanced process technology available at the time of fabrication, while memory chiplets 1706 or other chiplets (e.g., I/O, networking, etc.) may be manufactured using a larger or less advanced process technologies.

The various chiplets can be bonded to a base die 1710 and configured to communicate with each other and logic within the base die 1710 via an interconnect layer 1712. In some examples, the base die 1710 can include global logic 1701, which can include scheduler 1711 and power management 1721 logic units, an interface 1702, a dispatch unit 1703, and an interconnect fabric module 1708 coupled with or integrated with one or more L3 cache banks 1709A-1709N. The interconnect fabric 1708 can be an inter-chiplet fabric that is integrated into the base die 1710. Logic chiplets can use the fabric 1708 to relay messages between the various chiplets. Additionally, L3 cache banks 1709A-1709N in the base die and/or L3 cache banks within the memory chiplets 1706 can cache data read from and transmitted to DRAM chiplets within the memory chiplets 1706 and to system memory of a host.

In some examples the global logic 1701 is a microcontroller that can execute firmware to perform scheduler 1711 and power management 1721 functionality for the parallel processor 1720. The microcontroller that executes the global logic can be tailored for the target use case of the parallel processor 1720. The scheduler 1711 can perform global scheduling operations for the parallel processor 1720. The power management 1721 functionality can be used to enable or disable individual chiplets within the parallel processor when those chiplets are not in use.

The various chiplets of the parallel processor 1720 can be designed to perform specific functionality that, in existing designs, would be integrated into a single die. A set of compute chiplets 1705 can include clusters of compute units (e.g., execution units, streaming multiprocessors, etc.) that include programmable logic to execute compute or graphics shader instructions. A media chiplet 1704 can include hardware logic to accelerate media encode and decode operations. Memory chiplets 1706 can include volatile memory (e.g., DRAM) and one or more SRAM cache memory banks (e.g., L3 banks).

As shown in FIG. 17B, each chiplet 1730 can include common components and application specific components. Chiplet logic 1736 within the chiplet 1730 can include the specific components of the chiplet, such as an array of streaming multiprocessors, compute units, or execution units described herein. The chiplet logic 1736 can couple with an optional cache or shared local memory 1738 or can include a cache or shared local memory within the chiplet logic 1736. The chiplet 1730 can include a fabric interconnect node 1742 that receives commands via the inter-chiplet fabric. Commands and data received via the fabric interconnect node 1742 can be stored temporarily within an interconnect buffer 1739. Data transmitted to and received from the fabric interconnect node 1742 can be stored in an interconnect cache 1740. Power control 1732 and clock control 1734 logic can also be included within the chiplet. The power control 1732 and clock control 1734 logic can receive configuration commands via the fabric can configure dynamic voltage and frequency scaling for the chiplet 1730. In some examples, each chiplet can have an independent clock domain and power domain and can be clock gated and power gated independently of other chiplets.

At least a portion of the components within the illustrated chiplet 1730 can also be included within logic embedded within the base die 1710 of FIG. 17A. For example, logic within the base die that communicates with the fabric can include a version of the fabric interconnect node 1742. Base die logic that can be independently clock or power gated can include a version of the power control 1732 and/or clock control 1734 logic.

Thus, while various examples described herein use the term SOC to describe a device or system having a processor and associated circuitry (e.g., Input/Output ("I/O") circuitry, power delivery circuitry, memory circuitry, etc.) integrated monolithically into a single Integrated Circuit ("IC") die, or chip, the present disclosure is not limited in that respect. For example, in various examples of the present disclosure, a device or system can have one or more processors (e.g., one or more processor cores) and associated circuitry (e.g., Input/Output ("I/O") circuitry, power delivery circuitry, etc.) arranged in a disaggregated collection of discrete dies, tiles and/or chiplets (e.g., one or more discrete processor core die arranged adjacent to one or more other die such as memory die, I/O die, etc.). In such disaggregated devices and systems the various dies, tiles and/or chiplets can be physically and electrically coupled together by a package structure including, for example, various packaging substrates, interposers, active interposers, photonic interposers, interconnect bridges and the like. The disaggregated collection of discrete dies, tiles, and/or chiplets can also be part of a System-on-Package ("SoP")."

Example Core Architectures - In-order and out-of-order core block diagram.

FIG. 18A is a block diagram illustrating both an example in-order pipeline and an example register renaming, out-of-order issue/execution pipeline according to examples. FIG. 18B is a block diagram illustrating both an example in-order architecture core and an example register renaming, out-of-order issue/execution architecture core to be included in a processor according to examples. The solid lined boxes in FIGS. 18A-18B illustrate the in-order pipeline and in-order core, while the optional addition of the dashed lined boxes illustrates the register renaming, out-of-order issue/execution pipeline and core. Given that the in-order aspect is a subset of the out-of-order aspect, the out-of-order aspect will be described.

In FIG. 18A, a processor pipeline 1800 includes a fetch stage 1802, an optional length decoding stage 1804, a decode stage 1806, an optional allocation (Alloc) stage 1808, an optional renaming stage 1810, a schedule (also known as a dispatch or issue) stage 1812, an optional register read/memory read stage 1814, an execute stage 1816, a write back/memory write stage 1818, an optional exception handling stage 1822, and an optional commit stage 1824. One or more operations can be performed in each of these processor pipeline stages. For example, during the fetch stage 1802, one or more instructions are fetched from instruction memory, and during the decode stage 1806, the one or more fetched instructions may be decoded, addresses (e.g., load store unit (LSU) addresses) using forwarded register ports may be generated, and branch forwarding (e.g., immediate offset or a link register (LR)) may be performed. In some examples, the decode stage 1806 and the register read/memory read stage 1814 may be combined into one pipeline stage. In some examples, during the execute stage 1816, the decoded instructions may be executed, LSU address/data pipelining to an Advanced Microcontroller Bus (AMB) interface may be performed, multiply and add operations may be performed, arithmetic operations with branch results may be performed, etc.

By way of example, the example register renaming, out-of-order issue/execution architecture core of FIG. 18B may implement the pipeline 1800 as follows: 1) the instruction fetch circuitry 1838 performs the fetch and length decoding stages 1802 and 1804; 2) the decode circuitry 1840 performs the decode stage 1806; 3) the rename/allocator unit circuitry 1852 performs the allocation stage 1808 and renaming stage 1810; 4) the scheduler(s) circuitry 1856 performs the schedule stage 1812; 5) the physical register file(s) circuitry 1858 and the memory unit circuitry 1870 perform the register read/memory read stage 1814; the execution cluster(s) 1860 perform the execute stage 1816; 6) the memory unit circuitry 1870 and the physical register file(s) circuitry 1858 perform the write back/memory write stage 1818; 7) various circuitry may be involved in the exception handling stage 1822; and 8) the retirement unit circuitry 1854 and the physical register file(s) circuitry 1858 perform the commit stage 1824.

FIG. 18B shows a processor core 1890 including front-end unit circuitry 1830 coupled to execution engine unit circuitry 1850, and both are coupled to memory unit circuitry 1870. The core 1890 may be a reduced instruction set architecture computing (RISC) core, a complex instruction set architecture computing (CISC) core, a very long instruction word (VLIW) core, or a hybrid or alternative core type. As yet another option, the core 1890 may be a special-purpose core, such as, for example, a network or communication core, compression engine, coprocessor core, general purpose computing graphics processing unit (GPGPU) core, graphics core, or the like.

The front-end unit circuitry 1830 may include branch prediction circuitry 1832 coupled to instruction cache circuitry 1834, which is coupled to an instruction translation lookaside buffer (TLB) 1836, which is coupled to instruction fetch circuitry 1838, which is coupled to decode circuitry 1840. In some examples, the instruction cache circuitry 1834 is included in the memory unit circuitry 1870 rather than the front-end circuitry 1830. The decode circuitry 1840 (or decoder) may decode instructions, and generate as an output one or more micro-operations, microcode entry points, microinstructions, other instructions, or other control signals, which are decoded from, or which otherwise reflect, or are derived from, the original instructions. The decode circuitry 1840 may further include address generation unit (AGU, not shown) circuitry. In some examples, the AGU generates an LSU address using forwarded register ports, and may further perform branch forwarding (e.g., immediate offset branch forwarding, LR register branch forwarding, etc.). The decode circuitry 1840 may be implemented using various different mechanisms. Examples of suitable mechanisms include, but are not limited to, look-up tables, hardware implementations, programmable logic arrays (PLAs), microcode read only memories (ROMs), etc. In some examples, the core 1890 includes a microcode ROM (not shown) or other medium that stores microcode for certain macroinstructions (e.g., in decode circuitry 1840 or otherwise within the front-end circuitry 1830). In some examples, the decode circuitry 1840 includes a micro-operation (micro-op) or operation cache (not shown) to hold/cache decoded operations, micro-tags, or micro-operations generated during the decode or other stages of the processor pipeline 1800. The decode circuitry 1840 may be coupled to rename/allocator unit circuitry 1852 in the execution engine circuitry 1850.

The execution engine circuitry 1850 includes the rename/allocator unit circuitry 1852 coupled to retirement unit circuitry 1854 and a set of one or more scheduler(s) circuitry 1856. The scheduler(s) circuitry 1856 represents any number of different schedulers, including reservations stations, central instruction window, etc. In some examples, the scheduler(s) circuitry 1856 can include arithmetic logic unit (ALU) scheduler/scheduling circuitry, ALU queues, address generation unit (AGU) scheduler/scheduling circuitry, AGU queues, etc. The scheduler(s) circuitry 1856 is coupled to the physical register file(s) circuitry 1858. Each of the physical register file(s) circuitry 1858 represents one or more physical register files, different ones of which store one or more different data types, such as scalar integer, scalar floating-point, packed integer, packed floating-point, vector integer, vector floating-point, status (e.g., an instruction pointer that is the address of the next instruction to be executed), etc. In some examples, the physical register file(s) circuitry 1858 includes vector registers unit circuitry, writemask registers unit circuitry, and scalar register unit circuitry. These register units may provide architectural vector registers, vector mask registers, general-purpose registers, etc. The physical register file(s) circuitry 1858 is coupled to the retirement unit circuitry 1854 (also known as a retire queue or a retirement queue) to illustrate various ways in which register renaming and out-of-order execution may be implemented (e.g., using a reorder buffer(s) (ROB(s)) and a retirement register file(s); using a future file(s), a history buffer(s), and a retirement register file(s); using a register maps and a pool of registers; etc.). The retirement unit circuitry 1854 and the physical register file(s) circuitry 1858 are coupled to the execution cluster(s) 1860. The execution cluster(s) 1860 includes a set of one or more execution unit(s) circuitry 1862 and a set of one or more memory access circuitry 1864. The execution unit(s) circuitry 1862 may perform various arithmetic, logic, floating-point or other types of operations (e.g., shifts, addition, subtraction, multiplication) and on various types of data (e.g., scalar integer, scalar floating-point, packed integer, packed floating-point, vector integer, vector floating-point). While some examples may include a number of execution units or execution unit circuitry dedicated to specific functions or sets of functions, other examples may include only one execution unit circuitry or multiple execution units/execution unit circuitry that all perform all functions. The scheduler(s) circuitry 1856, physical register file(s) circuitry 1858, and execution cluster(s) 1860 are shown as being possibly plural because certain examples create separate pipelines for certain types of data/operations (e.g., a scalar integer pipeline, a scalar floating-point/packed integer/packed floating-point/vector integer/vector floating-point pipeline, and/or a memory access pipeline that each have their own scheduler circuitry, physical register file(s) circuitry, and/or execution cluster - and in the case of a separate memory access pipeline, certain examples are implemented in which only the execution cluster of this pipeline has the memory access unit(s) circuitry 1864). It should also be understood that where separate pipelines are used, one or more of these pipelines may be out-of-order issue/execution and the rest in-order.

In some examples, the execution engine unit circuitry 1850 may perform load store unit (LSU) address/data pipelining to an Advanced Microcontroller Bus (AMB) interface (not shown), and address phase and writeback, data phase load, store, and branches.

The set of memory access circuitry 1864 is coupled to the memory unit circuitry 1870, which includes data TLB circuitry 1872 coupled to data cache circuitry 1874 coupled to level 2 (L2) cache circuitry 1876. In some examples, the memory access circuitry 1864 may include load unit circuitry, store address unit circuitry, and store data unit circuitry, each of which is coupled to the data TLB circuitry 1872 in the memory unit circuitry 1870. The instruction cache circuitry 1834 is further coupled to the level 2 (L2) cache circuitry 1876 in the memory unit circuitry 1870. In some examples, the instruction cache 1834 and the data cache 1874 are combined into a single instruction and data cache (not shown) in L2 cache circuitry 1876, level 3 (L3) cache circuitry (not shown), and/or main memory. The L2 cache circuitry 1876 is coupled to one or more other levels of cache and eventually to a main memory.

The core 1890 may support one or more instructions sets (e.g., the x86 instruction set architecture (optionally with some extensions that have been added with newer versions); the MIPS instruction set architecture; the ARM instruction set architecture (optionally with optional additional extensions such as NEON)), including the instruction(s) described herein. In some examples, the core 1890 includes logic to support a packed data instruction set architecture extension (e.g., AVX1, AVX2), thereby allowing the operations used by many multimedia applications to be performed using packed data.

### Example Execution Unit(s) Circuitry.

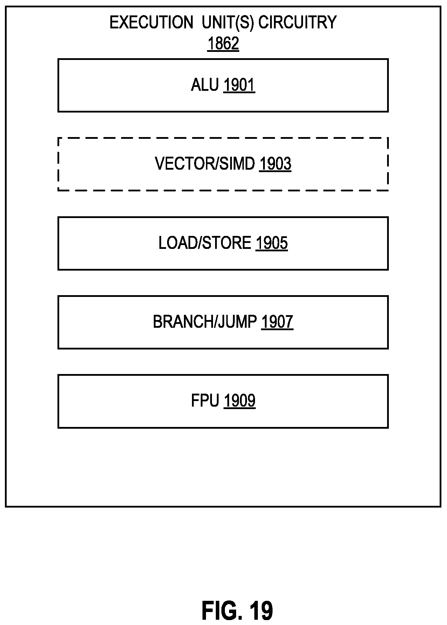

FIG. 19 illustrates examples of execution unit(s) circuitry, such as execution unit(s) circuitry 1862 of FIG. 18B. As illustrated, execution unit(s) circuity 1862 may include one or more ALU circuits 1901, optional vector/single instruction multiple data (SIMD) circuits 1903, load/store circuits 1905, branch/jump circuits 1907, and/or Floating-point unit (FPU) circuits 1909. ALU circuits 1901 perform integer arithmetic and/or Boolean operations. Vector/SIMD circuits 1903 perform vector/SIMD operations on packed data (such as SIMD/vector registers). Load/store circuits 1905 execute load and store instructions to load data from memory into registers or store from registers to memory. Load/store circuits 1905 may also generate addresses. Branch/jump circuits 1907 cause a branch or jump to a memory address depending on the instruction. FPU circuits 1909 perform floating-point arithmetic. The width of the execution unit(s) circuitry 1862 varies depending upon the example and can range from 16-bit to 1,024-bit, for example. In some examples, two or more smaller execution units are logically combined to form a larger execution unit (e.g., two 128-bit execution units are logically combined to form a 256-bit execution unit).

### Example Register Architecture.

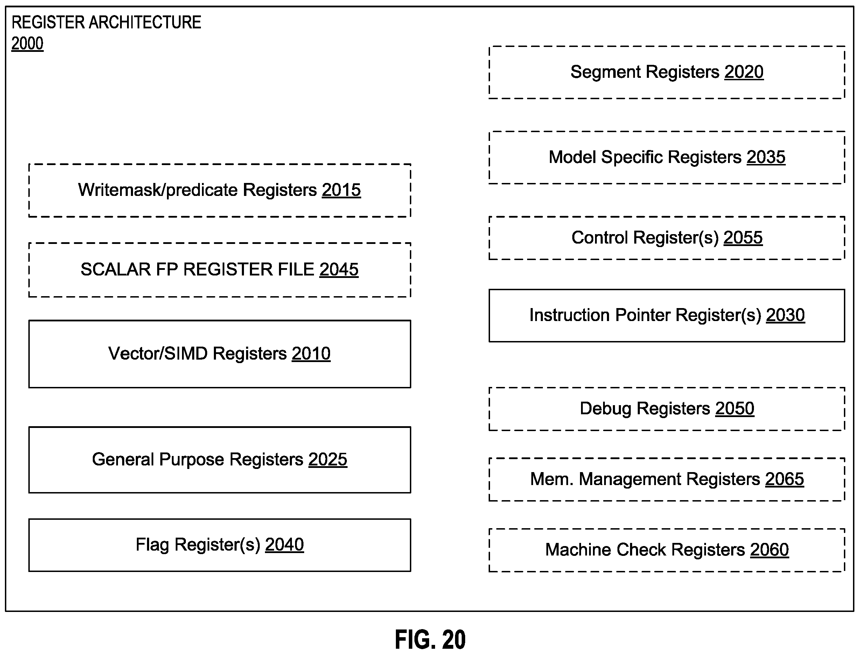

FIG. 20 is a block diagram of a register architecture 2000 according to some examples. As illustrated, the register architecture 2000 includes vector/SIMD registers 2010 that vary from 128-bit to 1,024 bits width. In some examples, the vector/SIMD registers 2010 are physically 512-bits and, depending upon the mapping, only some of the lower bits are used. For example, in some examples, the vector/SIMD registers 2010 are ZMM registers which are 512 bits: the lower 256 bits are used for YMM registers and the lower 128 bits are used for XMM registers. As such, there is an overlay of registers. In some examples, a vector length field selects between a maximum length and one or more other shorter lengths, where each such shorter length is half the length of the preceding length. Scalar operations are operations performed on the lowest order data element position in a ZMM/YMM/XMM register; the higher order data element positions are either left the same as they were prior to the instruction or zeroed depending on the example.

In some examples, the register architecture 2000 includes writemask/predicate registers 2015. For example, in some examples, there are 8 writemask/predicate registers (sometimes called k0 through k7) that are each 16-bit, 32-bit, 64-bit, or 128-bit in size. Writemask/predicate registers 2015 may allow for merging (e.g., allowing any set of elements in the destination to be protected from updates during the execution of any operation) and/or zeroing (e.g., zeroing vector masks allow any set of elements in the destination to be zeroed during the execution of any operation). In some examples, each data element position in a given writemask/predicate register 2015 corresponds to a data element position of the destination. In other examples, the writemask/predicate registers 2015 are scalable and consists of a set number of enable bits for a given vector element (e.g., 8 enable bits per 64-bit vector element).

The register architecture 2000 includes a plurality of general-purpose registers 2025. These registers may be 16-bit, 32-bit, 64-bit, etc. and can be used for scalar operations. In some examples, these registers are referenced by the names RAX, RBX, RCX, RDX, RBP, RSI, RDI, RSP, and R8 through R15.

In some examples, the register architecture 2000 includes scalar floating-point (FP) register file 2045 which is used for scalar floating-point operations on 32/64/80-bit floating-point data using the x87 instruction set architecture extension or as MMX registers to perform operations on 64-bit packed integer data, as well as to hold operands for some operations performed between the MMX and XMM registers.

One or more flag registers 2040 (e.g., EFLAGS, RFLAGS, etc.) store status and control information for arithmetic, compare, and system operations. For example, the one or more flag registers 2040 may store condition code information such as carry, parity, auxiliary carry, zero, sign, and overflow. In some examples, the one or more flag registers 2040 are called program status and control registers.

Segment registers 2020 contain segment points for use in accessing memory. In some examples, these registers are referenced by the names CS, DS, SS, ES, FS, and GS.

Model specific registers or machine specific registers (MSRs) 2035 control and report on processor performance. Most MSRs 2035 handle system-related functions and are not accessible to an application program. For example, MSRs may provide control for one or more of: performance-monitoring counters, debug extensions, memory type range registers, thermal and power management, instruction-specific support, and/or processor feature/mode support. Machine check registers 2060 consist of control, status, and error reporting MSRs that are used to detect and report on hardware errors. Control register(s) 2055 (e.g., CR0-CR4) determine the operating mode of a processor (e.g., processor 1170, 1180, 1138, 1115, and/or 1200) and the characteristics of a currently executing task. In some examples, MSRs 2035 are a subset of control registers 2055.

One or more instruction pointer register(s) 2030 store an instruction pointer value. Debug registers 2050 control and allow for the monitoring of a processor or core's debugging operations.

Memory (mem) management registers 2065 specify the locations of data structures used in protected mode memory management. These registers may include a global descriptor table register (GDTR), interrupt descriptor table register (IDTR), task register, and a local descriptor table register (LDTR) register.

Alternative examples may use wider or narrower registers. Additionally, alternative examples may use more, less, or different register files and registers. The register architecture 2000 may, for example, be used in register file / memory, or physical register file(s) circuitry 1858.

### Instruction Set Architectures.

An instruction set architecture (ISA) may include one or more instruction formats. A given instruction format may define various fields (e.g., number of bits, location of bits) to specify, among other things, the operation to be performed (e.g., opcode) and the operand(s) on which that operation is to be performed and/or other data field(s) (e.g., mask). Some instruction formats are further broken down through the definition of instruction templates (or sub-formats). For example, the instruction templates of a given instruction format may be defined to have different subsets of the instruction format's fields (the included fields are typically in the same order, but at least some have different bit positions because there are less fields included) and/or defined to have a given field interpreted differently. Thus, each instruction of an ISA is expressed using a given instruction format (and, if defined, in a given one of the instruction templates of that instruction format) and includes fields for specifying the operation and the operands. For example, an example ADD instruction has a specific opcode and an instruction format that includes an opcode field to specify that opcode and operand fields to select operands (source1/destination and source2); and an occurrence of this ADD instruction in an instruction stream will have specific contents in the operand fields that select specific operands. In addition, though the description below is made in the context of x86 ISA, it is within the knowledge of one skilled in the art to apply the teachings of the present disclosure in another ISA.

### Example Instruction Formats.

Examples of the instruction(s) described herein may be embodied in different formats. Additionally, example systems, architectures, and pipelines are detailed below. Examples of the instruction(s) may be executed on such systems, architectures, and pipelines, but are not limited to those detailed.

FIG. 21 illustrates examples of an instruction format. As illustrated, an instruction may include multiple components including, but not limited to, one or more fields for: one or more prefixes 2101, an opcode 2103, addressing information 2105 (e.g., register identifiers, memory addressing information, etc.), a displacement value 2107, and/or an immediate value 2109. Note that some instructions utilize some or all the fields of the format whereas others may only use the field for the opcode 2103. In some examples, the order illustrated is the order in which these fields are to be encoded, however, it should be appreciated that in other examples these fields may be encoded in a different order, combined, etc.

The prefix(es) field(s) 2101, when used, modifies an instruction. In some examples, one or more prefixes are used to repeat string instructions (e.g., 0xF0, 0xF2, 0xF3, etc.), to provide section overrides (e.g., 0x2E, 0x36, 0x3E, 0x26, 0x64, 0x65, 0x2E, 0x3E, etc.), to perform bus lock operations, and/or to change operand (e.g., 0x66) and address sizes (e.g., 0x67). Certain instructions require a mandatory prefix (e.g., 0x66, 0xF2, 0xF3, etc.). Certain of these prefixes may be considered "legacy" prefixes. Other prefixes, one or more examples of which are detailed herein, indicate, and/or provide further capability, such as specifying particular registers, etc. The other prefixes typically follow the "legacy" prefixes.

The opcode field 2103 is used to at least partially define the operation to be performed upon a decoding of the instruction. In some examples, a primary opcode encoded in the opcode field 2103 is one, two, or three bytes in length. In other examples, a primary opcode can be a different length. An additional 3-bit opcode field is sometimes encoded in another field.

The addressing information field 2105 is used to address one or more operands of the instruction, such as a location in memory or one or more registers. FIG. 22 illustrates examples of the addressing information field 2105. In this illustration, an optional MOD R/M byte 2202 and an optional Scale, Index, Base (SIB) byte 2204 are shown. The MOD R/M byte 2202 and the SIB byte 2204 are used to encode up to two operands of an instruction, each of which is a direct register or effective memory address. Note that both of these fields are optional in that not all instructions include one or more of these fields. The MOD R/M byte 2202 includes a MOD field 2242, a register (reg) field 2244, and R/M field 2246.

The content of the MOD field 2242 distinguishes between memory access and non-memory access modes. In some examples, when the MOD field 2242 has a binary value of 11 (1 1b), a register-direct addressing mode is utilized, and otherwise a register-indirect addressing mode is used.

The register field 2244 may encode either the destination register operand or a source register operand or may encode an opcode extension and not be used to encode any instruction operand. The content of register field 2244, directly or through address generation, specifies the locations of a source or destination operand (either in a register or in memory). In some examples, the register field 2244 is supplemented with an additional bit from a prefix (e.g., prefix 2101) to allow for greater addressing.

The R/M field 2246 may be used to encode an instruction operand that references a memory address or may be used to encode either the destination register operand or a source register operand. Note the R/M field 2246 may be combined with the MOD field 2242 to dictate an addressing mode in some examples.

The SIB byte 2204 includes a scale field 2252, an index field 2254, and a base field 2256 to be used in the generation of an address. The scale field 2252 indicates a scaling factor. The index field 2254 specifies an index register to use. In some examples, the index field 2254 is supplemented with an additional bit from a prefix (e.g., prefix 2101) to allow for greater addressing. The base field 2256 specifies a base register to use. In some examples, the base field 2256 is supplemented with an additional bit from a prefix (e.g., prefix 2101) to allow for greater addressing. In practice, the content of the scale field 2252 allows for the scaling of the content of the index field 2254 for memory address generation (e.g., for address generation that uses 2^{scale} * index + base).

Some addressing forms utilize a displacement value to generate a memory address. For example, a memory address may be generated according to 2^{scale} * index + base + displacement, index*scale + displacement, r/m + displacement, instruction pointer (RIP/EIP) + displacement, register + displacement, etc. The displacement may be a 1-byte, 2-byte, 4-byte, etc. value. In some examples, the displacement field 2107 provides this value. Additionally, in some examples, a displacement factor usage is encoded in the MOD field of the addressing information field 2105 that indicates a compressed displacement scheme for which a displacement value is calculated and stored in the displacement field 2107.

In some examples, the immediate value field 2109 specifies an immediate value for the instruction. An immediate value may be encoded as a 1-byte value, a 2-byte value, a 4-byte value, etc.

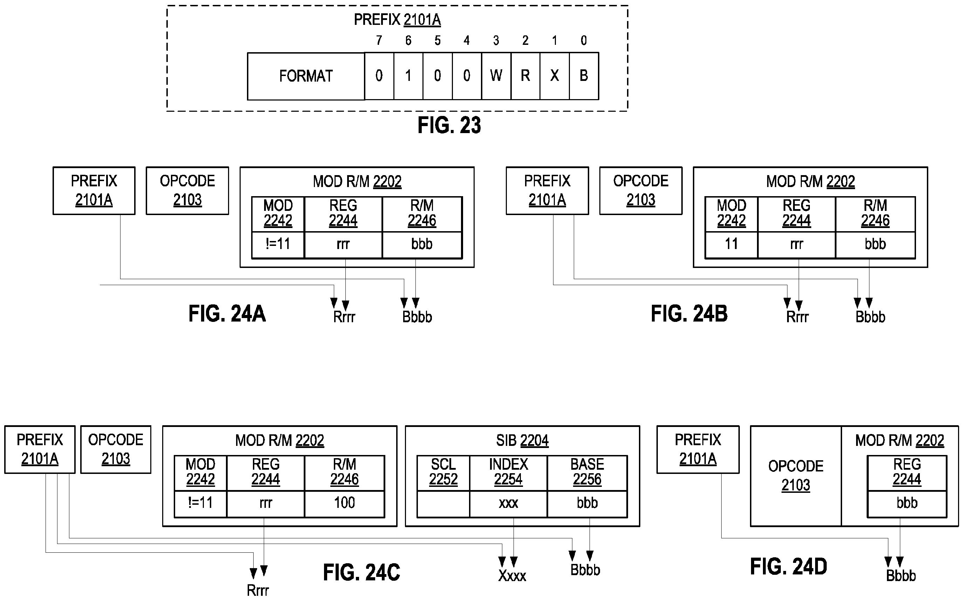

FIG. 23 illustrates examples of a first prefix 2101A. In some examples, the first prefix 2101A is an example of a REX prefix. Instructions that use this prefix may specify general purpose registers, 64-bit packed data registers (e.g., single instruction, multiple data (SIMD) registers or vector registers), and/or control registers and debug registers (e.g., CR8-CR15 and DR8-DR15).

Instructions using the first prefix 2101A may specify up to three registers using 3-bit fields depending on the format: 1) using the reg field 2244 and the R/M field 2246 of the MOD R/M byte 2202; 2) using the MOD R/M byte 2202 with the SIB byte 2204 including using the reg field 2244 and the base field 2256 and index field 2254; or 3) using the register field of an opcode.

In the first prefix 2101A, bit positions of the payload byte 7:4 are set as 0100. Bit position 3 (W) can be used to determine the operand size but may not solely determine operand width. As such, when W = 0, the operand size is determined by a code segment descriptor (CS.D) and when W = 1, the operand size is 64-bit.

Note that the addition of another bit allows for 16 (2⁴) registers to be addressed, whereas the MOD R/M reg field 2244 and MOD R/M R/M field 2246 alone can each only address 8 registers.

In the first prefix 2101A, bit position 2 (R) may be an extension of the MOD R/M reg field 2244 and may be used to modify the MOD R/M reg field 2244 when that field encodes a general-purpose register, a 64-bit packed data register (e.g., an SSE register), or a control or debug register. R is ignored when MOD R/M byte 2202 specifies other registers or defines an extended opcode.

Bit position 1 (X) may modify the SIB byte index field 2254.

Bit position 0 (B) may modify the base in the MOD R/M R/M field 2246 or the SIB byte base field 2256; or it may modify the opcode register field used for accessing general purpose registers (e.g., general purpose registers 2025).

FIGS. 24A-24D illustrate examples of how the R, X, and B fields of the first prefix 2101A are used. FIG. 24A illustrates R and B from the first prefix 2101A being used to extend the reg field 2244 and R/M field 2246 of the MOD R/M byte 2202 when the SIB byte 22 04 is not used for memory addressing. FIG. 24B illustrates R and B from the first prefix 2101A being used to extend the reg field 2244 and R/M field 2246 of the MOD R/M byte 2202 when the SIB byte 22 04 is not used (register-register addressing). FIG. 24C illustrates R, X, and B from the first prefix 2101A being used to extend the reg field 2244 of the MOD R/M byte 2202 and the index field 2254 and base field 2256 when the SIB byte 22 04 being used for memory addressing. FIG. 24D illustrates B from the first prefix 2101A being used to extend the reg field 2244 of the MOD R/M byte 2202 when a register is encoded in the opcode 2103.

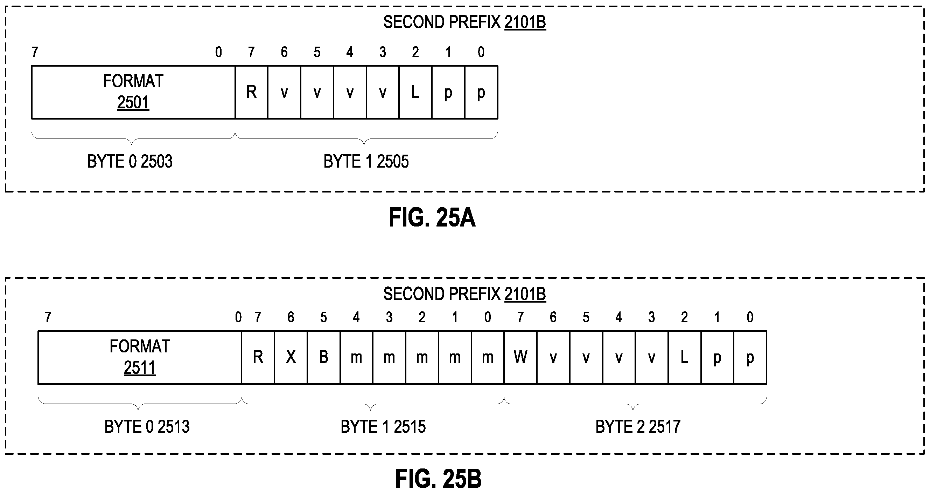

FIGS. 25A-25B illustrate examples of a second prefix 2101B. In some examples, the second prefix 2101B is an example of a VEX prefix. The second prefix 2101B encoding allows instructions to have more than two operands, and allows SIMD vector registers (e.g., vector/SIMD registers 2010) to be longer than 64-bits (e.g., 128-bit and 256-bit). The use of the second prefix 2101B provides for three-operand (or more) syntax. For example, previous two-operand instructions performed operations such as A = A + B, which overwrites a source operand. The use of the second prefix 2101B enables operands to perform nondestructive operations such as A = B + C.

In some examples, the second prefix 2101B comes in two forms - a two-byte form and a three-byte form. The two-byte second prefix 2101B is used mainly for 128-bit, scalar, and some 256-bit instructions; while the three-byte second prefix 2101B provides a compact replacement of the first prefix 2101A and 3-byte opcode instructions.

FIG. 25A illustrates examples of a two-byte form of the second prefix 2101B. In some examples, a format field 2501 (byte 0 2503) contains the value C5H. In some examples, byte 1 2505 includes an "R" value in bit[7]. This value is the complement of the "R" value of the first prefix 2101A. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3] shown as vvvv may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2246 to encode the instruction operand that references a memory address or encode either the destination register operand or a source register operand.

Instructions that use this prefix may use the MOD R/M reg field 2244 to encode either the destination register operand or a source register operand, or to be treated as an opcode extension and not used to encode any instruction operand.

For instruction syntax that support four operands, vvvv, the MOD R/M R/M field 2246 and the MOD R/M reg field 2244 encode three of the four operands. Bits[7:4] of the immediate value field 2109 are then used to encode the third source register operand.

FIG. 25B illustrates examples of a three-byte form of the second prefix 2101B. In some examples, a format field 2511 (byte 0 2513) contains the value C4H. Byte 1 2515 includes in bits[7:5] "R," "X," and "B" which are the complements of the same values of the first prefix 2101A. Bits[4:0] of byte 1 2515 (shown as mmmmm) include content to encode, as need, one or more implied leading opcode bytes. For example, 00001 implies a 0FH leading opcode, 00010 implies a 0F38H leading opcode, 00011 implies a 0F3AH leading opcode, etc.

Bit[7] of byte 2 2517 is used similar to W of the first prefix 2101A including helping to determine promotable operand sizes. Bit[2] is used to dictate the length (L) of the vector (where a value of 0 is a scalar or 128-bit vector and a value of 1 is a 256-bit vector). Bits[1:0] provide opcode extensionality equivalent to some legacy prefixes (e.g., 00 = no prefix, 01 = 66H, 10 = F3H, and 11 = F2H). Bits[6:3], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

Instructions that use this prefix may use the MOD R/M R/M field 2246 to encode the instruction operand that references a memory address or encode either the destination register operand or a source register operand.

Instructions that use this prefix may use the MOD R/M reg field 2244 to encode either the destination register operand or a source register operand, or to be treated as an opcode extension and not used to encode any instruction operand.

For instruction syntax that support four operands, vvvv, the MOD R/M R/M field 2246, and the MOD R/M reg field 2244 encode three of the four operands. Bits[7:4] of the immediate value field 2109 are then used to encode the third source register operand.

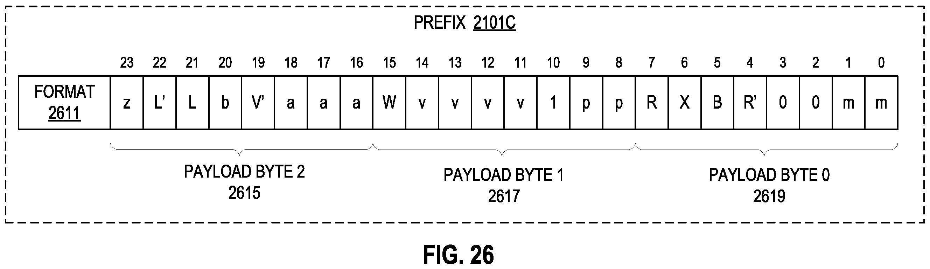

FIG. 26 illustrates examples of a third prefix 2101C. In some examples, the third prefix 2101C is an example of an EVEX prefix. The third prefix 2101C is a four-byte prefix.

The third prefix 2101C can encode 32 vector registers (e.g., 128-bit, 256-bit, and 512-bit registers) in 64-bit mode. In some examples, instructions that utilize a writemask/opmask (see discussion of registers in a previous figure, such as FIG. 20) or predication utilize this prefix. Opmask register allow for conditional processing or selection control. Opmask instructions, whose source/destination operands are opmask registers and treat the content of an opmask register as a single value, are encoded using the second prefix 2101B.

The third prefix 2101C may encode functionality that is specific to instruction classes (e.g., a packed instruction with "load+op" semantic can support embedded broadcast functionality, a floating-point instruction with rounding semantic can support static rounding functionality, a floating-point instruction with non-rounding arithmetic semantic can support "suppress all exceptions" functionality, etc.).

The first byte of the third prefix 2101C is a format field 2611 that has a value, in some examples, of 62H. Subsequent bytes are referred to as payload bytes 2615-2619 and collectively form a 24-bit value of P[23:0] providing specific capability in the form of one or more fields (detailed herein).

In some examples, P[1:0] of payload byte 2619 are identical to the low two mm bits. P[3:2] are reserved in some examples. Bit P[4] (R') allows access to the high 16 vector register set when combined with P[7] and the MOD R/M reg field 2244. P[6] can also provide access to a high 16 vector register when SIB-type addressing is not needed. P[7:5] consist of R, X, and B which are operand specifier modifier bits for vector register, general purpose register, memory addressing and allow access to the next set of 8 registers beyond the low 8 registers when combined with the MOD R/M register field 2244 and MOD R/M R/M field 2246. P[9:8] provide opcode extensionality equivalent to some legacy prefixes (e.g., 00 = no prefix, 01 = 66H, 10 = F3H, and 11 = F2H). P[10] in some examples is a fixed value of 1. P[14:11], shown as vvvv, may be used to: 1) encode the first source register operand, specified in inverted (1s complement) form and valid for instructions with 2 or more source operands; 2) encode the destination register operand, specified in 1s complement form for certain vector shifts; or 3) not encode any operand, the field is reserved and should contain a certain value, such as 1111b.

P[15] is similar to W of the first prefix 2101A and second prefix 2101B and may serve as an opcode extension bit or operand size promotion.

P[18:16] specify the index of a register in the opmask (writemask) registers (e.g., writemask/predicate registers 2015). In some examples, the specific value aaa = 000 has a special behavior implying no opmask is used for the particular instruction (this may be implemented in a variety of ways including the use of an opmask hardwired to all ones or hardware that bypasses the masking hardware). When merging, vector masks allow any set of elements in the destination to be protected from updates during the execution of any operation (specified by the base operation and the augmentation operation); in other some examples, preserving the old value of each element of the destination where the corresponding mask bit has a 0. In contrast, when zeroing vector masks allow any set of elements in the destination to be zeroed during the execution of any operation (specified by the base operation and the augmentation operation); in some examples, an element of the destination is set to 0 when the corresponding mask bit has a 0 value. A subset of this functionality is the ability to control the vector length of the operation being performed (that is, the span of elements being modified, from the first to the last one); however, it is not necessary that the elements that are modified be consecutive. Thus, the opmask field allows for partial vector operations, including loads, stores, arithmetic, logical, etc. While examples are described in which the opmask field's content selects one of a number of opmask registers that contains the opmask to be used (and thus the opmask field's content indirectly identifies that masking to be performed), alternative examples instead or additional allow the mask write field's content to directly specify the masking to be performed.

P[19] can be combined with P[14:11] to encode a second source vector register in a non-destructive source syntax which can access an upper 16 vector registers using P[19]. P[20] encodes multiple functionalities, which differs across different classes of instructions and can affect the meaning of the vector length/ rounding control specifier field (P[22:21]). P [23] indicates support for merging-writemasking (e.g., when set to 0) or support for zeroing and merging-writemasking (e.g., when set to 1).

Example examples of encoding of registers in instructions using the third prefix 2101C are detailed in the following tables.

**Table 1: 32-Register Support in 64-bit Mode**

| | 4 | 3 | [2:0] | REG. TYPE | COMMON USAGES |
|---|---|---|---|---|---|
| REG | R' | R | MOD R/M reg | GPR, Vector | Destination or Source |
| VVVV | V' | vvvv | | GPR, Vector | 2nd Source or Destination |
| RM | X | B | MOD R/M R/M | GPR, Vector | 1st Source or Destination |
| BASE | 0 | B | MOD R/M R/M | GPR | Memory addressing |
| INDEX | 0 | X | SIB.index | GPR | Memory addressing |
| VIDX | V' | X | SIB.index | Vector | VSIB memory addressing |

**Table 2: Encoding Register Specifiers in 32-bit Mode**

| | [2:0] | REG. TYPE | COMMON USAGES |
|---|---|---|---|
| REG | MOD R/M reg | GPR, Vector | Destination or Source |
| VVVV | vvvv | GPR, Vector | 2^{nd} Source or Destination |
| RM | MOD R/M R/M | GPR, Vector | 1^{st} Source or Destination |
| BASE | MOD R/M R/M | GPR | Memory addressing |
| INDEX | SIB.index | GPR | Memory addressing |
| VIDX | SIB.index | Vector | VSIB memory addressing |

**Table 3: Opmask Register Specifier Encoding**

| | [2:0] | REG. TYPE | COMMON USAGES |
|---|---|---|---|
| REG | MOD R/M Reg | k0-k7 | Source |
| VVVV | vvvv | k0-k7 | 2^{nd} Source |
| RM | MOD R/M R/M | k0-k7 | 1^{st} Source |
| {k1} | aaa | k0-k7 | Opmask |

### Graphics Execution Units

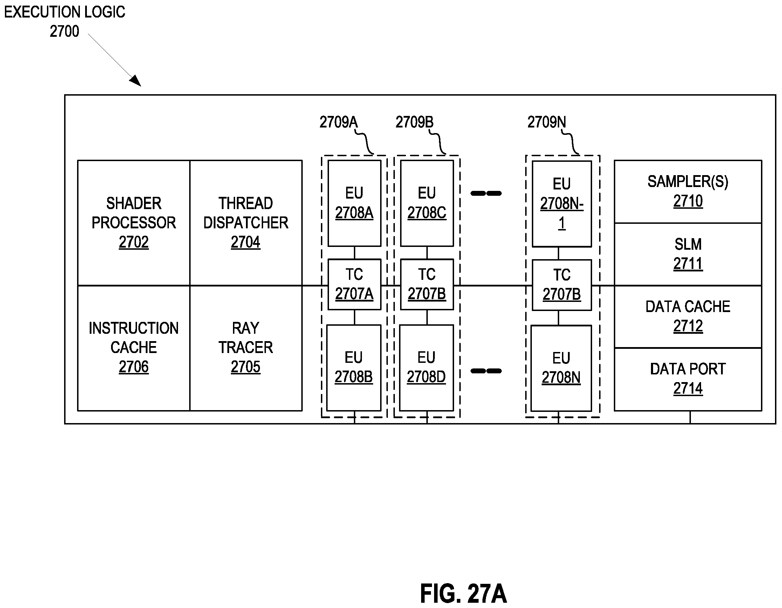

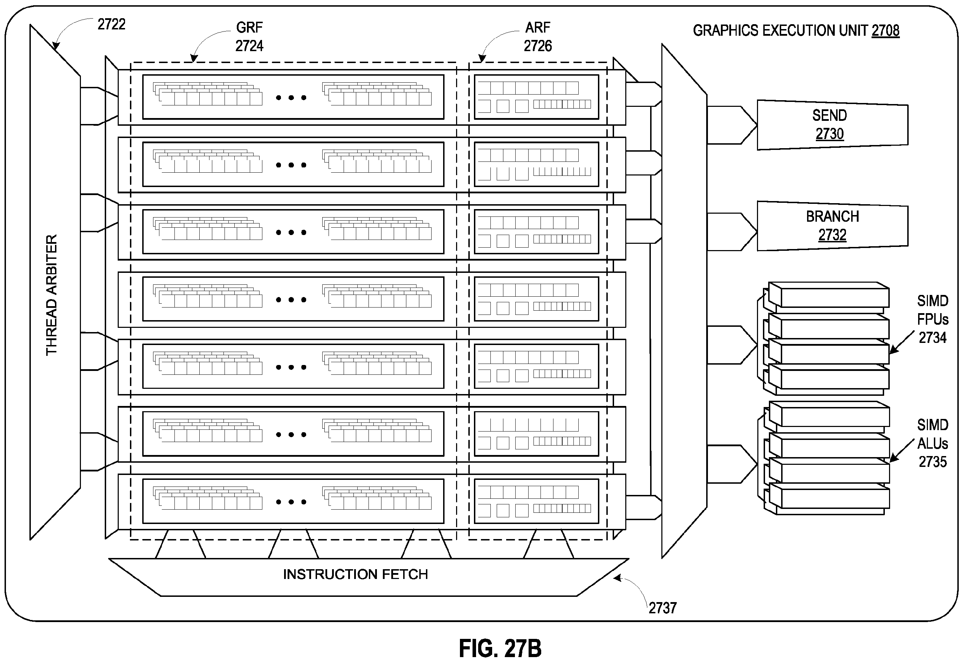

FIGS. 27A-27B illustrate thread execution logic 2700 including an array of processing elements employed in a graphics processor core according to examples described herein. Elements of FIGS. 27A-27B having the same reference numbers (or names) as the elements of any other figure herein can operate or function in any manner similar to that described elsewhere herein, but are not limited to such. FIG. 27A is representative of an execution unit within a general-purpose graphics processor, while FIG. 27B is representative of an execution unit that may be used within a compute accelerator.

As illustrated in FIG. 27A, in some examples thread execution logic 2700 includes a shader processor 2702, a thread dispatcher 2704, instruction cache 2706, a scalable execution unit array including a plurality of execution units 2708A-2708N, a sampler 2710, shared local memory 2711, a data cache 2712, and a data port 2714. In some examples the scalable execution unit array can dynamically scale by enabling or disabling one or more execution units (e.g., any of execution units 2708A, 2708B, 2708C, 2708D, through 2708N-1 and 2708N) based on the computational requirements of a workload. In some examples the included components are interconnected via an interconnect fabric that links to each of the components. In some examples, thread execution logic 2700 includes one or more connections to memory, such as system memory or cache memory, through one or more of instruction cache 2706, data port 2714, sampler 2710, and execution units 2708A-2708N. In some examples, each execution unit (e.g. 2708A) is a stand-alone programmable general-purpose computational unit that is capable of executing multiple simultaneous hardware threads while processing multiple data elements in parallel for each thread. In various examples, the array of execution units 2708A-2708N is scalable to include any number individual execution units.

In some examples, the execution units 2708A-2708N are primarily used to execute shader programs. A shader processor 2702 can process the various shader programs and dispatch execution threads associated with the shader programs via a thread dispatcher 2704. In some examples the thread dispatcher includes logic to arbitrate thread initiation requests from the graphics and media pipelines and instantiate the requested threads on one or more execution unit in the execution units 2708A-2708N. For example, a geometry pipeline can dispatch vertex, tessellation, or geometry shaders to the thread execution logic for processing. In some examples, thread dispatcher 2704 can also process runtime thread spawning requests from the executing shader programs.

In some examples, the execution units 2708A-2708N support an instruction set that includes native support for many standard 3D graphics shader instructions, such that shader programs from graphics libraries (e.g., Direct 3D and OpenGL) are executed with a minimal translation. The execution units support vertex and geometry processing (e.g., vertex programs, geometry programs, vertex shaders), pixel processing (e.g., pixel shaders, fragment shaders) and general-purpose processing (e.g., compute and media shaders). Each of the execution units 2708A-2708N is capable of multi-issue single instruction multiple data (SIMD) execution and multi-threaded operation enables an efficient execution environment in the face of higher latency memory accesses. Each hardware thread within each execution unit has a dedicated high-bandwidth register file and associated independent thread-state. Execution is multi-issue per clock to pipelines capable of integer, single and double precision floating point operations, SIMD branch capability, logical operations, transcendental operations, and other miscellaneous operations. While waiting for data from memory or one of the shared functions, dependency logic within the execution units 2708A-2708N causes a waiting thread to sleep until the requested data has been returned. While the waiting thread is sleeping, hardware resources may be devoted to processing other threads. For example, during a delay associated with a vertex shader operation, an execution unit can perform operations for a pixel shader, fragment shader, or another type of shader program, including a different vertex shader. Various examples can apply to use execution by use of Single Instruction Multiple Thread (SIMT) as an alternate to use of SIMD or in addition to use of SIMD. Reference to a SIMD core or operation can apply also to SIMT or apply to SIMD in combination with SIMT.

Each execution unit in execution units 2708A-2708N operates on arrays of data elements. The number of data elements is the "execution size," or the number of channels for the instruction. An execution channel is a logical unit of execution for data element access, masking, and flow control within instructions. The number of channels may be independent of the number of physical Arithmetic Logic Units (ALUs) or Floating Point Units (FPUs) for a particular graphics processor. In some examples, execution units 2708A-2708N support integer and floating-point data types.

The execution unit instruction set includes SIMD instructions. The various data elements can be stored as a packed data type in a register and the execution unit will process the various elements based on the data size of the elements. For example, when operating on a 256-bit wide vector, the 256 bits of the vector are stored in a register and the execution unit operates on the vector as four separate 64-bit packed data elements (Quad-Word (QW) size data elements), eight separate 32-bit packed data elements (Double Word (DW) size data elements), sixteen separate 16-bit packed data elements (Word (W) size data elements), or thirty-two separate 8-bit data elements (byte (B) size data elements). However, different vector widths and register sizes are possible.

In some examples one or more execution units can be combined into a fused execution unit 2709A-2709N having thread control logic (2707A-2707N) that is common to the fused EUs. Multiple EUs can be fused into an EU group. Each EU in the fused EU group can be configured to execute a separate SIMD hardware thread. The number of EUs in a fused EU group can vary according to examples. Additionally, various SIMD widths can be performed per-EU, including but not limited to SIMD8, SIMD16, and SIMD32. Each fused graphics execution unit 2709A-2709N includes at least two execution units. For example, fused execution unit 2709A includes a first EU 2708A, second EU 2708B, and thread control logic 2707A that is common to the first EU 2708A and the second EU 2708B. The thread control logic 2707A controls threads executed on the fused graphics execution unit 2709A, allowing each EU within the fused execution units 2709A-2709N to execute using a common instruction pointer register.

One or more internal instruction caches (e.g., 2706) are included in the thread execution logic 2700 to cache thread instructions for the execution units. In some examples, one or more data caches (e.g., 2712) are included to cache thread data during thread execution. Threads executing on the execution logic 2700 can also store explicitly managed data in the shared local memory 2711. In some examples, a sampler 2710 is included to provide texture sampling for 3D operations and media sampling for media operations. In some examples, sampler 2710 includes specialized texture or media sampling functionality to process texture or media data during the sampling process before providing the sampled data to an execution unit.

During execution, the graphics and media pipelines send thread initiation requests to thread execution logic 2700 via thread spawning and dispatch logic. Once a group of geometric objects has been processed and rasterized into pixel data, pixel processor logic (e.g., pixel shader logic, fragment shader logic, etc.) within the shader processor 2702 is invoked to further compute output information and cause results to be written to output surfaces (e.g., color buffers, depth buffers, stencil buffers, etc.). In some examples, a pixel shader or fragment shader calculates the values of the various vertex attributes that are to be interpolated across the rasterized object. In some examples, pixel processor logic within the shader processor 2702 then executes an application programming interface (API)-supplied pixel or fragment shader program. To execute the shader program, the shader processor 2702 dispatches threads to an execution unit (e.g., 2708A) via thread dispatcher 2704. In some examples, shader processor 2702 uses texture sampling logic in the sampler 2710 to access texture data in texture maps stored in memory. Arithmetic operations on the texture data and the input geometry data compute pixel color data for each geometric fragment, or discards one or more pixels from further processing.

In some examples, the data port 2714 provides a memory access mechanism for the thread execution logic 2700 to output processed data to memory for further processing on a graphics processor output pipeline. In some examples, the data port 2714 includes or couples to one or more cache memories (e.g., data cache 2712) to cache data for memory access via the data port.

In some examples, the execution logic 2700 can also include a ray tracer 2705 that can provide ray tracing acceleration functionality. The ray tracer 2705 can support a ray tracing instruction set that includes instructions/functions for ray generation.

FIG. 27B illustrates exemplary internal details of an execution unit 2708, according to examples. A graphics execution unit 2708 can include an instruction fetch unit 2737, a general register file array (GRF) 2724, an architectural register file array (ARF) 2726, a thread arbiter 2722, a send unit 2730, a branch unit 2732, a set of SIMD floating point units (FPUs) 2734, and in some examples a set of dedicated integer SIMD ALUs 2735. The GRF 2724 and ARF 2726 includes the set of general register files and architecture register files associated with each simultaneous hardware thread that may be active in the graphics execution unit 2708. In some examples, per thread architectural state is maintained in the ARF 2726, while data used during thread execution is stored in the GRF 2724. The execution state of each thread, including the instruction pointers for each thread, can be held in thread-specific registers in the ARF 2726.

In some examples the graphics execution unit 2708 has an architecture that is a combination of Simultaneous Multi-Threading (SMT) and fine-grained Interleaved Multi-Threading (IMT). The architecture has a modular configuration that can be fine-tuned at design time based on a target number of simultaneous threads and number of registers per execution unit, where execution unit resources are divided across logic used to execute multiple simultaneous threads. The number of logical threads that may be executed by the graphics execution unit 2708 is not limited to the number of hardware threads, and multiple logical threads can be assigned to each hardware thread.

In some examples, the graphics execution unit 2708 can co-issue multiple instructions, which may each be different instructions. The thread arbiter 2722 of the graphics execution unit thread 2708 can dispatch the instructions to one of the send unit 2730, branch unit 2732, or SIMD FPU(s) 2734 for execution. Each execution thread can access 128 general-purpose registers within the GRF 2724, where each register can store 32 bytes, accessible as a SIMD 8-element vector of 32-bit data elements. In some examples, each execution unit thread has access to 4 Kbytes within the GRF 2724, although examples are not so limited, and greater or fewer register resources may be provided in other examples. In some examples the graphics execution unit 2708 is partitioned into seven hardware threads that can independently perform computational operations, although the number of threads per execution unit can also vary according to examples. For example, in some examples up to 16 hardware threads are supported. In an example in which seven threads may access 4 Kbytes, the GRF 2724 can store a total of 28 Kbytes. Where 16 threads may access 4Kbytes, the GRF 2724 can store a total of 64Kbytes. Flexible addressing modes can permit registers to be addressed together to build effectively wider registers or to represent strided rectangular block data structures.

In some examples, memory operations, sampler operations, and other longer-latency system communications are dispatched via "send" instructions that are executed by the message passing send unit 2730. In some examples, branch instructions are dispatched to a dedicated branch unit 2732 to facilitate SIMD divergence and eventual convergence.

In some examples the graphics execution unit 2708 includes one or more SIMD floating point units (FPU(s)) 2734 to perform floating-point operations. In some examples, the FPU(s) 2734 also support integer computation. In some examples the FPU(s) 2734 can SIMD execute up to *M* number of 32-bit floating-point (or integer) operations, or SIMD execute up to 2*M* 16-bit integer or 16-bit floating-point operations. In some examples, at least one of the FPU(s) provides extended math capability to support high-throughput transcendental math functions and double precision 64-bit floating-point. In some examples, a set of 8-bit integer SIMD ALUs 2735 are also present, and may be specifically optimized to perform operations associated with machine learning computations.

In some examples, arrays of multiple instances of the graphics execution unit 2708 can be instantiated in a graphics sub-core grouping (e.g., a sub-slice). For scalability, product architects can choose the exact number of execution units per sub-core grouping. In some examples the execution unit 2708 can execute instructions across a plurality of execution channels. In a further example, each thread executed on the graphics execution unit 2708 is executed on a different channel.

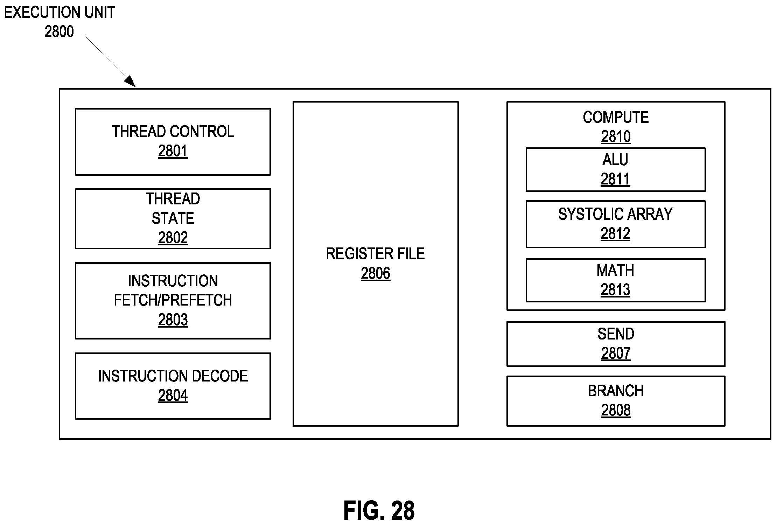

FIG. 28 illustrates an additional execution unit 2800, according to an example. In some examples, the execution unit 2800 includes a thread control unit 2801, a thread state unit 2802, an instruction fetch/prefetch unit 2803, and an instruction decode unit 2804. The execution unit 2800 additionally includes a register file 2806 that stores registers that can be assigned to hardware threads within the execution unit. The execution unit 2800 additionally includes a send unit 2807 and a branch unit 2808. In some examples, the send unit 2807 and branch unit 2808 can operate similarly as the send unit 2730 and a branch unit 2732 of the graphics execution unit 2708 of FIG. 27B.

The execution unit 2800 also includes a compute unit 2810 that includes multiple different types of functional units. In some examples the compute unit 2810 includes an ALU unit 2811 that includes an array of arithmetic logic units. The ALU unit 2811 can be configured to perform 64-bit, 32-bit, and 16-bit integer and floating point operations. Integer and floating point operations may be performed simultaneously. The compute unit 2810 can also include a systolic array 2812, and a math unit 2813. The systolic array 2812 includes a *W* wide and *D* deep network of data processing units that can be used to perform vector or other data-parallel operations in a systolic manner. In some examples the systolic array 2812 can be configured to perform matrix operations, such as matrix dot product operations. In some examples the systolic array 2812 support 16-bit floating point operations, as well as 8-bit and 4-bit integer operations. In some examples the systolic array 2812 can be configured to accelerate machine learning operations. In such examples, the systolic array 2812 can be configured with support for the bfloat 16-bit floating point format. In some examples, a math unit 2813 can be included to perform a specific subset of mathematical operations in an efficient and lower-power manner than ALU unit 2811. The math unit 2813 can include a variant of math logic that may be found in shared function logic of a graphics processing engine provided by other examples. In some examples the math unit 2813 can be configured to perform 32-bit and 64-bit floating point operations.

The thread control unit 2801 includes logic to control the execution of threads within the execution unit. The thread control unit 2801 can include thread arbitration logic to start, stop, and preempt execution of threads within the execution unit 2800. The thread state unit 2802 can be used to store thread state for threads assigned to execute on the execution unit 2800. Storing the thread state within the execution unit 2800 enables the rapid pre-emption of threads when those threads become blocked or idle. The instruction fetch/prefetch unit 2803 can fetch instructions from an instruction cache of higher level execution logic (e.g., instruction cache 2706 as in FIG. 27A). The instruction fetch/prefetch unit 2803 can also issue prefetch requests for instructions to be loaded into the instruction cache based on an analysis of currently executing threads. The instruction decode unit 2804 can be used to decode instructions to be executed by the compute units. In some examples, the instruction decode unit 2804 can be used as a secondary decoder to decode complex instructions into constituent micro-operations.

The execution unit 2800 additionally includes a register file 2806 that can be used by hardware threads executing on the execution unit 2800. Registers in the register file 2806 can be divided across the logic used to execute multiple simultaneous threads within the compute unit 2810 of the execution unit 2800. The number of logical threads that may be executed by the graphics execution unit 2800 is not limited to the number of hardware threads, and multiple logical threads can be assigned to each hardware thread. The size of the register file 2806 can vary across examples based on the number of supported hardware threads. In some examples, register renaming may be used to dynamically allocate registers to hardware threads.

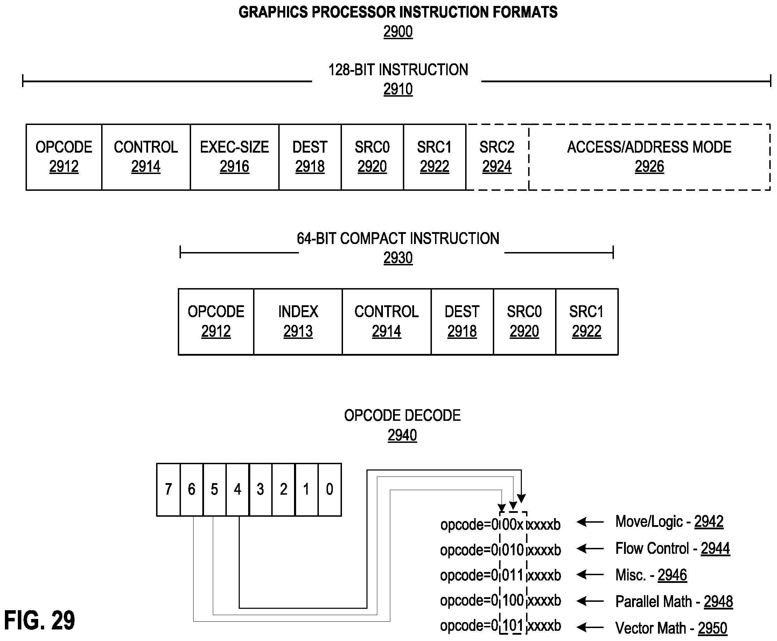

FIG. 29 is a block diagram illustrating a graphics processor instruction formats 2900 according to some examples. In one or more example, the graphics processor execution units support an instruction set having instructions in multiple formats. The solid lined boxes illustrate the components that are generally included in an execution unit instruction, while the dashed lines include components that are optional or that are only included in a sub-set of the instructions. In some examples, instruction format 2900 described and illustrated are macro-instructions, in that they are instructions supplied to the execution unit, as opposed to micro-operations resulting from instruction decode once the instruction is processed.

In some examples, the graphics processor execution units natively support instructions in a 128-bit instruction format 2910. A 64-bit compacted instruction format 2930 is available for some instructions based on the selected instruction, instruction options, and number of operands. The native 128-bit instruction format 2910 provides access to all instruction options, while some options and operations are restricted in the 64-bit format 2930. The native instructions available in the 64-bit format 2930 vary by example. In some examples, the instruction is compacted in part using a set of index values in an index field 2913. The execution unit hardware references a set of compaction tables based on the index values and uses the compaction table outputs to reconstruct a native instruction in the 128-bit instruction format 2910. Other sizes and formats of instruction can be used.

For each format, instruction opcode 2912 defines the operation that the execution unit is to perform. The execution units execute each instruction in parallel across the multiple data elements of each operand. For example, in response to an add instruction the execution unit performs a simultaneous add operation across each color channel representing a texture element or picture element. By default, the execution unit performs each instruction across all data channels of the operands. In some examples, instruction control field 2914 enables control over certain execution options, such as channels selection (e.g., predication) and data channel order (e.g., swizzle). For instructions in the 128-bit instruction format 2910 an exec-size field 2916 limits the number of data channels that will be executed in parallel. In some examples, exec-size field 2916 is not available for use in the 64-bit compact instruction format 2930.

Some execution unit instructions have up to three operands including two source operands, src0 2920, src1 2922, and one destination 2918. In some examples, the execution units support dual destination instructions, where one of the destinations is implied. Data manipulation instructions can have a third source operand (e.g., SRC2 2924), where the instruction opcode 2912 determines the number of source operands. An instruction's last source operand can be an immediate (e.g., hard-coded) value passed with the instruction.

In some examples, the 128-bit instruction format 2910 includes an access/address mode field 2926 specifying, for example, whether direct register addressing mode or indirect register addressing mode is used. When direct register addressing mode is used, the register address of one or more operands is directly provided by bits in the instruction.

In some examples, the 128-bit instruction format 2910 includes an access/address mode field 2926, which specifies an address mode and/or an access mode for the instruction. In some examples the access mode is used to define a data access alignment for the instruction. Some examples support access modes including a 16-byte aligned access mode and a 1-byte aligned access mode, where the byte alignment of the access mode determines the access alignment of the instruction operands. For example, when in a first mode, the instruction may use byte-aligned addressing for source and destination operands and when in a second mode, the instruction may use 16-byte-aligned addressing for all source and destination operands.

In some examples, the address mode portion of the access/address mode field 2926 determines whether the instruction is to use direct or indirect addressing. When direct register addressing mode is used bits in the instruction directly provide the register address of one or more operands. When indirect register addressing mode is used, the register address of one or more operands may be computed based on an address register value and an address immediate field in the instruction.

In some examples instructions are grouped based on opcode 2912 bit-fields to simplify Opcode decode 2940. For an 8-bit opcode, bits 4, 5, and 6 allow the execution unit to determine the type of opcode. The precise opcode grouping shown is merely an example. In some examples, a move and logic opcode group 2942 includes data movement and logic instructions (e.g., move (mov), compare (cmp)). In some examples, move and logic group 2942 shares the five most significant bits (MSB), where move (mov) instructions are in the form of 0000xxxxb and logic instructions are in the form of 0001xxxxb. A flow control instruction group 2944 (e.g., call, jump (jmp)) includes instructions in the form of 0010xxxxb (e.g., 0x20). A miscellaneous instruction group 2946 includes a mix of instructions, including synchronization instructions (e.g., wait, send) in the form of 0011xxxxb (e.g., 0x30). A parallel math instruction group 2948 includes component-wise arithmetic instructions (e.g., add, multiply (mul)) in the form of 0100xxxxb (e.g., 0x40). The parallel math group 2948 performs the arithmetic operations in parallel across data channels. The vector math group 2950 includes arithmetic instructions (e.g., dp4) in the form of 0101xxxxb (e.g., 0x50). The vector math group performs arithmetic such as dot product calculations on vector operands. The illustrated opcode decode 2940, in some examples, can be used to determine which portion of an execution unit will be used to execute a decoded instruction. For example, some instructions may be designated as systolic instructions that will be performed by a systolic array. Other instructions, such as ray-tracing instructions (not shown) can be routed to a ray-tracing core or ray-tracing logic within a slice or partition of execution logic.

### Graphics Pipeline

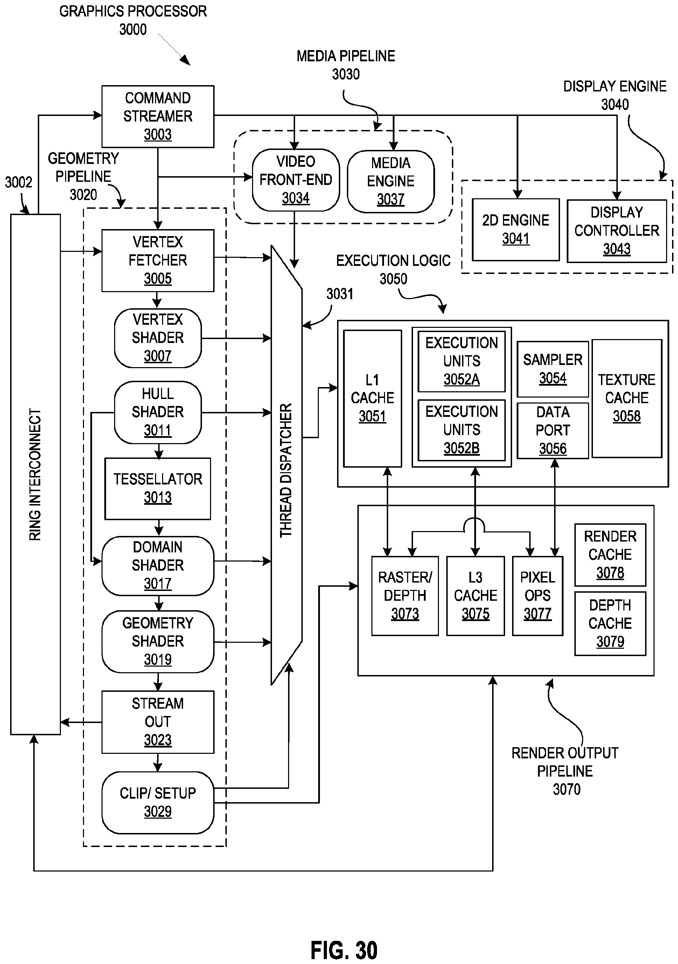

FIG. 30 is a block diagram of another example of a graphics processor 3000. Elements of FIG. 30 having the same reference numbers (or names) as the elements of any other figure herein can operate or function in any manner similar to that described elsewhere herein, but are not limited to such.

In some examples, graphics processor 3000 includes a geometry pipeline 3020, a media pipeline 3030, a display engine 3040, thread execution logic 3050, and a render output pipeline 3070. In some examples, graphics processor 3000 is a graphics processor within a multi-core processing system that includes one or more general-purpose processing cores. The graphics processor is controlled by register writes to one or more control registers (not shown) or via commands issued to graphics processor 3000 via a ring interconnect 3002. In some examples, ring interconnect 3002 couples graphics processor 3000 to other processing components, such as other graphics processors or general-purpose processors. Commands from ring interconnect 3002 are interpreted by a command streamer 3003, which supplies instructions to individual components of the geometry pipeline 3020 or the media pipeline 3030.

In some examples, command streamer 3003 directs the operation of a vertex fetcher 3005 that reads vertex data from memory and executes vertex-processing commands provided by command streamer 3003. In some examples, vertex fetcher 3005 provides vertex data to a vertex shader 3007, which performs coordinate space transformation and lighting operations to each vertex. In some examples, vertex fetcher 3005 and vertex shader 3007 execute vertex-processing instructions by dispatching execution threads to execution units 3052A-3052B via a thread dispatcher 3031.

In some examples, execution units 3052A-3052B are an array of vector processors having an instruction set for performing graphics and media operations. In some examples, execution units 3052A-3052B have an attached L1 cache 3051 that is specific for each array or shared between the arrays. The cache can be configured as a data cache, an instruction cache, or a single cache that is partitioned to contain data and instructions in different partitions.

In some examples, geometry pipeline 3020 includes tessellation components to perform hardware-accelerated tessellation of 3D objects. In some examples, a programmable hull shader 3011 configures the tessellation operations. A programmable domain shader 3017 provides back-end evaluation of tessellation output. A tessellator 3013 operates at the direction of hull shader 3011 and contains special purpose logic to generate a set of detailed geometric objects based on a coarse geometric model that is provided as input to geometry pipeline 3020. In some examples, if tessellation is not used, tessellation components (e.g., hull shader 3011, tessellator 3013, and domain shader 3017) can be bypassed.

In some examples, complete geometric objects can be processed by a geometry shader 3019 via one or more threads dispatched to execution units 3052A-3052B, or can proceed directly to the clipper 3029. In some examples, the geometry shader operates on entire geometric objects, rather than vertices or patches of vertices as in previous stages of the graphics pipeline. If the tessellation is disabled the geometry shader 3019 receives input from the vertex shader 3007. In some examples, geometry shader 3019 is programmable by a geometry shader program to perform geometry tessellation if the tessellation units are disabled.

Before rasterization, a clipper 3029 processes vertex data. The clipper 3029 may be a fixed function clipper or a programmable clipper having clipping and geometry shader functions. In some examples, a rasterizer and depth test component 3073 in the render output pipeline 3070 dispatches pixel shaders to convert the geometric objects into per pixel representations. In some examples, pixel shader logic is included in thread execution logic 3050. In some examples, an application can bypass the rasterizer and depth test component 3073 and access un-rasterized vertex data via a stream out unit 3023.

The graphics processor 3000 has an interconnect bus, interconnect fabric, or some other interconnect mechanism that allows data and message passing amongst the major components of the processor. In some examples, execution units 3052A-3052B and associated logic units (e.g., L1 cache 3051, sampler 3054, texture cache 3058, etc.) interconnect via a data port 3056 to perform memory access and communicate with render output pipeline components of the processor. In some examples, sampler 3054, caches 3051, 3058 and execution units 3052A-3052B each have separate memory access paths. In some examples the texture cache 3058 can also be configured as a sampler cache.

In some examples, render output pipeline 3070 contains a rasterizer and depth test component 3073 that converts vertex-based objects into an associated pixel-based representation. In some examples, the rasterizer logic includes a windower/masker unit to perform fixed function triangle and line rasterization. An associated render cache 3078 and depth cache 3079 are also available in some examples. A pixel operations component 3077 performs pixel-based operations on the data, though in some instances, pixel operations associated with 2D operations (e.g. bit block image transfers with blending) are performed by the 2D engine 3041, or substituted at display time by the display controller 3043 using overlay display planes. In some examples, a shared L3 cache 3075 is available to all graphics components, allowing the sharing of data without the use of main system memory.

In some examples, graphics processor media pipeline 3030 includes a media engine 3037 and a video front-end 3034. In some examples, video front-end 3034 receives pipeline commands from the command streamer 3003. In some examples, media pipeline 3030 includes a separate command streamer. In some examples, video front-end 3034 processes media commands before sending the command to the media engine 3037. In some examples, media engine 3037 includes thread spawning functionality to spawn threads for dispatch to thread execution logic 3050 via thread dispatcher 3031.

In some examples, graphics processor 3000 includes a display engine 3040. In some examples, display engine 3040 is external to processor 3000 and couples with the graphics processor via the ring interconnect 3002, or some other interconnect bus or fabric. In some examples, display engine 3040 includes a 2D engine 3041 and a display controller 3043. In some examples, display engine 3040 contains special purpose logic capable of operating independently of the 3D pipeline. In some examples, display controller 3043 couples with a display device (not shown), which may be a system integrated display device, as in a laptop computer, or an external display device attached via a display device connector.

In some examples, the geometry pipeline 3020 and media pipeline 3030 are configurable to perform operations based on multiple graphics and media programming interfaces and are not specific to any one application programming interface (API). In some examples, driver software for the graphics processor translates API calls that are specific to a particular graphics or media library into commands that can be processed by the graphics processor. In some examples, support is provided for the Open Graphics Library (OpenGL), Open Computing Language (OpenCL), and/or Vulkan graphics and compute API, all from the Khronos Group. In some examples, support may also be provided for the Direct3D library from the Microsoft Corporation. In some examples, a combination of these libraries may be supported. Support may also be provided for the Open Source Computer Vision Library (OpenCV). A future API with a compatible 3D pipeline would also be supported if a mapping can be made from the pipeline of the future API to the pipeline of the graphics processor.

### Graphics Pipeline Programming

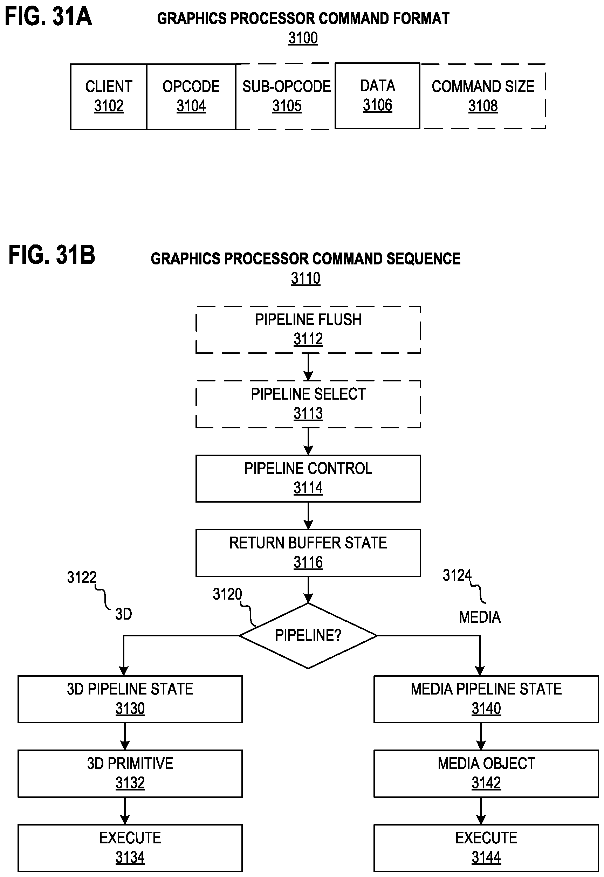

FIG. 31A is a block diagram illustrating a graphics processor command format 3100 according to some examples. FIG. 31B is a block diagram illustrating a graphics processor command sequence 3110 according to an example. The solid lined boxes in FIG. 31A illustrate the components that are generally included in a graphics command while the dashed lines include components that are optional or that are only included in a sub-set of the graphics commands. The exemplary graphics processor command format 3100 of FIG. 31A includes data fields to identify a client 3102, a command operation code (opcode) 3104, and data 3106 for the command. A sub-opcode 3105 and a command size 3108 are also included in some commands.

In some examples, client 3102 specifies the client unit of the graphics device that processes the command data. In some examples, a graphics processor command parser examines the client field of each command to condition the further processing of the command and route the command data to the appropriate client unit. In some examples, the graphics processor client units include a memory interface unit, a render unit, a 2D unit, a 3D unit, and a media unit. Each client unit has a corresponding processing pipeline that processes the commands. Once the command is received by the client unit, the client unit reads the opcode 3104 and, if present, sub-opcode 3105 to determine the operation to perform. The client unit performs the command using information in data field 3106. For some commands, an explicit command size 3108 is expected to specify the size of the command. In some examples, the command parser automatically determines the size of at least some of the commands based on the command opcode. In some examples commands are aligned via multiples of a double word. Other command formats can be used.

The flow diagram in FIG. 31B illustrates an exemplary graphics processor command sequence 3110. In some examples, software or firmware of a data processing system that features an example of a graphics processor uses a version of the command sequence shown to set up, execute, and terminate a set of graphics operations. A sample command sequence is shown and described for purposes of example only as examples are not limited to these specific commands or to this command sequence. Moreover, the commands may be issued as batch of commands in a command sequence, such that the graphics processor will process the sequence of commands in at least partially concurrence.

In some examples, the graphics processor command sequence 3110 may begin with a pipeline flush command 3112 to cause any active graphics pipeline to complete the currently pending commands for the pipeline. In some examples, the 3D pipeline 3122 and the media pipeline 3124 do not operate concurrently. The pipeline flush is performed to cause the active graphics pipeline to complete any pending commands. In response to a pipeline flush, the command parser for the graphics processor will pause command processing until the active drawing engines complete pending operations and the relevant read caches are invalidated. Optionally, any data in the render cache that is marked 'dirty' can be flushed to memory. In some examples, pipeline flush command 3112 can be used for pipeline synchronization or before placing the graphics processor into a low power state.

In some examples, a pipeline select command 3113 is used when a command sequence requires the graphics processor to explicitly switch between pipelines. In some examples, a pipeline select command 3113 is required only once within an execution context before issuing pipeline commands unless the context is to issue commands for both pipelines. In some examples, a pipeline flush command 3112 is required immediately before a pipeline switch via the pipeline select command 3113.

In some examples, a pipeline control command 3114 configures a graphics pipeline for operation and is used to program the 3D pipeline 3122 and the media pipeline 3124. In some examples, pipeline control command 3114 configures the pipeline state for the active pipeline. In some examples, the pipeline control command 3114 is used for pipeline synchronization and to clear data from one or more cache memories within the active pipeline before processing a batch of commands.

In some examples, return buffer state commands 3116 are used to configure a set of return buffers for the respective pipelines to write data. Some pipeline operations require the allocation, selection, or configuration of one or more return buffers into which the operations write intermediate data during processing. In some examples, the graphics processor also uses one or more return buffers to store output data and to perform cross thread communication. In some examples, the return buffer state 3116 includes selecting the size and number of return buffers to use for a set of pipeline operations.

The remaining commands in the command sequence differ based on the active pipeline for operations. Based on a pipeline determination 3120, the command sequence is tailored to the 3D pipeline 3122 beginning with the 3D pipeline state 3130 or the media pipeline 3124 beginning at the media pipeline state 3140.

The commands to configure the 3D pipeline state 3130 include 3D state setting commands for vertex buffer state, vertex element state, constant color state, depth buffer state, and other state variables that are to be configured before 3D primitive commands are processed. The values of these commands are determined at least in part based on the particular 3D API in use. In some examples, 3D pipeline state 3130 commands are also able to selectively disable or bypass certain pipeline elements if those elements will not be used.

In some examples, 3D primitive 3132 command is used to submit 3D primitives to be processed by the 3D pipeline. Commands and associated parameters that are passed to the graphics processor via the 3D primitive 3132 command are forwarded to the vertex fetch function in the graphics pipeline. The vertex fetch function uses the 3D primitive 3132 command data to generate vertex data structures. The vertex data structures are stored in one or more return buffers. In some examples, 3D primitive 3132 command is used to perform vertex operations on 3D primitives via vertex shaders. To process vertex shaders, 3D pipeline 3122 dispatches shader execution threads to graphics processor execution units.

In some examples, 3D pipeline 3122 is triggered via an execute 3134 command or event. In some examples, a register write triggers command execution. In some examples execution is triggered via a 'go' or 'kick' command in the command sequence. In some examples, command execution is triggered using a pipeline synchronization command to flush the command sequence through the graphics pipeline. The 3D pipeline will perform geometry processing for the 3D primitives. Once operations are complete, the resulting geometric objects are rasterized and the pixel engine colors the resulting pixels. Additional commands to control pixel shading and pixel back end operations may also be included for those operations.

In some examples, the graphics processor command sequence 3110 follows the media pipeline 3124 path when performing media operations. In general, the specific use and manner of programming for the media pipeline 3124 depends on the media or compute operations to be performed. Specific media decode operations may be offloaded to the media pipeline during media decode. In some examples, the media pipeline can also be bypassed and media decode can be performed in whole or in part using resources provided by one or more general-purpose processing cores. In some examples, the media pipeline also includes elements for general-purpose graphics processor unit (GPGPU) operations, where the graphics processor is used to perform SIMD vector operations using computational shader programs that are not explicitly related to the rendering of graphics primitives.

In some examples, media pipeline 3124 is configured in a similar manner as the 3D pipeline 3122. A set of commands to configure the media pipeline state 3140 are dispatched or placed into a command queue before the media object commands 3142. In some examples, commands for the media pipeline state 3140 include data to configure the media pipeline elements that will be used to process the media objects. This includes data to configure the video decode and video encode logic within the media pipeline, such as encode or decode format. In some examples, commands for the media pipeline state 3140 also support the use of one or more pointers to "indirect" state elements that contain a batch of state settings.

In some examples, media object commands 3142 supply pointers to media objects for processing by the media pipeline. The media objects include memory buffers containing video data to be processed. In some examples, all media pipeline states must be valid before issuing a media object command 3142. Once the pipeline state is configured and media object commands 3142 are queued, the media pipeline 3124 is triggered via an execute command 3144 or an equivalent execute event (e.g., register write). Output from media pipeline 3124 may then be post processed by operations provided by the 3D pipeline 3122 or the media pipeline 3124. In some examples, GPGPU operations are configured and executed in a similar manner as media operations.

Program code may be applied to input information to perform the functions described herein and generate output information. The output information may be applied to one or more output devices, in known fashion. For purposes of this application, a processing system includes any system that has a processor, such as, for example, a digital signal processor (DSP), a microcontroller, an application specific integrated circuit (ASIC), a field programmable gate array (FPGA), a microprocessor, or any combination thereof.

The program code may be implemented in a high-level procedural or object-oriented programming language to communicate with a processing system. The program code may also be implemented in assembly or machine language, if desired. In fact, the mechanisms described herein are not limited in scope to any particular programming language. In any case, the language may be a compiled or interpreted language.

Examples of the mechanisms disclosed herein may be implemented in hardware, software, firmware, or a combination of such implementation approaches. Examples may be implemented as computer programs or program code executing on programmable systems comprising at least one processor, a storage system (including volatile and non-volatile memory and/or storage elements), at least one input device, and at least one output device.

Such machine-readable storage media may include, without limitation, non-transitory, tangible arrangements of articles manufactured or formed by a machine or device, including storage media such as hard disks, any other type of disk including floppy disks, optical disks, compact disk read-only memories (CD-ROMs), compact disk rewritables (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), phase change memory (PCM), magnetic or optical cards, or any other type of media suitable for storing electronic instructions.

Accordingly, examples also include non-transitory, tangible machine-readable media containing instructions or containing design data, such as Hardware Description Language (HDL), which defines structures, circuits, apparatuses, processors and/or system features described herein. Such examples may also be referred to as program products.

### Emulation (including binary translation, code morphing, etc.).

In some cases, an instruction converter may be used to convert an instruction from a source instruction set architecture to a target instruction set architecture. For example, the instruction converter may translate (e.g., using static binary translation, dynamic binary translation including dynamic compilation), morph, emulate, or otherwise convert an instruction to one or more other instructions to be processed by the core. The instruction converter may be implemented in software, hardware, firmware, or a combination thereof. The instruction converter may be on processor, off processor, or part on and part off processor.

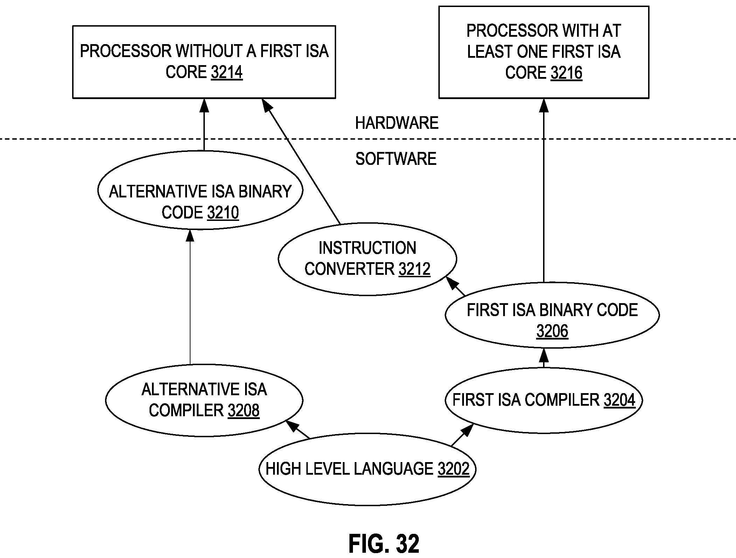

FIG. 32 is a block diagram illustrating the use of a software instruction converter to convert binary instructions in a source ISA to binary instructions in a target ISA according to examples. In the illustrated example, the instruction converter is a software instruction converter, although alternatively the instruction converter may be implemented in software, firmware, hardware, or various combinations thereof. FIG. 32 shows a program in a high-level language 3202 may be compiled using a first ISA compiler 3204 to generate first ISA binary code 3206 that may be natively executed by a processor with at least one first ISA core 3216. The processor with at least one first ISA core 3216 represents any processor that can perform substantially the same functions as an Intel^{®} processor with at least one first ISA core by compatibly executing or otherwise processing (1) a substantial portion of the first ISA or (2) object code versions of applications or other software targeted to run on an Intel processor with at least one first ISA core, in order to achieve substantially the same result as a processor with at least one first ISA core. The first ISA compiler 3204 represents a compiler that is operable to generate first ISA binary code 3206 (e.g., object code) that can, with or without additional linkage processing, be executed on the processor with at least one first ISA core 3216. Similarly, FIG. 32 shows the program in the high-level language 3202 may be compiled using an alternative ISA compiler 3208 to generate alternative ISA binary code 3210 that may be natively executed by a processor without a first ISA core 3214. The instruction converter 3212 is used to convert the first ISA binary code 3206 into code that may be natively executed by the processor without a first ISA core 3214. This converted code is not necessarily to be the same as the alternative ISA binary code 3210; however, the converted code will accomplish the general operation and be made up of instructions from the alternative ISA. Thus, the instruction converter 3212 represents software, firmware, hardware, or a combination thereof that, through emulation, simulation, or any other process, allows a processor or other electronic device that does not have a first ISA processor or core to execute the first ISA binary code 3206.

### IP Core Implementations

One or more aspects of at least some examples may be implemented by representative code stored on a machine-readable medium which represents and/or defines logic within an integrated circuit such as a processor. For example, the machine-readable medium may include instructions which represent various logic within the processor. When read by a machine, the instructions may cause the machine to fabricate the logic to perform the techniques described herein. Such representations, known as "IP cores," are reusable units of logic for an integrated circuit that may be stored on a tangible, machine-readable medium as a hardware model that describes the structure of the integrated circuit. The hardware model may be supplied to various customers or manufacturing facilities, which load the hardware model on fabrication machines that manufacture the integrated circuit. The integrated circuit may be fabricated such that the circuit performs operations described in association with any of the examples described herein.

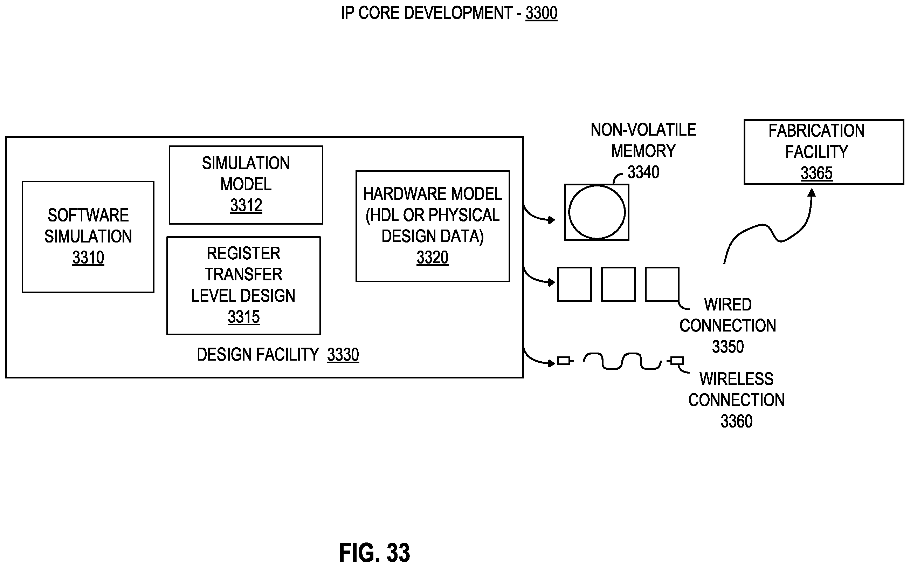

FIG. 33 is a block diagram illustrating an IP core development system 3300 that may be used to manufacture an integrated circuit to perform operations according to some examples. The IP core development system 3300 may be used to generate modular, re-usable designs that can be incorporated into a larger design or used to construct an entire integrated circuit (e.g., an SOC integrated circuit). A design facility 3330 can generate a software simulation 3310 of an IP core design in a high-level programming language (e.g., C/C++). The software simulation 3310 can be used to design, test, and verify the behavior of the IP core using a simulation model 3312. The simulation model 3312 may include functional, behavioral, and/or timing simulations. A register transfer level (RTL) design 3315 can then be created or synthesized from the simulation model 3312. The RTL design 3315 is an abstraction of the behavior of the integrated circuit that models the flow of digital signals between hardware registers, including the associated logic performed using the modeled digital signals. In addition to an RTL design 3315, lower-level designs at the logic level or transistor level may also be created, designed, or synthesized. Thus, the particular details of the initial design and simulation may vary.

The RTL design 3315 or equivalent may be further synthesized by the design facility into a hardware model 3320, which may be in a hardware description language (HDL), or some other representation of physical design data. The HDL may be further simulated or tested to verify the IP core design. The IP core design can be stored for delivery to a 3^{rd} party fabrication facility 3365 using non-volatile memory 3340 (e.g., hard disk, flash memory, or any non-volatile storage medium). Alternatively, the IP core design may be transmitted (e.g., via the Internet) over a wired connection 3350 or wireless connection 3360. The fabrication facility 3365 may then fabricate an integrated circuit that is based at least in part on the IP core design. The fabricated integrated circuit can be configured to perform operations in accordance with at least some examples described herein.

References to "some examples," "an example," etc., indicate that the example described may include a particular feature, structure, or characteristic, but every example may not necessarily include the particular feature, structure, or characteristic. Moreover, such phrases are not necessarily referring to the same example. Further, when a particular feature, structure, or characteristic is described in connection with an example, it is submitted that it is within the knowledge of one skilled in the art to affect such feature, structure, or characteristic in connection with other examples whether or not explicitly described.

Moreover, in the various examples described above, unless specifically noted otherwise, disjunctive language such as the phrase "at least one of A, B, or C" or "A, B, and/or C" is intended to be understood to mean either A, B, or C, or any combination thereof (i.e. A and B, A and C, B and C, and A, B and C).

The specification and drawings are, accordingly, to be regarded in an illustrative rather than a restrictive sense. It will, however, be evident that various modifications and changes may be made thereunto without departing from the broader spirit and scope of the disclosure as set forth in the claims.

## Claims

1. An apparatus comprising:
an execution circuitry to generate a memory access request for a virtual memory address;
a first level translation lookaside buffer to store virtual address to physical address mappings;
a victim translation lookaside buffer to store a virtual address to physical address mapping evicted from the first level translation lookaside buffer;
a second level translation lookaside buffer; and
a cache coherency circuitry to search the first level translation lookaside buffer and the victim translation lookaside buffer for a corresponding physical address mapped to the virtual memory address for the memory access request, and for a miss in the first level translation lookaside buffer and the victim translation lookaside buffer, search the second level translation lookaside buffer for the corresponding physical address mapped to the virtual memory address for the memory access request, and for a hit in the victim translation lookaside buffer, provide the corresponding physical address mapped to the virtual memory address for the memory access request.

2. The apparatus of claim 1, wherein the cache coherency circuitry is to simultaneously search the first level translation lookaside buffer and the victim translation lookaside buffer for the corresponding physical address mapped to the virtual memory address for the memory access request.

3. The apparatus of any one of claims 1-2, wherein the cache coherency circuitry is to, for the miss in the first level translation lookaside buffer and the victim translation lookaside buffer:
cause a page walk to determine the corresponding physical address mapped to the virtual memory address for the memory access request;
determine a victim entry in the first level translation lookaside buffer;
fill the victim entry into the victim translation lookaside buffer; and
replace the victim entry in the first level translation lookaside buffer with an entry from the page walk for the corresponding physical address mapped to the virtual memory address for the memory access request.

4. The apparatus of claim 3, wherein the victim entry in the first level translation lookaside buffer comprises a victim translation lookaside buffer hint bit, and the cache coherency circuitry is to, in response to the victim translation lookaside buffer hint bit being set, fill the victim entry into the victim translation lookaside buffer, and in response to the victim translation lookaside buffer hint bit not being set, not fill the victim entry into the victim translation lookaside buffer.

5. The apparatus of claim 4, further comprising a decoder circuitry to decode an instruction into a decoded instruction, wherein the execution circuitry is to execute the decoded instruction to set the victim translation lookaside buffer hint bit in an entry in the first level translation lookaside buffer before a determination that the entry is the victim entry in the first level translation lookaside buffer.

6. The apparatus of any one of claims 1-5, wherein a set indexer for the first level translation lookaside buffer is different than a set indexer for the victim translation lookaside buffer.

7. The apparatus of any one of claims 1-6, wherein the first level translation lookaside buffer has more entries than the victim translation lookaside buffer.

8. A method comprising:
generating, by an execution circuitry, a memory access request for a virtual memory address of a memory;
storing virtual address to physical address mappings in a first level translation lookaside buffer;
storing, in a victim translation lookaside buffer, a virtual address to physical address mapping evicted from the first level translation lookaside buffer; and
searching, by a cache coherency circuitry, the first level translation lookaside buffer and the victim translation lookaside buffer for a corresponding physical address mapped to the virtual memory address for the memory access request, and for a miss in the first level translation lookaside buffer and the victim translation lookaside buffer, searching a second level translation lookaside buffer for the corresponding physical address mapped to the virtual memory address for the memory access request, and for a hit in the victim translation lookaside buffer, providing the corresponding physical address mapped to the virtual memory address for the memory access request.

9. The method of claim 8, wherein the searching is simultaneously searching the first level translation lookaside buffer and the victim translation lookaside buffer for the corresponding physical address mapped to the virtual memory address for the memory access request.

10. The method of any one of claims 8-9, further comprising, in response to the miss in the first level translation lookaside buffer and the victim translation lookaside buffer:
performing a page walk to determine the corresponding physical address mapped to the virtual memory address for the memory access request;
determining a victim entry in the first level translation lookaside buffer;
filling the victim entry into the victim translation lookaside buffer; and
replacing the victim entry in the first level translation lookaside buffer with an entry from the page walk for the corresponding physical address mapped to the virtual memory address for the memory access request.

11. The method of claim 10, wherein the victim entry in the first level translation lookaside buffer comprises a victim translation lookaside buffer hint bit, and in response to the victim translation lookaside buffer hint bit being set, filling the victim entry into the victim translation lookaside buffer, and in response to the victim translation lookaside buffer hint bit not being set, not filling the victim entry into the victim translation lookaside buffer.

12. The method of claim 11, further comprising:
decoding, by decoder circuitry, an instruction into a decoded instruction; and
executing, by the execution circuitry, the decoded instruction to set the victim translation lookaside buffer hint bit in an entry in the first level translation lookaside buffer before a determination that the entry is the victim entry in the first level translation lookaside buffer.

13. The method of any one of claims 8-12, wherein a set indexer for the first level translation lookaside buffer is different than a set indexer for the victim translation lookaside buffer.

14. The method of any one of claims 8-13, wherein the first level translation lookaside buffer has more entries than the victim translation lookaside buffer.
